# EUROPÄISCHE PATENTSCHRIFT

(11) **EP 2 558 362 B1**
(45) Veröffentlichungstag und Bekanntmachung des Hinweises auf die Patenterteilung: **25.07.2018**
(21) Anmeldenummer: 11715425.2
(22) Anmeldetag: 12.04.2011
(51) Int. Cl.: B64C 3/26, B64C 21/02, B64C 21/06

(54) **PROFILPLATTENABSCHNITT ZUR VERWENDUNG ALS AUSSENWANDUNG EINES STRÖMUNGSKÖRPERS, SOWIE STRÖMUNGSKÖRPER-BAUTEIL MIT EINER FLUID-ABSAUGVORRICHTUNG**
PROFILE-PLATE PORTION FOR USE AS AN OUTER WALL OF A FLOW BODY, AND FLOW-BODY COMPONENT WITH A SUCTION-EXTRACTION DEVICE FOR FLUID
SECTION DE PLAQUE PROFILÉE À EMPLOYER EN TANT QUE PAROI EXTÉRIEUR D'UN CORPS AÉRODYNAMIQUE, ET ÉLÉMENT STRUCTURAL DE CORPS AÉRODYNAMIQUE COMPRENANT UN DISPOSITIF D'ASPIRATION DE FLUIDE

(30) Priorität: 12.04.2010 US 323055 P; 12.04.2010 DE 102010014639; 12.04.2010 US 323034 P; 12.04.2010 DE 102010014640; 12.04.2010 US 323010 P; 12.04.2010 DE 102010014641
(43) Veröffentlichungstag der Anmeldung: 20.02.2013
(73) Patentinhaber: Airbus Operations GmbH, 21129 Hamburg (DE)
(72) Erfinder: GERBER, Martin, 28357 Bremen (DE); SYASSEN, Freerk, 26936 Stadland (DE)
(74) Vertreter: Bird & Bird LLP
(86) Internationale Anmeldenummer: PCT/EP2011/001827
(87) Internationale Veröffentlichungsnummer: WO 2011/128069

(56) Entgegenhaltungen:
- WO-A1-92/21560
- GB-A- 718 421
- GB-A- 2 324 351
- US-A- 3 213 527
- US-A- 5 366 177
- US-A- 5 398 410
- US-A- 5 806 796
- US-A1- 2009 210 103
- US-B2- 7 048 230

## Beschreibung

Diese Patentanmeldung beansprucht den Anmeldetag der deutschen Patentanmeldung DE 10 2010 014 641.2, der United States-Provisional-Patentanmeldung 61/323 010, der deutschen Patentanmeldung DE 10 2010 014 640.4, der United States-Provisional-Patentanmeldung 61/323 034, der deutschen Patentanmeldung DE 10 2010 014 639.0, der United States-Provisional-Patentanmeldung 61/323 055. Die voranstehend genannten Patentanmeldungen sind alle am 12.04.2010 eingereicht worden.

Die Erfindung betrifft einen Profilplattenabschnitt zur Verwendung als Außenwandung eines Strömungskörpers, sowie ein Strömungskörper-Bauteil mit einer Fluid-Absaugvorrichtung.

Aus der Aerodynamik ist bekannt, dass eine laminare Umströmung von Trag- und Leitflächen den höchstmöglichen Auftrieb bei gleichzeitig geringstem Widerstand gegen die Anströmrichtung liefert. Häufig ist es aufgrund der gegebenen Profilform jedoch nicht möglich, für alle auftretenden Anströmbedingungen eine solche laminare Strömung zu gewährleisten. Selbst bei konstanten Anströmbedingungen kann sich die Strömung an Unstetigkeiten des Profils ablösen und turbulent werden mit der Folge verminderten Auftriebs und erhöhten Profilwiderstandes.

Wie weiterhin aus der Aerodynamik bekannt ist, kann durch kontinuierliches Absaugen der turbulenten Schicht eine weitgehende Laminarisierung der Strömung erreicht werden. Da unter Reiseflugbedingungen eine Widerstandsverminderung zugleich auch zu einer erheblichen Treibstoffersparnis führt, lassen sich durch eine Strömungslaminarisierung beträchtliche wirtschaftliche Vorteile erzielen. Deshalb wurde bereits versucht, durch das Anbringen von Absaugöffnungen im Tragflügel zu einer solchen Strömungslaminarisierung zu gelangen. In diesem Zusammenhang stellt es eine bereits bekannte Maßnahme dar, auf der Oberfläche eines Tragflügels in Spannweitenrichtung verlaufende schlitzförmige Absaugöffnungen oder eine Mikroperforation vorzusehen. Sofern derartige Hohlbauteile durch einen als superplastische Umformung bezeichneten Fertigungsprozeß dahergestellt werden, bei dem sie mittels Innendruckbeaufschlagung in eine Negativform expandiert werden, muss die Perforation der Oberflächenbehäufung nach dem Umformvorgang vorgenommen werden, da ansonsten nicht der für den Umformvorgang erforderliche Innendruck im Bauteil erzeugt werden kann. Eine solche nachträgliche Perforierung ist jedoch mit einem erheblichem Arbeits- und Kostenaufwand verbunden.

Nachteilig bei den bekannten Hohlraumprofilen ist weiter, dass Löcher in dem oberen Deckblech notwendig sind, welche als Perforation ausgeführt sind und der Absaugung von Luft zur Strömungslaminarisierung dienen. Durch diese Perforation mit einer Bohrungsgröße von 30 bis 100 µm wird Luft abgesaugt und turbulente Strömung damit beruhigt. Jedoch ist die Herstellung der Perforation sehr aufwendig, insbesondere wenn relativ große Luftmengen und/oder relativ große Flächen für die Strömungslaminarisierung in Frage kommen. Die Perforation wird bei bekannten Verfahren in das obere Deckblech mittels Mikroperforation, beispielsweise mittels Lasertechnik gefertigt. Je nach Technik und geforderter Perforationsqualität sind dabei Perforationsfrequenzen von 100 bis 300Hz möglich. Setzt man ideale Strömungslaminarisierung bei einem Flügel, einem Leitwerk, einer Triebwerksgondel oder einer Stellklappe eines Verkehrsflugzeuges als Grundlage voraus, so sind üblicher Weise ca. 4 000 000 Löcher pro m² notwendig. Damit ergibt sich bei mittlerer Qualität für eine Produktionszeit von 4,45 Stunden für 4 Mio. Löcher, also von ca. 4 ½ Stunden pro Quadratmeter. Um die notwendige Perforation für beide Höhenleitwerke eines Verkehrsflugzeuges mit jeweils 7 m² zu fertigen sind demnach mehr als zwei Tage notwendig.

Ein weiterer Nachteil bei der Verwendung bekannter Verfahren zur Erzeugung der Perforation sind entstehende Grate an den Löchern und/oder Oberflächenbeeinträchtigungen durch die Lasertechnik. An solchen Oberflächenbeeinträchtigungen oder Graten besteht die Gefahr der Luftverwirbelungen und damit einer negativen Beeinflussung der Strömung. Die Strömung wird also durch die Grate oder Oberflächenbeeinträchtigungen wieder turbulenter. Die Fertigungstechnik würde also dem eigentlichen Ziel der Strömungslaminarisierung wieder entgegenwirken und diese zumindest teilweise Aufheben. Will man diesen Nachteil nicht in Kauf nehmen, so muss an die Fertigung der Perforation ein weiterer, sehr aufwendiger Fertigungsschritt des Entgratens, zum Beispiel durch chemisches Ätzen anschließen.

Die GB 718,421 A beschreibt einen Strömungskörper in Form eines Flugzeugflügels mit einer inneren Tragstruktur aus Holmen und Rippen, die von einer gezahnten Schicht umgeben ist. Die gezahnte Schicht ist von einer Schichtanordnung umgeben, die aus einer äußeren und einer inneren perforierten Schicht gebildet wird. Kanalförmige Tragrippen stützen die Schichtanordnung ab. Zwischen den kanalförmigen Tragrippen verlaufen die äußere und die innere Schicht in einem Abstand zueinander, wobei der Zwischenraum zwischen der äußeren und der inneren Schicht mit einem körnigen Material gefüllt ist. Aufgabe der vorliegenden Erfindung ist es, die oben beschriebenen Nachteile bekannter Verfahren zu lösen.

Die voranstehende Aufgabe wird durch die Merkmale der unabhängigen Ansprüche gelöst. Weitere Ausführungsformen sind in den auf diese rückkbezogenen Unteransprüchen angegeben.

Nach einem Aspekt der Erfindung ist ein Profilplattenabschnitt gemäß dem Anspruch 1 vorgesehen. Nach einer Ausführungsform des erfindungsgemäßen Profilplattenabschnitts ist vorgesehen, dass die offenporigen Metallschaumschicht-Körper an den jeweiligen Stütz-Trägern, zwischen denen jeweils ein Metallschaumschicht-Körper gelegen ist, flächig anliegen.

Nach einer Ausführungsform des erfindungsgemäßen Profilplattenabschnitts ist vorgesehen, dass die Ausnehmungen im Profilschnitt gesehen zumindest teilweise eine sphärische Form haben.

Nach einer Ausführungsform des erfindungsgemäßen Profilplattenabschnitts ist vorgesehen, dass die Ausnehmungen zur Abstützung des porösen Metallschaumkerns mit einer Verstärkungsschicht versehen sind, die für Fluid permeabel ist.

Nach einer Ausführungsform des erfindungsgemäßen Profilplattenabschnitts ist vorgesehen, dass die Versteifungsvorrichtung mit dem ersten Profilplattenpaneel und dem zweiten Profilplattenpaneel verbundene Stützstege oder Versteifungsstege aufweist, die das Hohlkammerprofil in seiner Profilplatten-Dickenrichtung gegeneinander abstützen, und Fluidkammern umgrenzen, durch die das das erste Profilplattenpaneel strömende Fluid zum zweiten Profilplattenpaneel fließen kann.

Nach einer Ausführungsform des erfindungsgemäßen Profilplattenabschnitts ist vorgesehen, dass sich wenigstens abschnittsweise Stützstege quer zu einer Längsrichtung des Profilplattenabschnitt entlang zueinander erstrecken, die in einer Querschnittsebene, die sich entlang der Längserstreckung des Profilplattenabschnitt erstreckt, einen gekrümmten Verlauf haben oder aus winklig zueinander verlaufenden und aneinander anschließenden Wandungsabschnitten gebildet ist.

Nach einer Ausführungsform des erfindungsgemäßen Profilplattenabschnitts ist vorgesehen, dass die Stützstege Wandungsabschnitte sind, die zwischen diesen und dem ersten Profilplattenpaneel und dem zweiten Profilplattenpaneel ausgebildete Profilplattenkammern bilden.

Nach einer Ausführungsform des erfindungsgemäßen Profilplattenabschnitts ist vorgesehen, dass das erste Profilplattenpaneel Mikro-Perforierungen aufweist, deren Verteilungsdichte und/oder Größe im Bereich innerhalb jeweils einer Profilplattenkammer in einer Längsrichtung des Profilplattenabschnitts zunimmt.

Nach einer Ausführungsform des erfindungsgemäßen Profilplattenabschnitts ist vorgesehen, dass die Wandungsabschnitte in einer Querschnittsebene, die sich entlang der Längserstreckung des Profilplattenabschnitt erstreckt, eine mehreckige und insbesondere wabenförmige Querschnittsfläche der Profilplattenkammern bildet. Dabei können die sich insbesondere in der Dickenrichtung und der Längsrichtung aufgespannten Ebene ergebenden Querschnittsprofile der Versteifungsstege eine Fachwerkstruktur bilden.

Bei der Ausführungsform des erfindungsgemäßen Profilplattenabschnitts mit Versteifungsstegen kann vorgesehen sein, dass wenigstens ein Teil der Stützstege oder Versteifungsstege Öffnungen aufweisen, so dass Fluid zwischen den von den Versteifungsstegen umgrenzten Fluidkammern fließen kann.

Nach einer Ausführungsform des erfindungsgemäßen Profilplattenabschnitts ist vorgesehen, dass das erste Profilplattenpaneel aus einer Geflechtanordnung und insbesondere einer Metallgeflechtanordnung gebildet ist.

Nach einer Ausführungsform des erfindungsgemäßen Profilplattenabschnitts ist vorgesehen, dass das erste Profilplattenpaneel Öffnungen in Form von Perforationen aufweist, die in der Profilplatten-Längsrichtung und der Profilplatten-Querrichtung über die Erstreckung das erste Profilplattenpaneel verteilt sind.

Nach einer Ausführungsform des erfindungsgemäßen Profilplattenabschnitts ist vorgesehen, dass das erste Profilplattenpaneel Öffnungen insbesondere in Form von Schlitzen aufweist, die in der Profilplatten-Längsrichtung und der Profilplatten-Querrichtung über die Erstreckung das erste Profilplattenpaneel verteilt sind.

Nach einer Ausführungsform des erfindungsgemäßen Profilplattenabschnitts ist vorgesehen, dass die Größe der Öffnungen in Richtung der Profilplatten-Längsrichtung innerhalb des Bereichs wenigstens eines Teils der Fluidkammern zunimmt.

Nach einem weiteren nicht beanspruchten Aspekt ist ein Verfahren zur Herstellung eines Profilplattenabschnitts zur Verwendung als Außenwandung eines Strömungskörpers vorgesehen, das aus einem ersten Profilplattenpaneel und einem zweiten Profilplattenpaneel und diese gegeneinander abstützenden Stegplatten gebildet ist, wobei zumindest das erste Profilplattenpaneel für Fluid durchlässig ausgeführt ist, wobei der Profilplattenabschnitt durch Innendruck- und Temperatur-Beaufschlagung von einem Ausgangszustand, in dem das erste Profilplattenpaneel, das zweite Profilplattenpaneel und zwischen diesen die Versteifungsstege flächig aufeinander liegen, zwischen zwei durch die Innendruck-Beaufschlagung auseinander bewegten Werkzeugteilen in seine Endform expandiert wird, und
wobei das an dem ersten Profilplattenpaneel anliegende zweite Werkzeugteil eine Luftabfuhrvorrichtung aufweist, mit der bei dem zur Expansion des Abstands der Profilplattenpaneele mit den Werkzeugteilen im Werkzeug aufgebauten Innendruck ein größerer Luftdurchsatz bei dem Abführen von Luft durch das zweite Werkzeugteil aus dem Bereich zwischen den beiden Werkzeugteilen bereitgestellt wird als der Luftdurchsatz der durch das erste Profilplattenpaneel strömende Luft.

Nach einer Ausführungsform des Verfahrens ist vorgesehen, dass durch Diffusionsschweißen ein Verbinden von Randbereichen von Versteifungsstegen erfolgt, während die Versteifungsstege flach zwischen einem ersten Profilplattenpaneel und einem zweiten Profilplattenpaneel gelegen sind.

Nach einer Ausführungsform des Verfahrens ist vorgesehen, dass das erste Seitenwandungs-Profilplattenpaneel aus einer Geflecht-Anordnung insbesondere aus Metall gebildet ist.

Nach einer Ausführungsform des Verfahrens ist vorgesehen, dass das erste Seitenwandungs-Profilplattenpaneel eine perforierte Platte ist.

Nach einer Ausführungsform des Verfahrens ist vorgesehen, dass die Versteifungsstege einteilig gebildet sind.

Nach einer Ausführungsform des Verfahrens ist vorgesehen, dass die Versteifungsstege zweiteilig jeweils aus zwei Stegteilen gebildet sind, wobei die Stegteile an jeweils aneinander anliegenden Randbereichen miteinander verschweißt sind.

Nach einem weiteren Aspekt der Erfindung ist ein Strömungskörper-Bauteil vorgesehen, das aufweist:
▪ ein für Fluid durchlässiger Vorderteil-Profilplattenabschnitt,
▪ zwei sich jeweils von den Profilenden des Strömungskörper-Vorderteils aus in der Strömungskörper-Tiefenrichtung erstreckende Seitenwandungs-Profilplattenabschnitte, die entgegen gesetzt zueinander gekrümmt sind,
wobei die Seitenwandungs-Profilplattenabschnitte wenigstens abschnittsweise durchlässig für Fluid gebildet sind oder
wobei ein äußeres Profilplattenpaneel der Seitenwandungs-Profilplattenabschnitte (120) durchlässig für Fluid gebildet ist und ein inneres Profilplattenpaneel der Seitenwandungs-Profilplattenabschnitte inneren Schicht nicht durchlässig für Fluid gebildet und die Seitenwandungs-Profilplattenabschnitte derart ausgeführt sind, dass das aufgrund der Anströmung des Strömungskörper-Bauteils in die Seitenwandungs-Profilplattenabschnitte eingedrungende Fluid innerhalb des jeweiligen Seitenwandungs-Profilplattenabschnitts und entlang desselben strömen kann, wobei die Seitenwandungs-Profilplattenabschnitte nach einer Ausführungsform der Erfindung ausgeführt ist.

Nach einer Ausführungsform des erfindungsgemäßen Strömungskörper-Bauteils ist vorgesehen, dass das Strömungskörper-Bauteil eine Fluid-Absaugvorrichtung aufweist, die einen im Inneren des Strömungskörpers ausgebildeten Strömungskanal, der abschnittsweise von dem zweiten für Fluid durchlässigen Vorderteilpaneel begrenzt wird, und eine an den Strömungskanal angeschlossene Pumpe zum Absaugen von durch das Strömungskörper-Vorderteil strömenden Fluid durch den Strömungskanal aufweist.

Nach einer Ausführungsform des erfindungsgemäßen Strömungskörper-Bauteils ist vorgesehen, dass das Strömungskörper-Bauteil einen im Inneren des Strömungskörpers ausgebildeten Strömungskanal mit einer Öffnung in das Innere des Strömungskörper-Bauteils und/oder einer Ausmündung aus dem Inneren des Strömungskörper-Bauteils heraus aufweist und der derart im Strömungskörper-Bauteil geführt ist, dass bei einer bestimmungsgemäßen Anströmung des Strömungskörper-Bauteil ein Absaugen von durch das Strömungskörper-Vorderteil strömenden Fluid durch den Strömungskanal erfolgt.

Nach einer Ausführungsform des erfindungsgemäßen Strömungskörper-Bauteils ist vorgesehen, dass der Vorderteil-Profilplattenabschnitt aus einem ersten für Fluid durchlässigen Vorderteil-Profilplattenpaneel, einem zweiten für Fluid durchlässigen Vorderteil-Profilplattenpaneel und einer Vorderteil-Versteifungsvorrichtung zur Abstützung der Vorderteil-Profilplattenpaneele gebildet ist, so dass Fluid durch den Vorderteil-Profilplattenabschnitt strömen kann.

Nach einer Ausführungsform des erfindungsgemäßen Strömungskörper-Bauteils ist vorgesehen,
▪ dass das zweite Seitenwandungs-Profilplattenpaneel für Fluid durchlässig ausgeführt ist,
▪ dass der Strömungskörper eine sich in der Strömungskörper-Längsrichtung erstreckende Kanalwandung aufweist, die mit Verbindungsabschnitten von zwei einander gegenüberliegenden Randbereichen der Profilplattenabschnitte luftdicht verbunden ist oder die mit den einander gegenüberliegenden Endabschnitten der Profilplattenabschnitte luftdicht verbunden ist, die den entgegen gesetzt zu den Anschlussabschnitten der Profilplattenabschnitte an dem jeweiligen Ende des Strömungskörper-Vorderteils gelegen sind, so dass der Strömungskanal zwischen dem Strömungskörper-Vorderteil, den Profilplattenabschnitten und der Kanalwandung ausgebildet ist.

Nach einer Ausführungsform des erfindungsgemäßen Strömungskörper-Bauteils ist vorgesehen,
▪ dass der Strömungskörper eine sich in der Strömungskörper-Längsrichtung erstreckende Kanalwandung aufweist, die mit den einander gegenüberliegenden Endabschnitten der Profilplattenabschnitte luftdicht verbunden ist, die an den Anschlussabschnitten der Profilplattenabschnitte an dem jeweiligen Ende des Strömungskörper-Vorderteils gelegen sind, so dass der Strömungskanal zwischen dem Strömungskörper-Vorderteil, den Profilplattenabschnitten und der Kanalwandung ausgebildet ist,
▪ dass das zweite Seitenwandungs-Profilplattenpaneel für Fluid dicht ausgeführt ist,
▪ dass die Versteifungsvorrichtung derart ausgeführt ist, dass diese eine Strömung in dem zwischen dem ersten Seitenwandungs-Profilplattenpaneel und dem zweiten Seitenwandungs-Profilplattenpaneel gelegenen Innenbereich zulässt,
▪ dass das Innere zwischen dem ersten Seitenwandungs-Profilplattenpaneel und dem zweiten Seitenwandungs-Profilplattenpaneel strömungstechnisch in Verbindung steht mit dem Strömungskanal, so dass das durch das erste Seitenwandungs-Profilplattenpaneel strömende Fluid von der Pumpe durch den Strömungskanal abgesaugt wird.

Nach einer Ausführungsform des erfindungsgemäßen Strömungskörper-Bauteils ist vorgesehen,
▪ dass der Strömungskörper eine sich in der Strömungskörper-Längsrichtung erstreckende Kanalwandung aufweist, die mit den einander gegenüberliegenden Endabschnitten der Profilplattenabschnitte luftdicht verbunden ist, die an den Anschlussabschnitten der Profilplattenabschnitte an dem jeweiligen Ende des Strömungskörper-Vorderteils gelegen sind, so dass der Strömungskanal zwischen dem Strömungskörper-Vorderteil, den Profilplattenabschnitten und der Kanalwandung ausgebildet ist,
▪ dass das zweite Seitenwandungs-Profilplattenpaneel für Fluid durchlässig ausgeführt ist,
▪ dass an dem zweiten Seitenwandungs-Profilplattenpaneel beider Profilplattenabschnitte jeweils eine sich entlang derselben erstreckende Sammelkanal-Wandung zur Ausbildung eines Sammelkanals zwischen dem jeweiligen Seitenwandungs-Profilplattenpaneel und der Sammelkanal-Wandung verläuft, wobei jeder Sammelkanal einen Auslass zum Hauptströmungskanal aufweist, so dass das durch die ersten Seitenwandungs-Profilplattenpaneele strömende Fluid in den in den Hauptströmungskanal strömt.

Nach einer Ausführungsform des erfindungsgemäßen Strömungskörper-Bauteils ist vorgesehen, dass das Strömungskörper-Vorderteil aus entlang der Längserstreckung des Strömungskörper-Vorderteils nebeneinander gelegenen Metallschaum-Körpern gebildet ist.

Nach einer Ausführungsform des erfindungsgemäßen Strömungskörper-Bauteils ist vorgesehen, dass das erste Vorderteilpaneel zumindest abschnittsweise aus einer Metallgeflechtanordnung gebildet ist.

Nach einem weiteren nicht beanspruchten Aspekt ist ein Strömungskörper mit einem Strömungskörper-Bauteil vorgesehen, das in einem entgegen gesetzt zu seiner Tiefenrichtung gesehen vorderen Bereich des Strömungskörpers angeordnet und nach einer erfindungsgemäßen Ausführungsform ausgeführt ist, wobei sich das Strömungskörper-Bauteil bis 15 % bis 20 % der gesamten Profiltiefe des Strömungskörpers von dessen vorderem Ende aus erstreckt und wobei sich der Vorderteil-Profilplattenabschnitt des Strömungskörper-Bauteils bis 3 % bis 8 % der gesamten Profiltiefe des Strömungskörpers von dessen vorderem Ende aus erstreckt.

Nach einem weiteren nicht beanspruchten Aspekt ist ein Verfahren zur Herstellung eines Profilplattenabschnitts vorgesehen mit einem eine Strömungsoberfläche bereitstellenden ersten Profilplattenpaneel, einem zweiten Profilplattenpaneel und einer diese gegenseitig in einer Stützrichtung abstützende Vorderteil-Versteifungsvorrichtung, die aus mehreren in der Profilplatten-Längsrichtung nebeneinander gelegenen und sich in der Profilplatten-Seitenrichtung erstreckenden Versteifungsstegen gebildet ist,
wobei wenigstens ein Teil der Versteifungsstege ein Querschnittsprofil mit einem geradlinig verlaufenden und den Hauptstegabschnitt bildenden Endabschnitt an einem ersten Profilende und einem gekrümmt verlaufenden Endabschnitt an dem entgegen gesetzt zu dem ersten Querschnittsprofil-Ende gelegenen zweiten Querschnittsprofil-Ende, wobei der gekrümmt verlaufende Endabschnitt als ein Fuß ausgebildet ist, der eine Auflagefläche an der Fußunterseite bereitstellt,
wobei das Verfahren die folgenden Schritte aufweist:
▪ Verbindung des ersten Profilplattenpaneels mit den ersten Profilenden einer Mehrzahl von Versteifungsstegen,
▪ Verbinden des zweiten Profilplattenpaneels mit den Füße der Versteifungsstege.

Dabei kann bei dem Verfahren insbesondere vorgesehen sein, dass das Verbinden des zweiten Profilplattenpaneels mit den Füßen der Versteifungsstege erfolgt durch:
▪ Auflegen des zweiten Profilplattenpaneels auf die an der Fußunterseite gelegene Auflageflächen der Füße der Versteifungsstege,
▪ mit einer Laserstrahlschweißtechnik Verschweißen der Füße der Versteifungsstege von der Seite her, die außerhalb des Profilplattenabschnitts und an dem zweiten Profilplattenpaneel gelegen ist.
▪ Alternativ dazu kann bei dem Verfahren insbesondere vorgesehen sein, dass das Verbinden des zweiten Profilplattenpaneels mit den Füßen der Versteifungsstege erfolgt durch:
▪ Aufbringen eines Lötmittels auf die Fußunterseite der Füße der Versteifungsstege,
▪ Auflegen des zweiten Profilplattenpaneels auf die an der Fußunterseite gelegene Auflageflächen der Füße der Versteifungsstege,
▪ mit einer Löttechnik Verlöten der Füße der Versteifungsstege von der Seite her, die außerhalb des Profilplattenabschnitts und an dem zweiten Profilplattenpaneel gelegen ist.

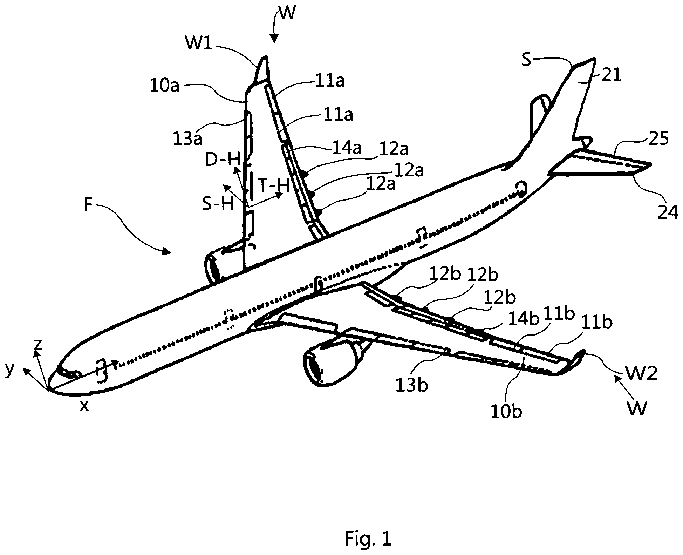

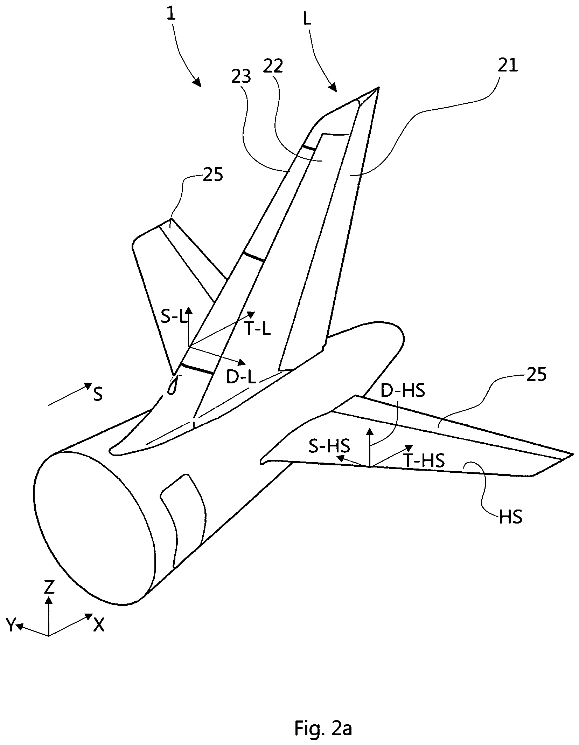

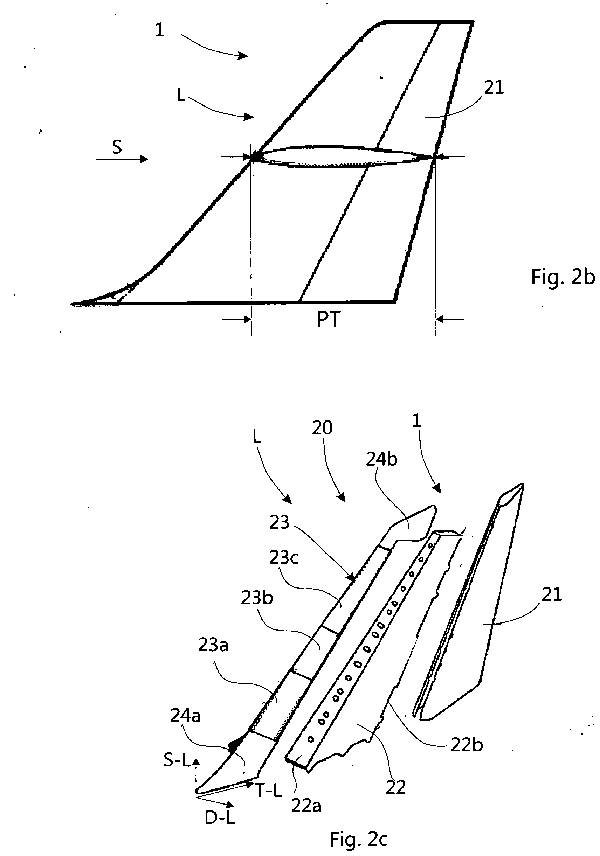

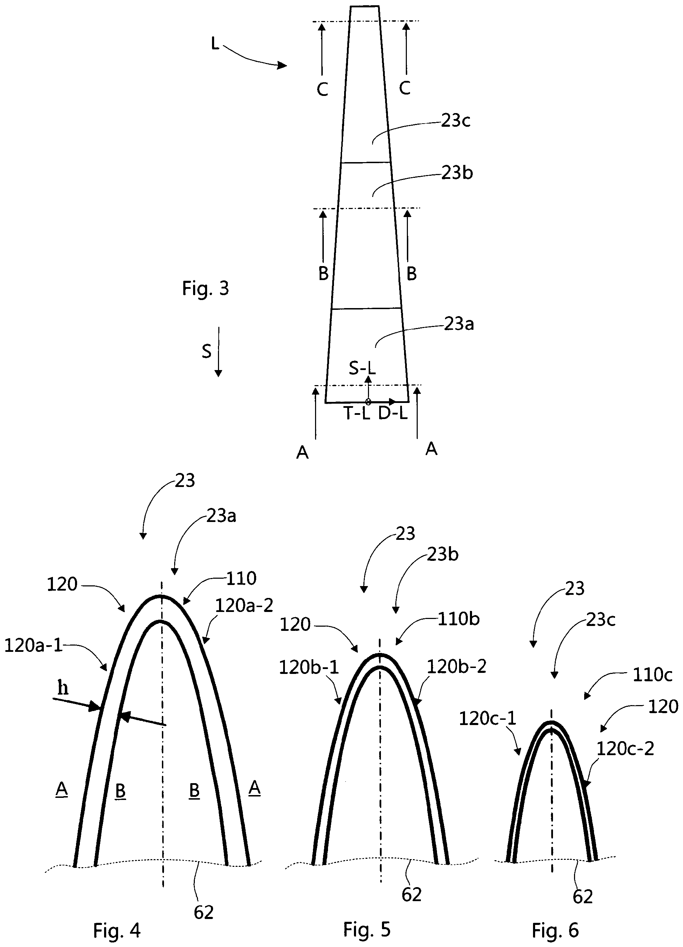

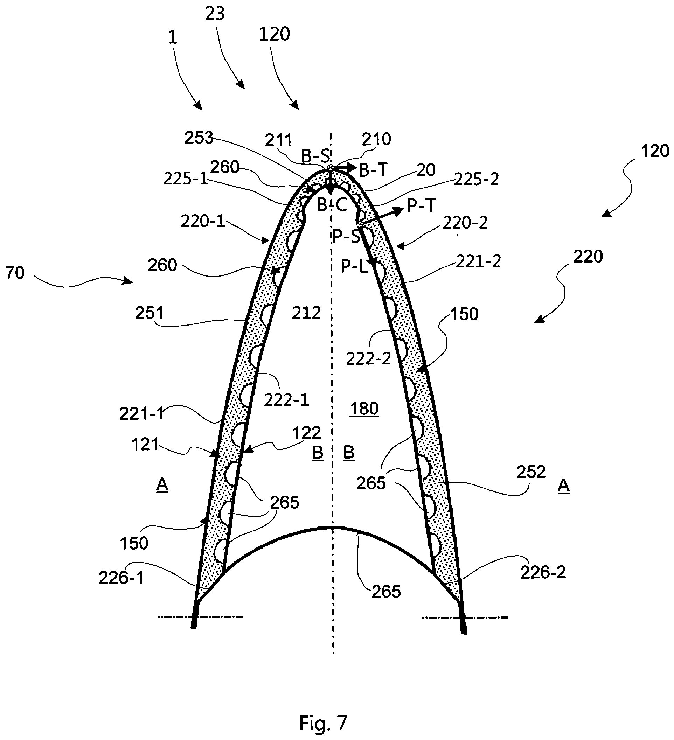

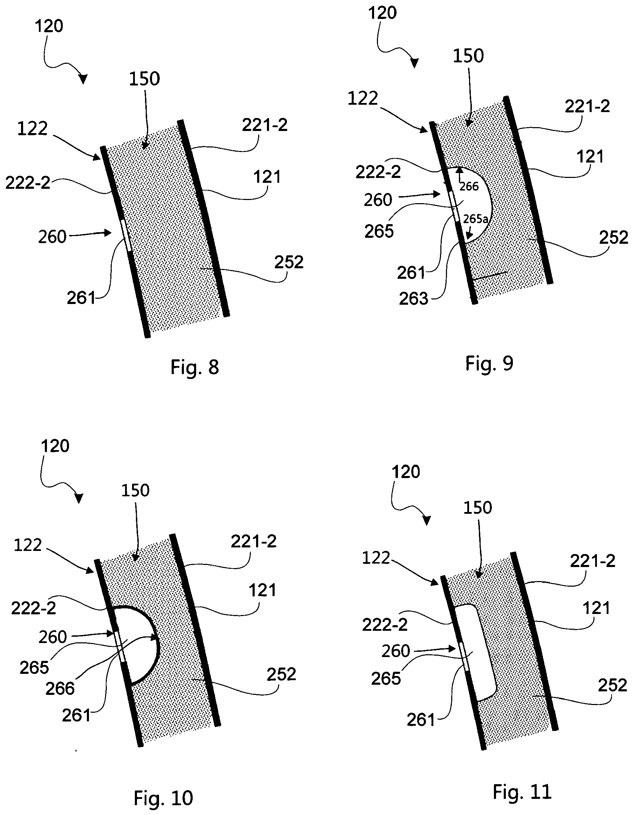

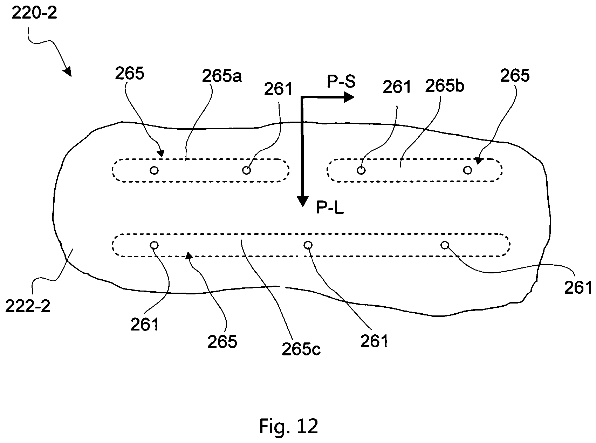

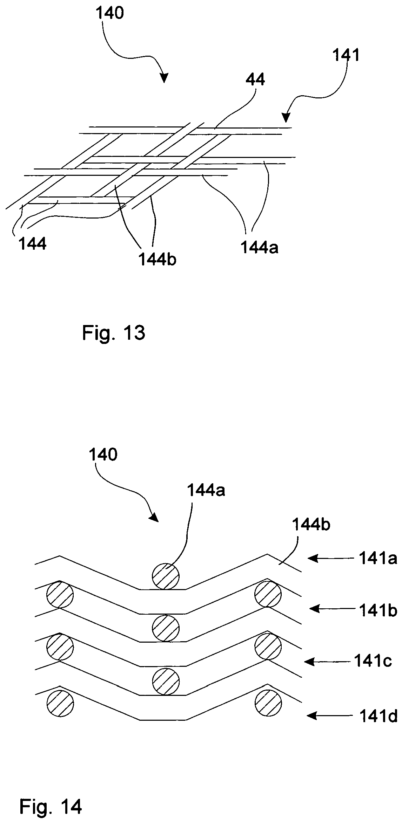

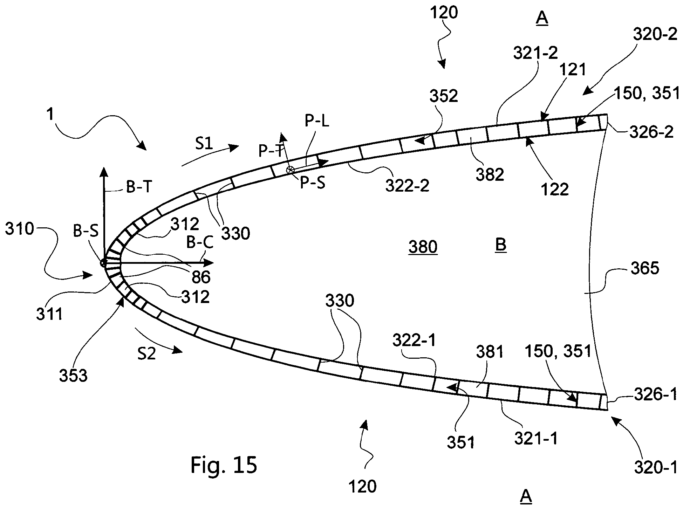

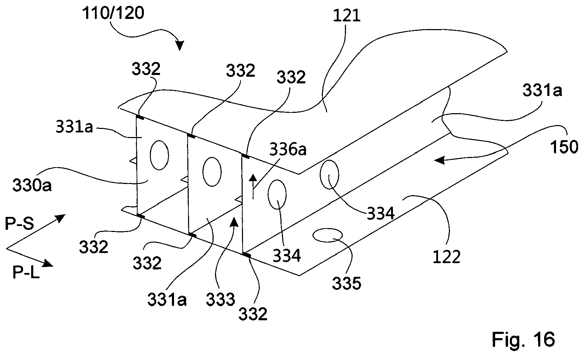

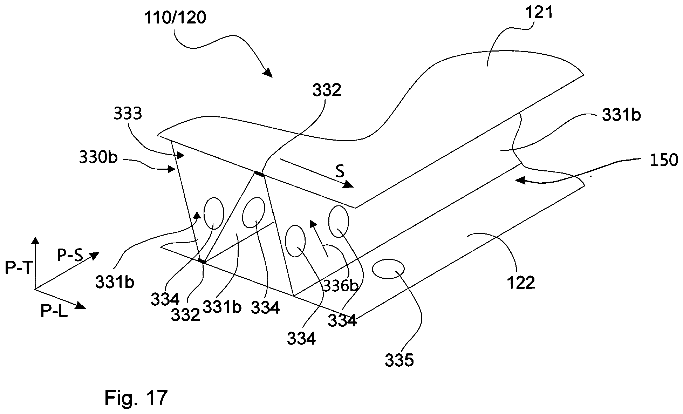

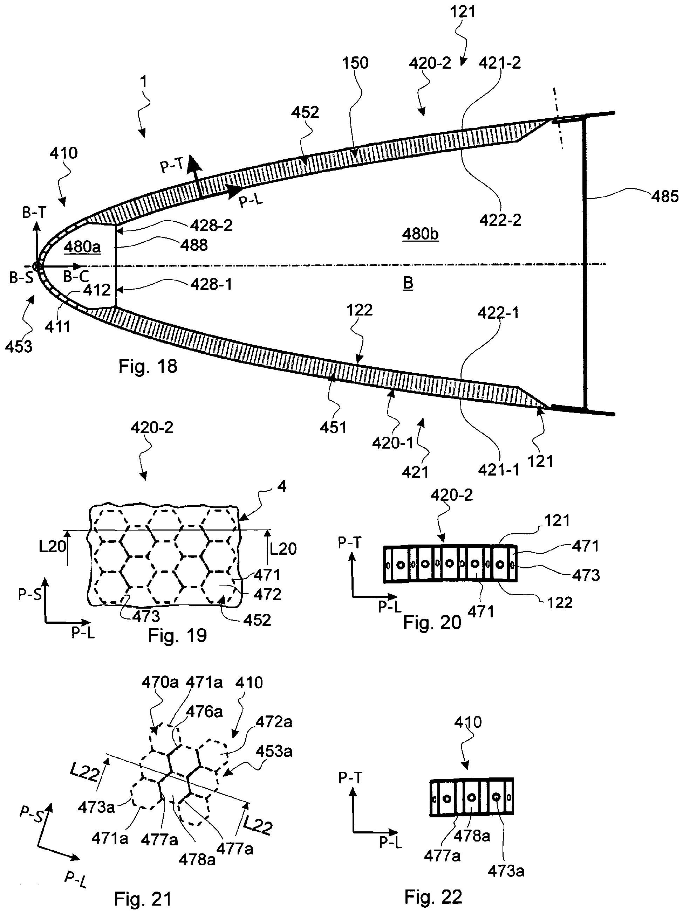

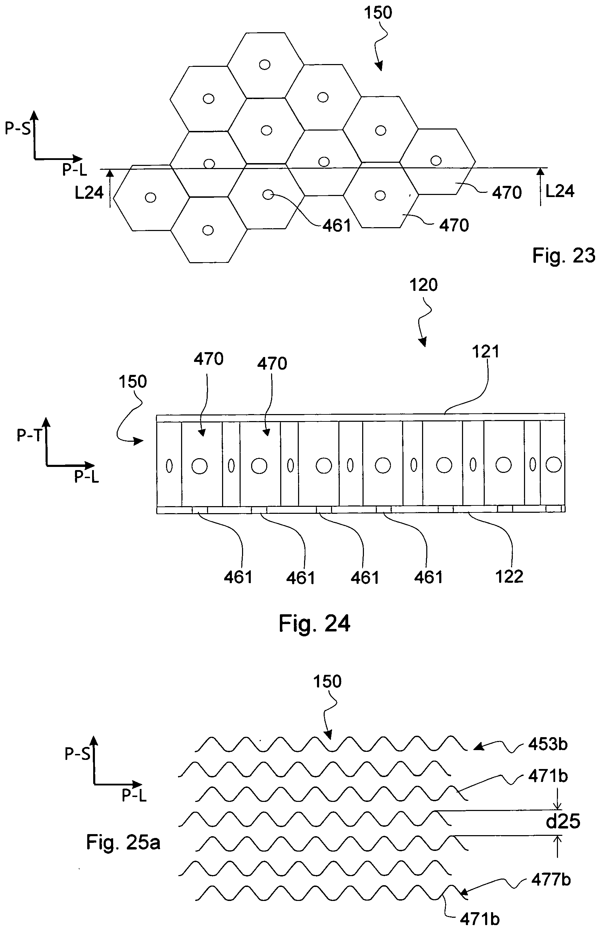

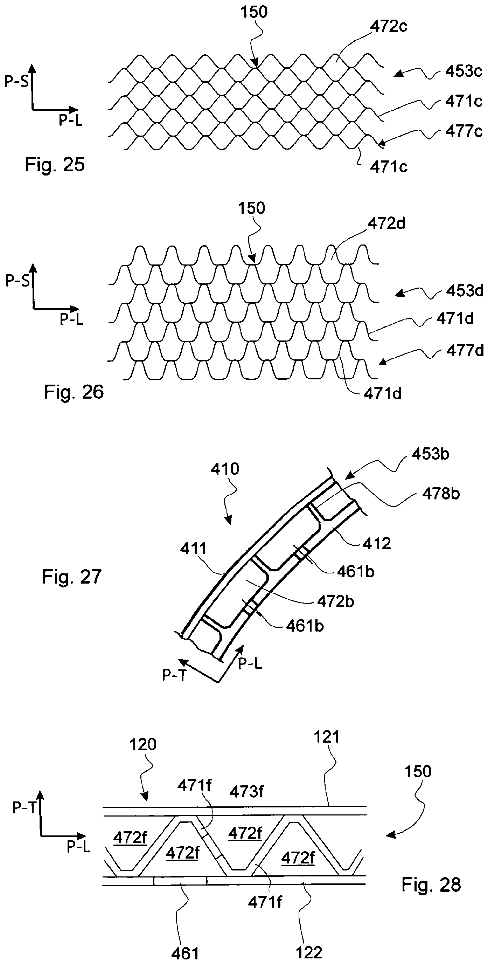

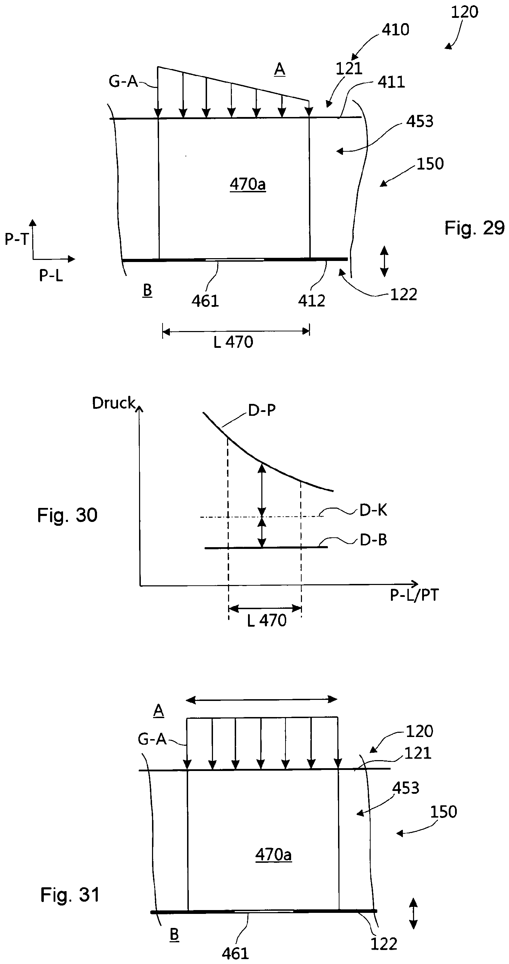

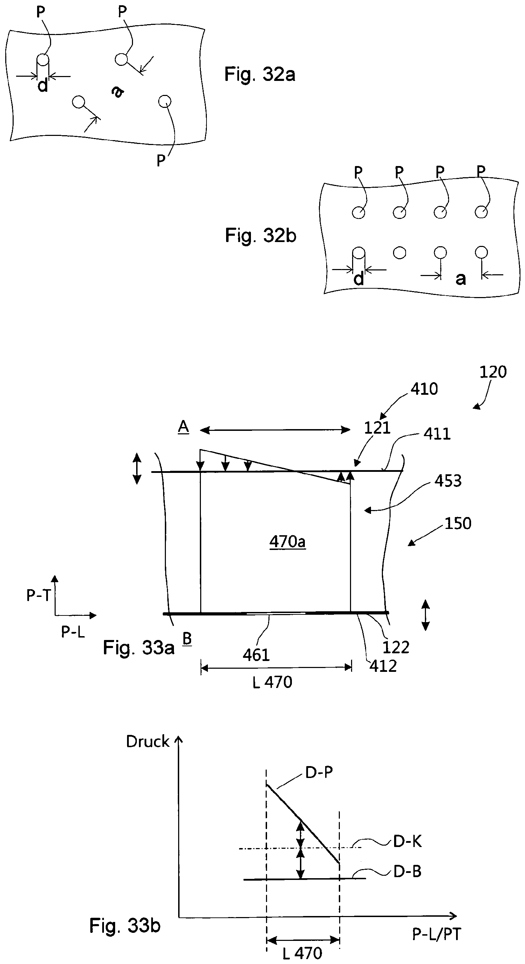

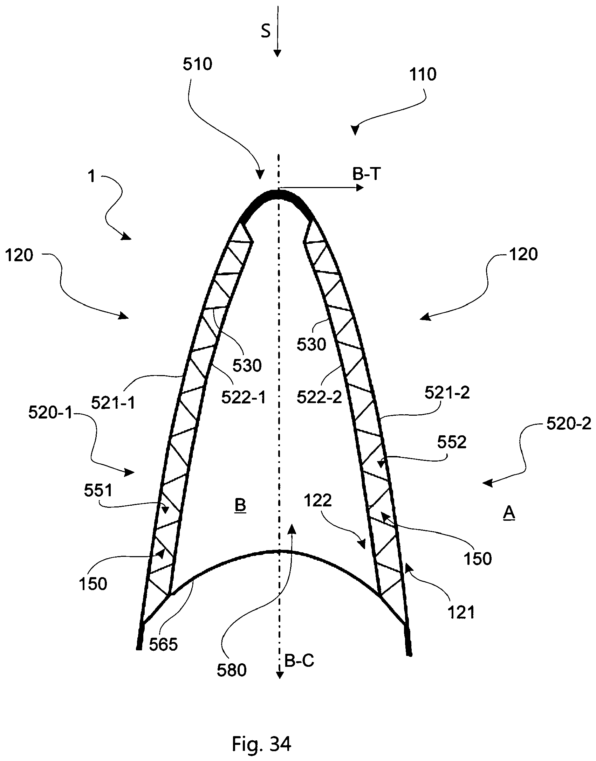

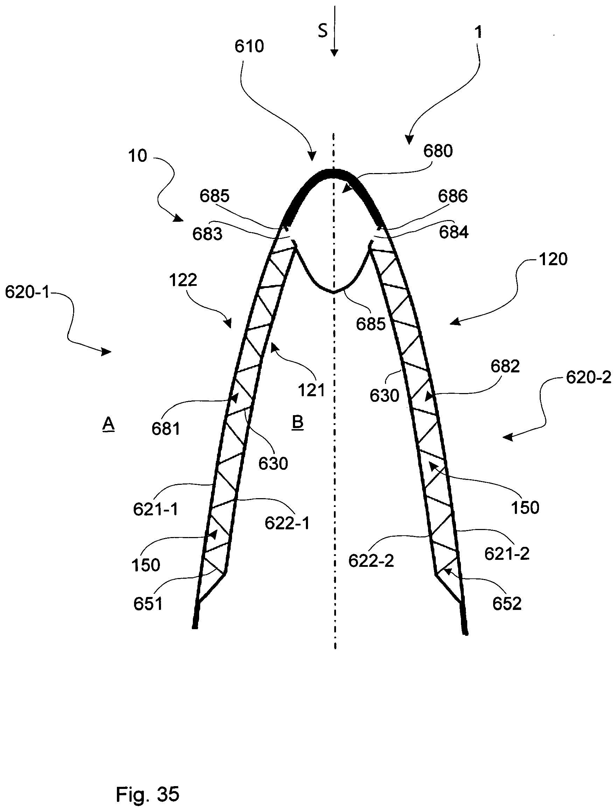

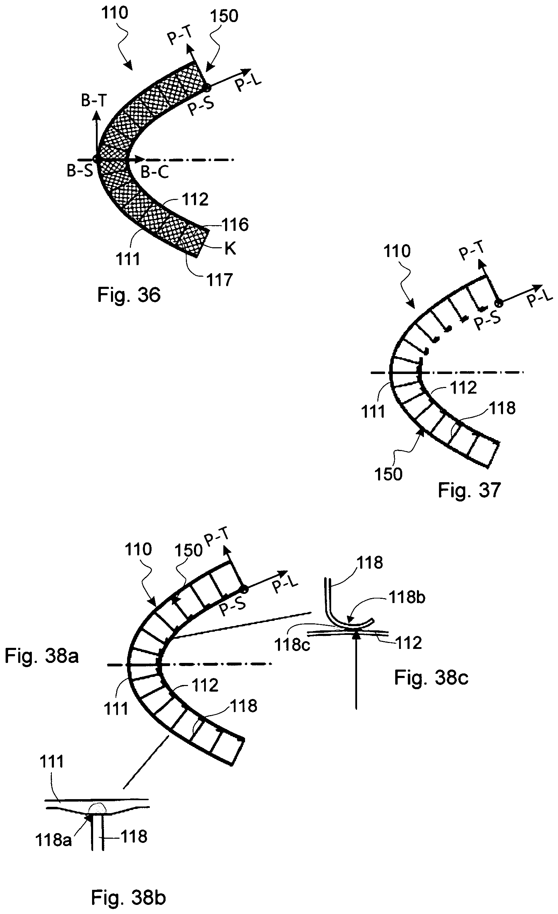

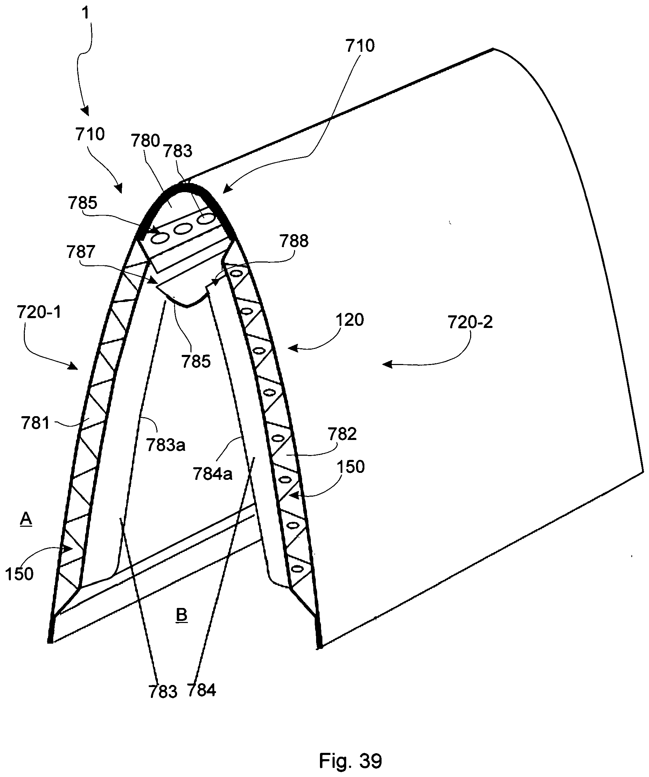

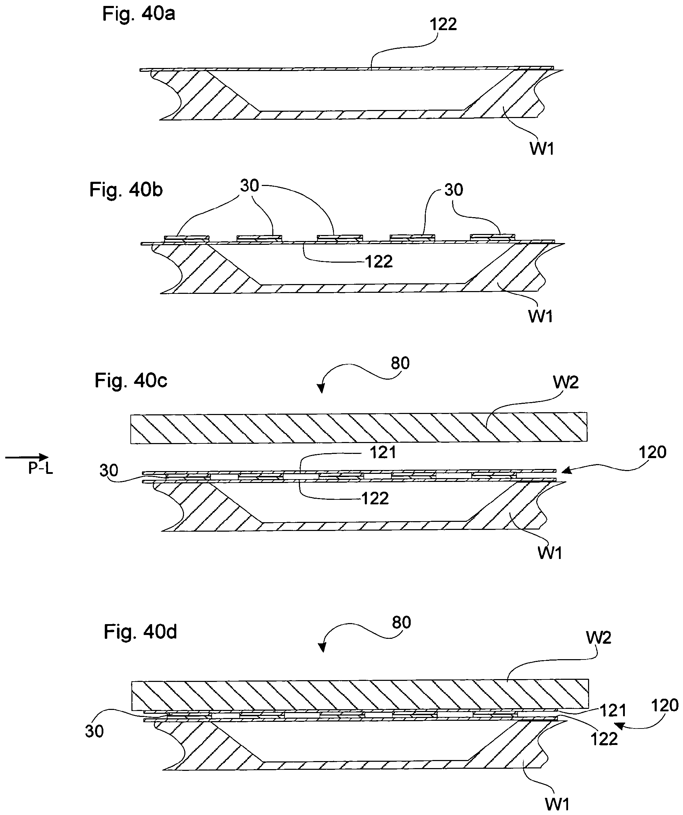

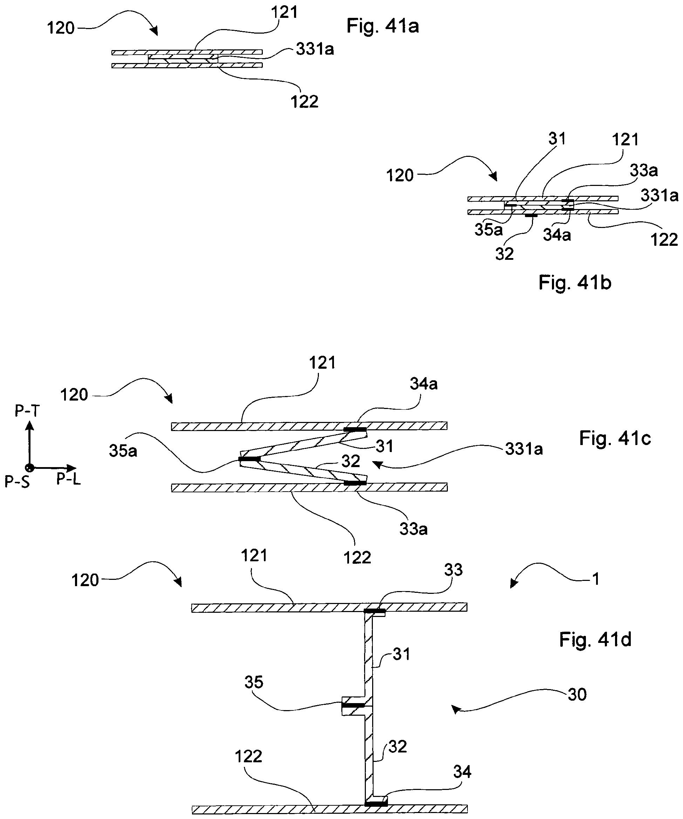

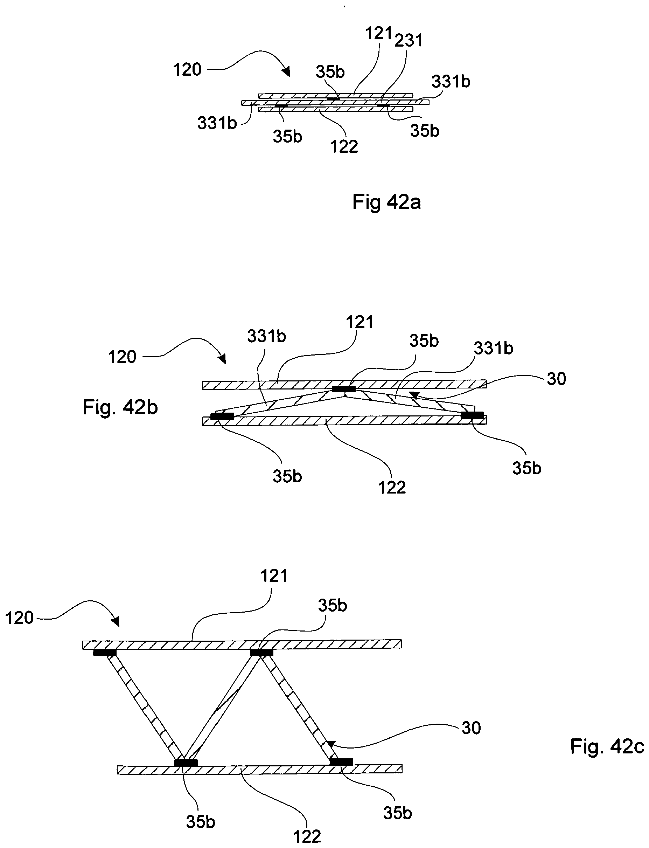

Die Erfindung wird im Folgenden an Hand der beiliegenden Figuren beschrieben, die zeigen:
▪ Figur 1 eine perspektivische Darstellung eines Flug-zeugs mit Strömungskörpern, an dem die Erfindung angewendet werden kann,
▪ Figur 2a eine perspektivische Darstellung des Seitenleitwerks des in der Figur 1 dargestellten Flugzeugs, das aus einem Seitenleitwerk-Grundkörper und einem Seitenleitwerk-Vorderkantenkörper gebildet ist, wobei nach einer Ausführungsform der Erfindung der Seitenleitwerk-Vorderkantenkörper als Strömungskörper nach der Erfindung ausgeführt ist,
▪ Figur 2b eine Seitenansicht des Seitenleitwerks nach der Figur 2a,
▪ Figur 2c eine Explosionsdarstellung des Seitenleitwerks nach der Figur 2a,
▪ Figur 3 eine Frontansicht des Seitenleitwerks nach der Figur 2a,
▪ Figur 4 einen Schnitt entlang der in der Figur 3 bezeichneten Linie A-A durch das Seitenleitwerk nach der Figur 2a,
▪ Figur 5 einen Schnitt entlang der in der Figur 3 bezeichneten Linie B-B durch das Seitenleitwerk nach der Figur 2a,
▪ Figur 6 einen Schnitt entlang der in der Figur 3 bezeichneten Linie C-C durch das Seitenleitwerk nach der Figur 2a,
▪ Figur 7 eine Schnittdarstellung des Querschnitts einer erfindungsgemäßen Ausführungsform eines als Vorderkantenkörper realisierten Strömungskörper-Bauteils mit einem Vorderteil-Profilplattenabschnitt und seitlich daran anschließenden Seitenwandungs-Profilplattenabschnitten, die jeweils aus einem äußeren oder ersten und einem inneren oder zweiten Profilplattenpaneel gebildet sind, wobei der Vorderteil-Profilplattenabschnitt und die Seitenwandungs-Profilplattenabschnitte aus einem Zwischenschicht aus Metallschaum gebildet sind,
▪ Figur 8 einen Ausschnitt einer ersten Ausführungsform eines Seitenwandungs-Profilplattenabschnitts mit einer Schaumkern-Zwischenschicht, wobei der innere oder zweite Profilplattenpaneel eine Öffnung zum Durchlassen von durch den Seitenwandungs-Profilplattenabschnitt strömenden Fluid aufweist,
▪ Figur 9 einen Ausschnitt einer zweiten Ausführungsform eines Seitenwandungs-Profilplattenabschnitts, bei der gegenüber der in der Figur 8 gezeigten Ausführungsform die Schaumkern-Zwischenschicht eine Ausnehmung mit einer ersten Form aufweist,
▪ Figur 10 einen Ausschnitt einer dritten Ausführungsform eines Seitenwandungs-Profilplattenabschnitts, bei der gegenüber der in der Figur 9 gezeigten Ausführungsform die nach innen gerichtete Oberfläche der mit einer Schicht versehen ist,
▪ Figur 11 einen Ausschnitt einer vierten Ausführungsform eines Seitenwandungs-Profilplattenabschnitts, bei der gegenüber der in der Figur 9 gezeigten Ausführungsform die Schaumkern-Zwischenschicht eine Ausnehmung mit einer zweiten Form aufweist,
▪ Figur 12 das innere Profilplattenpaneel einer Ausführungsform eines Seitenwandungs-Profilplattenabschnitts, das in einer Ansicht von der Innenseite des Strömungskörper-Bauteils aus gesehen gezeigt ist und einen von dem Innenraum B aus sichtbaren Oberflächenbereich des inneren Profilplattenpaneels mit darin eingebrachten Öffnungen und, mit Strichlinien angedeutet, einer Anordnung von Ausnehmungen,
▪ Figur 13 eine perspektivische Darstellung einer Geflechtlage, aus der das erste oder auch das zweite Profilplattenpaneel eines Profilplattenabschnitts mit einer Zwischenschicht gebildet sein kann,
▪ Figur 14 eine Querschnittsdarstellung einer Ausführungsform eines Profilplattenpaneels als Geflechtanordnung mit mehreren Geflechtlagen jeweils nach der Figur 13,
▪ Figur 15 eine Querschnittsdarstellung einer weiteren Ausführungsform des erfindungsgemäßen Strömungskörper-Bauteils,
▪ Figur 16 eine perspektivische Darstellung einer Ausführungsform eines erfindungsgemäßen Profilplattenabschnitts, die insbesondere für einen Vorderteil-Profilplattenabschnitt und/oder einen seitlich daran anschließenden Seitenwandungs-Profilplattenabschnitt des Strömungskörper-Bauteils nach der Figur 15 verwendet werden kann,
▪ Figur 17 eine perspektivische Darstellung einer weiteren Ausführungsform eines erfindungsgemäßen Profilplattenabschnitts, die insbesondere für einen Vorderteil-Profilplattenabschnitt und/oder einen seitlich daran anschließenden Seitenwandungs-Profilplattenabschnitt des Strömungskörper-Bauteils nach der Figur 15 verwendet werden kann,
▪ Figur 18 eine Querschnittsdarstellung einer weiteren Ausführungsform des erfindungsgemäßen Strömungskörper-Bauteils,
▪ Figur 19 eine Draufsicht auf einen Querschnitt eines Ausschnitts der als Wabenstruktur ausgeführten Versteifungsvorrichtung des Seitenwandungs-Profilplattenabschnitts des Strömungskörper-Bauteils nach der Figur 15 in der von der Längsrichtung und Spannweitenrichtung aufgespannten Ebene desselben,
▪ Figur 20 einen Querschnitt der Wabenstruktur nach der Figur 19 entlang der dort eingetragenen Schnittlinien L20 in der von der Längsrichtung und Dickenrichtung aufgespannten Ebene des Seitenwandungs-Profilplattenabschnitts des Strömungskörper-Bauteils nach der Figur 15,
▪ Figur 21 eine Draufsicht auf einen Querschnitt eines Ausschnitts der als Wabenstruktur ausgeführten Versteifungsvorrichtung des Vorderteil-Profilplattenabschnitts des Strömungskörper-Bauteils nach der Figur 15 in der von der Längsrichtung und Spannweitenrichtung aufgespannten Ebene desselben, wobei ein Querschnitt der Wabenstruktur nach der Figur 21 entlang der dort eingetragenen Schnittlinien L20 in der Figur 20 gezeigt ist,
▪ Figur 22 einen Querschnitt der Wabenstruktur nach der Figur 21 entlang der dort eingetragenen Schnittlinien L22 in der von der Längsrichtung und Dickenrichtung aufgespannten Ebene des Seitenwandungs-Profilplattenabschnitts des Strömungskörper-Bauteils nach der Figur 15,
▪ Figur 23 in schematischer Darstellung eine Draufsicht auf einen Querschnitt eines Ausschnitts des als Wabenstruktur ausgeführten Profilplattenabschnitts nach der Erfindung in der von der Längsrichtung und Spannweitenrichtung aufgespannten Ebene desselben,
▪ Figur 24 in schematischer Darstellung einen Querschnitt der als Versteifungsvorrichtung eines Profilplattenabschnitts ausgeführten Wabenstruktur nach der Figur 23 entlang der dort eingetragenen Schnittlinien L23 in der von der Längsrichtung und Dickenrichtung aufgespannten Ebene des Profilplattenabschnitts,
▪ Figur 25 in schematischer Darstellung eine Draufsicht auf einen Querschnitt eines Ausschnitts Profilplattenabschnitts nach der Erfindung in der von der Längsrichtung und Spannweitenrichtung aufgespannten Ebene desselben, wobei die Versteifungsvorrichtung aus Stützwänden gebildet ist, die in dem dargestellten Querschnitt eine Anordnung von rechteckförmigen Kammern ergeben,
▪ Figur 26 in schematischer Darstellung eine Draufsicht auf einen Querschnitt eines Ausschnitts eines Profilplattenabschnitts nach der Erfindung in der von der Längsrichtung und Spannweitenrichtung aufgespannten Ebene desselben, wobei die Versteifungsvorrichtung aus Stützwänden gebildet ist, die in dem dargestellten Querschnitt eine schuppenförmige Anordnung von Kammern oder eine Anordnung von tropfenförmigen Kammern ergeben,
▪ Figur 27 einen Querschnitt einer alternativ zur Stützvorrichtung nach der Figur 21 ausgeführten Stützvorrichtung des Vorderteil-Profilplattenabschnitts des Strömungskörper-Bauteils nach der Figur 15, wobei sich die Querschnittsdarstellung in der von der Längsrichtung und Dickenrichtung aufgespannten Ebene ergibt,
▪ Figur 28 einen Querschnitt einer Versteifungsvorrichtung eines Profilplattenabschnitts nach der Erfindung in der von der Längsrichtung und Dickenrichtung aufgespannten Ebene des Profilplattenabschnitts, wobei die Versteifungsvorrichtung als Fachwerk realisiert ist,
▪ Figur 29 einen Querschnitt einer Ausführungsform einer durch eine Versteifungsvorrichtung gebildeten Profilplattenkammer in der von der Längsrichtung und Dickenrichtung aufgespannten Ebene des Profilplattenabschnitts gesehen mit einer Darstellung des an dem äußeren oder ersten Profilplattenpaneel des Profilplattenabschnitts herrschenden Fluiddrucks, wobei das erste Profilplattenpaneel des Profilplattenabschnitts nach einer ersten Ausführungsform ausgeführt ist,
▪ Figur 30 der Druckverlauf in der Profilplattenkammer nach der Figur 29,
▪ Figur 31 einen Querschnitt einer Ausführungsform einer durch eine Versteifungsvorrichtung gebildeten Profilplattenkammer in der von der Längsrichtung und Dickenrichtung aufgespannten Ebene des Profilplattenabschnitts gesehen mit einer Darstellung des an dem äußeren oder ersten Profilplattenpaneel des Profilplattenabschnitts herrschenden Fluiddrucks, wobei das erste Profilplattenpaneel des Profilplattenabschnitts nach einer weiteren oder zweiten Ausführungsform ausgeführt ist,
▪ Figur 32 der Druckverlauf in der Profilplattenkammer nach der Figur 31,
▪ Figur 33 einen Querschnitt einer Ausführungsform einer durch eine Versteifungsvorrichtung gebildeten Profilplattenkammer in der von der Längsrichtung und Dickenrichtung aufgespannten Ebene des Profilplattenabschnitts gesehen mit einer Darstellung des an dem äußeren oder ersten Profilplattenpaneel des Profilplattenabschnitts herrschenden Fluiddrucks, wobei das erste Profilplattenpaneel des Profilplattenabschnitts nach einer weiteren oder dritten Ausführungsform ausgeführt ist,
▪ Figur 34 eine Querschnittsdarstellung einer weiteren Ausführungsform des erfindungsgemäßen Strömungskörper-Bauteils,
▪ Figur 35 eine Querschnittsdarstellung einer weiteren Ausführungsform des erfindungsgemäßen Strömungskörper-Bauteils,
▪ Figur 36 eine Querschnittsdarstellung einer ersten Ausführungsform des Vorderteil-Profilplattenabschnitts nach der Ausführungsform des Strömungskörper-Bauteils nach der Figur 34 oder 35,
▪ Figur 37 eine Querschnittsdarstellung einer zweiten Ausführungsform des Vorderteil-Profilplattenabschnitts nach der Ausführungsform des Strömungskörper-Bauteils nach der Figur 33 oder 34,
▪ Figur 38a eine Querschnittsdarstellung einer dritten Ausführungsform des Vorderteil-Profilplattenabschnitts nach der Ausführungsform des Strömungskörper-Bauteils nach der Figur 34 oder 35,
▪ Figur 38b einen Ausschnitt aus der Darstellung der Figur 37,
▪ Figur 38c einen weiteren Ausschnitt aus der Darstellung der Figur 37,
▪ Figur 39 eine Querschnittsdarstellung einer weiteren Ausführungsform des erfindungsgemäßen Strömungskörper-Bauteils,
▪ Figur 40a im Querschnitt ein erster Schritt einer Ausführungsform eines Verfahrens zur Verbindung von zwei Paneelen mit Stützstegen;
▪ Figur 40b im Querschnitt ein zweiter Schritt der Ausführungsform eines Verfahrens nach Figur 40a;
▪ Figur 40c im Querschnitt ein dritter Schritt der Ausführungsform eines Verfahrens nach Figur 40b;
▪ Figur 40d im Querschnitt ein vierter Schritt der Ausführungsform eines Verfahrens nach Figur 40c;
▪ Figur 41a im Querschnitt einen ersten Verfahrensschritt, bei dem die Stützstege mit dessen Schenkeln zusammen geklappt zwischen den Paneelen gelegen sind;
▪ Figur 41b im Querschnitt einen weiteren Verfahrensschritt, bei dem die Stützstege mit den Paneelen diffusionsverschweißt worden sind;
▪ Figur 41c im Querschnitt einen weiteren Verfahrensschritt, bei dem die Schenkel der Stützstege halb auseinander gefahren sind;
▪ Figur 41d im Querschnitt einen weiteren Verfahrensschritt, bei dem die Schenkel der Stützstege ganz auseinander gefahren sind;
▪ Figur 42a im Querschnitt einen ersten Verfahrensschritt, bei dem eine weitere Ausführungsform der Stützstege mit dessen Schenkeln zusammen geklappt zwischen den Paneelen gelegen und die Stützstege mit den Paneelen diffusionsverschweißt worden sind;
▪ Figur 42b im Querschnitt einen weiteren Verfahrensschritt, bei dem die Schenkel der Stützstege halb auseinander gefahren sind;
▪ Figur 42c im Querschnitt einen weiteren Verfahrensschritt, bei dem die Schenkel der Stützstege ganz auseinander gefahren sind.

Mögliche Anwendungen des erfindungsgemäß vorgesehenen Profilplattenabschnitts als Außenwandung eines Strömungskörpers bzw. eines Strömungskörper-Bauteils optional mit einer Fluid-Absaugvorrichtung werden insbesondere unter Bezugnahme auf die Figuren 1, 2a, 2b, 2c beschrieben.

### BERICHTIGTES BLATT (REGEL 91) ISA/EP

Die Figur 1 zeigt ein zur Anwendung von Ausführungsformen der Erfindung vorgesehenes Flugzeug F mit zwei Tragflügeln 10a, 10b. In der Figur 1 ist ein auf das Flugzeug F bezogenes Flugzeug-Koordinatensystem KS-F mit einer Flugzeug-Längsachse X, einer Flugzeug-Querachse Y und einer Flugzeug-Hochachse Z eingetragen. Die zur Anwendung der Erfindung vorgesehenen Tragflügel 10a, 10b weisen jeweils einen Hauptflügel H und
▪ zumindest ein in zwei Bewegungsrichtungen bewegbar daran angeordnetes Querruder 11a bzw. 11b,
▪ optional wenigstens einen daran bewegbar angeordneten Spoiler 12a bzw. 12b,
▪ optional wenigstens einen zwischen einer eingefahrenen und einer ausgefahrenen Stellung bewegbar am Hauptflügel angeordneten Vorderkanten-Hochauftriebskörper 114, 113 wie z.B. einen Vorflügel oder eine Vorderkantenklappe und
▪ wenigstens eine optional Hinterkantenklappe 141a, 141b
auf. In der Figur 1 sind zur Vereinfachung der Darstellung nur einige der dort dargestellten Spoiler 12a bzw. 12b, Vorflügel 114, 113 und/oder Hinterkantenklappen 141a, 141b mit einem Bezugszeichen versehen.

Weiterhin weist das in der Figur 1 dargestellte Flugzeug F ein Seitenleitwerk 20 mit zumindest einem Seitenruder 21 auf. Optional kann das Flugzeug F auch ein Höhenleitwerk 24 mit jeweils zumindest einem Höhenruder 25 aufweisen. Das Höhenleitwerk 24 kann auch als T-Leitwerk oder Kreuz-Leitwerk ausgebildet sein. Die Erfindung kann auch auf das Seitenleitwerk 20 und/oder das Höhenleitwerk 24 angewendet werden.

Das erfindungsgemäße, für die Anwendung der Erfindung vorgesehene Flugzeug F kann auch eine andere Form als das in der Figur 1 dargestellte Flugzeug F haben, so dass die Erfindung auch auf im Vergleich zu dem in der Figur 1 dargestellten Flugzeug andersartig ausgebildeten Flugwerken, also Tragflügel und/oder Leitwerken angewendet werden kann, wie beispielsweise auf Tragflügel, Hilfsflügel, Canards oder Leitwerke eines Hochdeckers oder eines Nurflüglers.

Zur Beschreibung der Erfindung werden folgende Koordinatensysteme eingeführt:
▪ das Koordinatensystem KS-H des Hauptflügels H als ein lokales Koordinatensystem mit einer Hauptflügel-Spannweitenrichtung S-H, einer Hauptflügel-Tiefenrichtung T-H und einer Hauptflügel-Dickenrichtung D-H jeweils des Hauptflügels, wobei der Ursprung des lokalen Koordinatensystems KS-H des Hauptflügels H an der jeweils zu wählenden Stelle der Vorderkante, also der entgegengesetzt zur X-Achse gesehen vordersten Linie des Hauptflügels H gelegen ist und wobei das Koordinatensystem KS-H des Hauptflügels H derart orientiert ist, dass die Hauptflügel-Spannweitenrichtung S-H in der Richtung der Flugzeug-Querachse Y und die Hauptflügel-Dickenrichtung D-H in der Richtung der Flugzeug-Hochachse Z verläuft,
▪ das Koordinatensystem KS-L des Seitenleitwerks L als ein lokales Koordinatensystem mit einer Seitenleitwerk-Spannweitenrichtung S-L, einer Seitenleitwerk-Tiefenrichtung S-L und einer Seitenleitwerk-Dickenrichtung S-L jeweils des Seitenleitwerks L, wobei der Ursprung des lokalen Koordinatensystems KS-L des Seitenleitwerks L an der jeweils zu wählenden Stelle der Vorderkante, also der entgegengesetzt zur X-Achse gesehen vordersten Linie des Seitenleitwerks L gelegen ist und wobei das Koordinatensystem KS-H des Seitenleitwerks L derart orientiert ist, dass die Seitenleitwerk-Spannweitenrichtung S-H in der Richtung der Flugzeug-Hochachse Z und die Seitenleitwerk-Dickenrichtung S-L in der Richtung der Flugzeug-Querachse Y verläuft,
▪ das Koordinatensystem KS-HS des Höhenleitwerks HS als ein lokales Koordinatensystem mit einer Höhenleitwerk-Spannweitenrichtung S-HS, einer Höhenleitwerk-Tiefenrichtung T-HS und einer Höhenleitwerk-Dickenrichtung D-HS jeweils des Höhenleitwerks HS, wobei der Ursprung des lokalen Koordinatensystems KS-HS des Höhenleitwerks HS an der jeweils zu wählenden Stelle der Vorderkante, also der entgegengesetzt zur X-Achse gesehen vordersten Linie des Höhenleitwerks HS gelegen ist und wobei das Koordinatensystem KS-H des Hauptflügels H derart orientiert ist, dass die Hauptflügel-Spannweitenrichtung S-H in der Richtung der Flugzeug-Querachse Y und die Hauptflügel-Dickenrichtung D-H in der Richtung der Flugzeug-Hochachse Z verläuft.

Dabei ist unter "oben" ausgehend vom Tragflügel T diejenige Richtung zu verstehen, die von der Oberseite S-T des Tragflügels T weg gerichtet ist oder die positive Z-Richtung des Flugzeug-Koordinatensystems KS-F oder die positive Flügeldickenrichtung des Tragflügel-Koordinatensystems KS-T.

Der erfindungsgemäße Profilplattenabschnitt und das erfindungsgemäße Strömungskörper-Bauteil können jeweils auch für andere Fahrzeuge als Flugzeuge, also für Wasserfahrzeuge, also Schiffe, oder für Landfahrzeuge, also Autos verwendet werden. Dabei kann der Profilplattenabschnitt insbesondere Bestandteil der Außenwandung bzw. des Strömungskörper-Bauteils des jeweiligen Wasser- oder Landfahrzeugs sein und in der Tiefenrichtung des jeweiligen Strömungskörper-Bauteils gesehen eine Seitenwandung desselben bilden. Dabei verläuft die Tiefenrichtung des lokalen Strömungskörper-Koordinatensystems entlang der Längsachse oder der nominalen Anströmrichtung oder der X-Achse des jeweiligen Wasser- oder Landfahrzeugs und die Spannweitenrichtung oder Querrichtung in der Richtung der Längserstreckung der Außenwandung bzw. des Strömungskörper-Bauteils.

In Bezug auf den erfindungsgemäßen Profilplattenabschnitt 100 weist diese eine Strömungsseite A, an der im Betrieb eine Strömung anliegt, und eine Innenseite B auf, die zu der Strömungsseite entgegen gesetzt gelegen und dem Inneren des Strömungskörper-Bauteils zugewandt ist,

Das erfindungsgemäße Strömungskörper-Bauteil 1 kann insbesondere ein Flügel und insbesondere Hauptflügel, eine Hochauftriebklappe wie eine Vorderkantenklappe oder eine Hinterkantenklappe, ein Ruder, eine Stellklappe, ein Leitwerk wie insbesondere ein Seitenleitwerk oder ein Höhenleitwerk oder ein Teil desselben sein. Auch kann das erfindungsgemäße Strömungskörper-Bauteil 1 ein vorderer Teil eines Flügels und insbesondere Hauptflügels, einer Hochauftriebklappe wie eine Vorderkantenklappe oder eine Hinterkantenklappe, eines Ruders, einer Stellklappe, eines Leitwerks wie insbesondere eines Seitenleitwerks oder eines Höhenleitwerks oder eines Teils desselben sein. Das erfindungsgemäße Strömungskörper-Bauteil 1 kann insbesondere aufweisen:
▪ ein für Fluid durchlässiger Vorderteil-Profilplattenabschnitt 110,
▪ zwei sich jeweils von den Profilenden des Strömungskörper-Vorderteils 110 aus in der Strömungskörper-Tiefenrichtung B-C erstreckende Seitenwandungs-Profilplattenabschnitte 120, wobei jeder der Seitenwandungs-Profilplattenabschnitte 120 insbesondere nach einer Ausführungsform desselben ausgeführt sein kann.

Das Strömungskörper-Bauteil 1 als vorderer Teil eines jeweiligen Strömungskörpers ist entgegen gesetzt zur Richtung der bestimmungsgemäß am Strömungskörper anliegenden Strömung oder entgegen gesetzt zur Tiefenrichtung des Strömungskörpers gesehen vor einem Grundkörper des Strömungskörpers gelegen und an diesem angebracht ist. Das Strömungskörper-Bauteil 1 erstreckt sich wenigstens abschnittsweise entlang der Spannweite des jeweiligen Strömungskörpers und hat eine konvexe und einen für einen vorderen Teil des jeweiligen Strömungskörpers fluid-dynamisch effiziente Form. Die Seitenwandungs-Profilplattenabschnitte 120 des Strömungskörper-Bauteils 1 schließen sich in Strömungsrichtung hinter dem Vorderteil-Profilplattenabschnitt 110 an diesem an.

Nach der Erfindung ist der Vorderteil-Profilplattenabschnitt 110 derart ausgebildet, dass Strömungskörper-Bauteil 1 als gekrümmte Platte gebildet und weist an dieser Anschlussvorrichtungen 70 (nur schematisch in der Figur 7 angedeutet) auf, die jeweils an den hinteren Enden der Seitenwandungs-Profilplattenabschnitte 120 insbesondere aus einem plattenförmigen Endstück zum Anschluss an einen Grundkörper und z.B. Bohrungen oder Ausnehmungen zur Aufnahme von Verbindungsmitteln zur Verbindung des jeweiligen Seitenwandungs-Profilplattenabschnitts 120 mit dem Grundkörper des Strömungskörpers gebildet sein können. Nach der Erfindung ist der Vorderteil-Profilplattenabschnitt 110 durchlässig für Fluid gebildet. Die Seitenwandungs-Profilplattenabschnitte 120 können wenigstens abschnittsweise in der gesamten Dickenrichtung durchlässig für Fluid gebildet sein oder es kann vorgesehen sein, dass nur eine äußere Schicht, insbesondere ein erstes oder äußeres Profilplattenpaneel 121, 122 durchlässig für Fluid gebildet ist. In letzterem Fall sind die Seitenwandungs-Profilplattenabschnitte 120 derart ausgeführt, dass diese in einer inneren Schicht nicht durchlässig für Fluid gebildet, jedoch derart ausgeführt sind, dass das aufgrund der Anströmung des Strömungskörper-Bauteils 1 in die Seitenwandungs-Profilplattenabschnitte 120 eingedrungende Fluid innerhalb des jeweiligen Seitenwandungs-Profilplattenabschnitts 120 und entlang desselben strömen kann. Dabei ist ein Auslass an einem vorderen Endabschnitt des Seitenwandungs-Profilplattenabschnitts 120 ausgebildet, so dass das Fluid von einem im Bereich des Vorderteil-Profilplattenabschnitt 110 gelegenen Strömungskanal oder dem Vorderteil-Profilplattenabschnitt 110 zugeführt werden kann. Auf diese Weise ist eine vorbestimmte und in einem Ausführungsbeispiel auch gesteuerte oder geregelte Absaugung von Fluid und insbesondere von Luft durch das Strömungskörper-Bauteil 1 möglich ist.

Nach der Erfindung ist auch ein Profilplattenabschnitt 120 vorgesehen, der insbesondere als Seitenwandungs-Profilplattenpaneel 121, 122 eines Strömungskörper-Bauteils 1 nach der Erfindung verwendet werden kann. Der erfindungsgemäße Profilplattenabschnitt 120 mit dem ersten und dem zweiten Profilplattenpaneel 121, 122 kann jedoch generell auch für andersartige Strömungskörper-Bauteile 1 als Außenwandung verwendet werden, bei der wenigstens abschnittsweise ein Durchströmen von Fluid über einen flächigen Abschnitt der Außenwandung bzw. des Profilplattenabschnitt 120 und somit durch die Seitenwandungs-Profilplattenpaneele 121, 122 oder bei der wenigstens abschnittsweise ein Durchströmen von Fluid nur durch eine äußere Schicht oder das erste bzw. äußere Seitenwandungs-Profilplattenpaneel 121, 122 insbesondere mit der Möglichkeit der Führung von Fluid zwischen und längs der Seitenwandungs-Profilplattenpaneele 121, 122 ermöglicht werden soll.

Das erfindungsgemäße Strömungskörper-Bauteil 1 kann als Vorderkantenkörper 23 eines Seitenleitwerks L, wie in den Figuren 2a bis 6 dargestellt, oder eines Hauptflügels H oder einer Stellklappe und insbesondere einer Hochauftriebsklappe, wie eines Vorderkanten-Hochauftriebskörpers oder eines Hinterkanten-Hochauftriebskörpers sein. Die Außenkontur des Querschnittsprofils eines Vorderkantenkörpers 23, das an einem Hauptflügel H oder einer Stellklappe und insbesondere einer Hochauftriebsklappe angeordnet ist, kann in der von der Dickenrichtung und der Tiefenrichtung des jeweiligen Strömungskörpers gesehen je nach dem Anwendungsfall symmetrisch, wie beim Seitenleitwerk, oder unsymmetrisch geformt sein.

Analog kann ein Strömungskörper-Bauteil 1 bzw. ein Vorderkantenkörper 23 nach der Erfindung auch an einem Strömungskörper eines Wasser- oder Landfahrzeugs und dabei z.B. an einem Steuerruder oder einem Spoiler angeordnet sein.

Die Figuren 2a, 2b und 2c sowie die Figuren 3 bis 6 zeigen eine Ausführungsform des erfindungsgemäßen Strömungskörper-Bauteils 1 als vorderer Teil eines Seitenleitwerks L. Dabei zeigt die Figur 2b eine Seitenansicht des Seitenleitwerks L und die Figur 2c eine Explosionsdarstellung des Seitenleitwerks nach der Figur 2a. Wie der Explosionsdarstellung des Seitenleitwerks der Figur 2c ersichtlich ist das Seitenleitwerk L in der dargestellten Ausführungsform aus einem Seitenleitwerk-Grundkörper 22 und einem daran angelenkten Seitenruder 21 gebildet. An dem Seitenleitwerk-Hauptkörper 20 können auch mehrere Seitenruder angekoppelt sein, die in der Höhenleitwerk-Spannweitenrichtung S-HS hintereinander angeordnet sind. Vor, also entgegen der Strömungsrichtung oder entgegen der Flugzeug-Längsachse X vor dem Seitenleitwerk-Grundkörper 22 ist an diesem ein zum Absaugen von Fluid vorgesehenes erfindungsgemäßes Strömungskörper-Bauteil 1 in Form eines Vorderkantenkörpers 23 angeordnet, der eine Gestalt hat, die für einen vorderen, also angeströmten Teil des Seitenleitwerks L in aerodynamischer Hinsicht günstig ist. Wie den Figuren 4 bis 6 entnommen werden kann, ist die Außenkontur des Querschnitts des Vorderkantenkörpers 23 in der Tiefen- und Dickenrichtung T-L, D-L des Seitenleitwerks L konkav geformt und kann insbesondere halb-ellipsoid oder in etwa halb-ellipsoid geformt sein.

Der dargestellte Vorderkantenkörper 23 ist ein Strömungskörper-Bauteil 1, das aufweist: einen Vorderteil-Profilplattenabschnitt 110 und zwei sich jeweils von den Profilenden des Strömungskörper-Vorderteils 110 aus in der Strömungskörper-Tiefenrichtung B-C erstreckende erfindungsgemäße Profilplattenabschnitte 120 in Form von Seitenwandungs-Profilplattenabschnitten 120, die jeweils wenigstens abschnittsweise in der gesamten Dickenrichtung durchlässig für Fluid gebildet sein können oder von denen jeweils nur eine äußere Schicht, insbesondere ein erstes oder äußeres Profilplattenpaneel 121, 122 durchlässig für Fluid gebildet sein können.

Generell kann das Strömungskörper-Bauteil 1 bzw. das Vorderkantenkörper 23 nach der Erfindung durch mehrere in der Spannweitenrichtung hintereinander angeordneten Funktionsabschnitte gebildet sein. Dabei kann jeder Funktionsabschnitt einen Abschnitt des Vorderteil-Profilplattenabschnitts 110 des jeweiligen Strömungskörpers aufweisen, an den jeweils zwei sich von den Profilenden des jeweiligen Abschnitts des Strömungskörper-Vorderteils 110 aus in der Strömungskörper-Tiefenrichtung B-C erstreckende Funktionsabschnitte der Seitenwandungs-Profilplattenabschnitte 120 oder Seitenwandungs-Profilplattenabschnitte 120 angeschlossen sind.

Das hierin hauptsächlich in Bezug auf ein Seitenleitwerk L beschriebene Strömungskörper-Bauteil 1 oder der hauptsächlich in Bezug auf einen Seitenleitwerk L beschriebene Vorderkantenkörper 23 kann erfindungsgemäß auch zur Anwendung auf andere Strömungskörper wie insbesondere einen Hauptflügel, eine Stellklappe oder einen Hochauftriebskörper vorgesehen oder angepasst werden. Demgemäß können die in Bezug auf ein Seitenleitwerk L beschriebenen einzelnen Merkmale erfindungsgemäß auf die Anwendung als Strömungskörper-Bauteil 1 anderer Strömungskörper übertragen, d.h. angepasst werden.

In der Ausführungsform des Strömungskörper-Bauteils 1 eines Seitenleitwerks L, das in der Figur 2c dargestellt ist, ist der Vorderkantenkörper 23 bzw. das Strömungskörper-Bauteil 1 aus drei Abschnitten gebildet, nämlich aus einem ersten Vorderkantenkörper-Funktionsabschnitt 214, einem zweiten Vorderkantenkörper-Funktionsabschnitt 213 und einem dritten Vorderkantenkörper-Funktionsabschnitt 23c. Jeder Vorderkantenkörper-Funktionsabschnitt 214, 213, 23c weist jeweils einen Vorderteil-Profilplattenabschnitt 110a, 110b und zwei daran angschlosssene und einander gegenüber liegende und entgegen gesetzt zueinander gekrümmte Seitenwandungs-Profilplattenabschnitte 120a-1, 120a-2 bzw. 120b-1, 120b-2 bzw. 120c-1, 120c-2 auf. Unterhalb des ersten Vorderkantenkörper-Funktionsabschnitt 214 ist ein erstes Vorderkantenkörper-Basisteil 241a und oberhalb des ersten Vorderkantenkörper-Funktionsabschnitt 214 ist ein Vorderkantenkörper-Oberteil 241b angeordnet, die entlang der Seitenleitwerk-Spannweitenrichtung S-L gesehen die beiden Enden des Vorderkantenkörper 23 bilden. Das Vorderkantenkörper-Basisteil 241a, die Vorderkantenkörper-Funktionsabschnitte 214, 213, 23c sowie das Vorderkantenkörper-Oberteil 241b bilden ein insbesondere in der Spannweitenrichtung des Höhenleitwerks HS gesehen einheitliches aerodynamisches Teil-Profil, das vor dem Grundkörper 22 angeordnet ist. Generell ist am vorderen Ende des Strömungskörpers das Strömungskörper-Bauteil 1 angeordnet, ein für Fluid durchlässiger Vorderteil-Profilplattenabschnitt 110 und zwei sich jeweils von den Profilenden des Strömungskörper-Vorderteils 110 aus in der Strömungskörper-Tiefenrichtung B-C erstreckende Seitenwandungs-Profilplattenabschnitte 120 aufweist. Von dem Vorderteil-Profilplattenabschnitt 110 und von den Seitenwandungs-Profilplattenabschnitten 120 kann in der Spannweitenrichtung des Strömungskörpers gesehen auch nur aus jeweils einem oder zumindest einem Vorderteil-Profilplattenabschnitt 110 bzw. Seitenwandungs-Profilplattenabschnitte 120 gebildet sein.

In den Darstellungen der Figuren 3 bis 6 ist ersichtlich, dass bei der dargestellten Ausführungsform wegen der kontinuierlichen Verkleinerung des Querschnitts des Vorderkantenkörpers 23 in der Spannweitenrichtung S-L die lokale Dicke des Vorderkantenkörpers 23 kontinuierlich abnimmt. Auf diese Weise wird eine gewichtsoptimierte Bauweise erreicht. In analoger Weise kann vorgesehen sein, dass in der Spannweitenrichtung einer Stellklappe oder eine Hochauftriebskörpers oder eines Hauptflügels, und zwar in der Richtung vom Flugzeug-Längsachse X nach außen oder zur Flügelspitze die lokale Dicke einem an diesen jeweils vorgesehenen Vorderkantenkörpers 23 kontinuierlich abnimmt.

Generell weist der erfindungsgemäße Profilplattenabschnitt 120 insbesondere auf:
▪ ein zumindest abschnittsweise erstes Profilplattenpaneel 121, an der beim bestimmungsgemäßen Einsatz des Profilplattenabschnitts 120 eine Strömung anliegt, wobei das erste Profilplattenpaneel 121 für Fluid derart durchlässig ausgebildet ist, dass Fluid bereichsweise durch dieses hindurchströmen kann,
▪ ein sich zumindest abschnittsweise entlang des ersten Profilplattenpaneels 121 erstreckendes und in einer lokalen Profilplatten-Dickenrichtung T- von diesem beabstandetes zweites Profilplattenpaneel 122,
▪ eine Versteifungsvorrichtung 150 zur Abstützung des ersten Profilplattenpaneels 121 und des zweiten Profilplattenpaneels 122 aneinander.

Die Figur 7 zeigt eine mit dem Bezugszeichen 200 bezeichnete Ausführungsform des erfindungsgemäßen Strömungskörper-Bauteils 1 in der Anwendung als Vorderkantenkörper 23 eines Seitenleitwerks. Der Vorderkantenkörper 23 bzw. das Strömungskörper-Bauteil 1 weist einen Vorderteil-Profilplattenabschnitt 210 und seitlich daran anschließende und entlang zueinander verlaufende Seitenwandungs-Profilplattenabschnitte 220-1, 220-2 auf. Sowohl der Vorderteil-Profilplattenabschnitt 210 als auch die Seitenwandungs-Profilplattenabschnitte 220-1, 220-2 sind jeweils als Profilplattenabschnitt 120 gebildet. Der Vorderteil-Profilplattenabschnitt 210 ist also ein Nasenabschnitt des Vorderkantenkörpers 23 bzw. des Strömungskörper-Bauteils 1, also eines Strukturbauteils.

Der Vorderteil-Profilplattenabschnitt 210 und die seitlich daran anschließenden Seitenwandungs-Profilplattenabschnitte 220-1, 220-2 sind jeweils aus einem äußeren oder ersten äußeren Profilplattenpaneel 211 bzw. 221-1 bzw. 221-2 und einem zweiten inneren Profilplattenpaneel 212 bzw. 222-1 bzw. 222-2 sowie aus einer zwischen den jeweiligen ersten und zweiten Profilplattenpaneelen gelegenen Zwischenschicht 253 bzw. 251 bzw. 252 vorzugsweise aus Metallschaum gebildet. Die äußeren oder ersten äußeren Profilplattenpaneele 211 bzw. 221-1 bzw. 221-2 sind dabei generell die an der Außenseite des jeweiligen Strömungskörper-Bauteils gelegenen Paneele, also diejenigen Paneele, an denen die Strömung, die das Strömungskörper-Bauteil umströmt, anliegt.

Somit ist das Vorderteil-Profilplattenabschnitt 210 und jeder der Seitenwandungs-Profilplattenabschnitte 220-1, 220-2 jeweils als erfindungsgemäßer Profilplattenabschnitt 120 ausgebildet, das insbesondere aufweist:
▪ ein zumindest abschnittsweise erstes Profilplattenpaneel 121 oder 211 bzw. 221-1 bzw. 221-2, an der beim bestimmungsgemäßen Einsatz des Profilplattenabschnitts 120 eine Strömung anliegt, wobei das erste Profilplattenpaneel für Fluid derart durchlässig ausgebildet ist, dass Fluid bereichsweise durch dieses hindurchströmen kann,
▪ ein sich zumindest abschnittsweise entlang des ersten Profilplattenpaneels 121 oder 211 bzw. 221-1 bzw. 221-2 erstreckendes und in einer lokalen Profilplatten-Dickenrichtung P-T von diesem beabstandetes zweites Profilplattenpaneel 122 oder 212 bzw. 222-1 bzw. 222-2,
▪ eine Versteifungsvorrichtung 150 in Form einer zwischen den jeweiligen ersten und zweiten Profilplattenpaneelen gelegenen Zwischenschicht 253 bzw. 251 bzw. 252 zur gegenseitigen Abstützung des jeweils ersten Profilplattenpaneels 121 oder 211 bzw. 221-1 bzw. 221-2 und des zweiten Profilplattenpaneels 122 oder 212 bzw. 222-1 bzw. 222-2.

Bei den erfindungsgemäßen Ausführungsformen eines Strömungskörper-Bauteils 1 in seiner Realisierung als vorderer Teil eines Strömungskörpers mit einer Profiltiefe PT für ein Flugzeug oder ein Flugzeugbauteil an einem Leitwerk oder einem Flügel erstreckt sich der Vorderteil-Profilplattenabschnitt 210 in der Tiefenrichtung T-L oder T-HS bzw. T-H des jeweiligen Bauteils gesehen bis zu einer Stelle, die bevorzugt bei 3 bis 5 % und generell bei 3 % bis 8 % der gesamten Profiltiefe PT des jeweiligen Bauteils von dessen vorderem Ende aus gesehen liegt. Diese Maßzahl kann insbesondere für jede hierin beschriebene Ausfürhungsform eines Strömungskörper-Bauteils 1 gelten und gilt für jede spannweitige Stelle des jeweiligen Bauteils, von der die lokale Profiltiefe PT des jeweiligen Bauteils abhängig ist. Weiterhin erstrecken sich generell die Seitenwandungs-Profilplattenabschnitte 220-1, 220-2 bei den erfindungsgemäßen Ausführungsformen bevorzugt bis zu einer Stelle, die bevorzugt bei 15 % bis 25 % und insbesondere bei 15 % bis 20 % der gesamten Profiltiefe PT des jeweiligen Bauteils von dessen vorderem Ende aus gesehen liegt.

In der Ausführungsform der Profilplattenabschnitte 220-1, 220-2, 210 ist die Versteifungsvorrichtung 150 als Zwischenschicht 251 bzw. 252 bzw. 253 gebildet.

Generell können die Profilplattenpaneele des erfindungsgemäßen Profilplattenabschnitts 120, ob dieses mit einer Zwischenschicht wie in der Figur 7 dargestellt oder nicht, jeweils in verschiedener Weise, z.B. als mit Löchern und insbesondere mit Mikrolöchern oder Mikroperforationen versehenes Paneel oder als Geflecht oder Geflecht-Anordnung (Figuren 13, 14) ausgeführtes Paneel ausgeführt sein.

Nach einer Ausführungsform des in der Figur 7 dargestellten Strömungskörper-Bauteils 1 ist die Versteifungsvorrichtung 150 der Seitenwandungs-Profilplattenabschnitte 220-1, 220-2 und des Vorderteil-Profilplattenabschnitts 210 als eine zwischen den Paneelen gelegenen Zwischenschicht ausgeführt, die flächig wenigstens mit dem jeweils ersten Paneel 211 bzw. 211-1 bzw. 211-2 verbunden ist. Alternativ dazu kann die Versteifungsvorrichtung 150 nur einer oder mehrere der Profilplattenabschnitte 210 oder 220-1 oder 220-2 als eine zwischen den Paneelen gelegenen Zwischenschicht ausgeführt sein.

Nach einer bevorzugten Ausführungsform der Erfindung ist bei der Ausführung der Profilplattenabschnitte 210, 220-1, 220-2 mit einer Zwischenschicht 253 bzw. 251 bzw. 252 das jeweils äußere oder erste Profilplattenpaneel 211 bzw. 221-1 bzw. 221-2 als Geflecht oder Geflecht-Anordnung ausgeführt. Die Zwischenschicht liegt an dem jeweiligen äußeren oder ersten äußeren Profilplattenpaneel 211 bzw. 221-1 bzw. 221-2 flächig an.

An der inneren Seite B der Profilplattenabschnitte 210 bzw. 220-1 bzw. 220-2 sind Öffnungsvorrichtungen 260 vorgesehen, so dass Fluid bzw. Luft, das bzw. die von der Außenseite oder Strömungsseite A durch die äußeren oder ersten äußeren Profilplattenpaneel 211 bzw. 221-1 bzw. 221-2 in die Profilplattenabschnitte 210 bzw. 220-1 bzw. 220-2 einströmt an der Innenseite B aus diesen ausströmen kann. In den inneren oder zweiten Profilplattenpaneelen 212 bzw. 222-1 bzw. 222-2 sind hierzu Öffnungen 261 vorgesehen (Figur 8).

Zusätzlich können die Öffnungsvorrichtungen 260 in dem an der Innenseite B gelegenen Bereich, also an der dieser zugewandten Seite der Zwischenschicht 253 bzw. 251 bzw. 252 in diese in vorbestimmten Abständen Ausnehmungen 265 gebildet sein, die mit denen sich die Zwischenschicht zur inneren Seite B des Strömungskörper-Bauteils 1 hin öffnet Figuren 9 bis 11). In diesem Fall ist wenigstens eine der Öffnungen 261 des inneren Profilplattenpaneels 212 bzw. 222-1 bzw. 222-2 in der Längserstreckung der inneren Profilplattenpaneel 212 bzw. 222-1 bzw. 222-2 gesehen über einer jeweiligen Ausnehmung 261 gelegen, so dass das in der Dickenrichtung P-T durch die Ausnehmungen 261 strömende Fluid durch eine jeweilige Öffnung 261 zur Innenseite B gelangen kann.

Bei einer entsprechenden Ausbildung der Schaumkernschicht 150 mit ausreichender Festigkeit kann der Profilplattenabschnitt 120 oder der Profilplattenabschnitt 210 oder 220-1 oder 220-2 auch ohne ein inneres oder zweites Profilplattenpaneel 212 bzw. 222-1 bzw. 222-2 ausgebildet sein, wobei die Zwischenschicht 253 bzw. 251 bzw. 252 Ausnehmungen 265 nach der Erfindung aufweist.

Bei einer Ausbildung des Profilplattenabschnitts 120 und/oder der Profilplattenabschnitte 210 oder 220-1 oder 220-2 mit einem Schaumkernschicht 150 kann insbesondere vorgesehen sein, dass in diesen für Fluid undurchlässig ausgeführte Stützstege (in der Figur 7 nicht dargestellt; in der Figur 26 für einen Vorderteil-Profilplattenabschnitt dargestellt) eingebracht sind, die zwischen den jeweiligen Paneelen 211 und 212 bzw. 221-1 und 222-1 bzw. 222-1 und 222-2 gelegen sind und diese miteinander verbinden. Die Stützstege erstrecken sich in oder entlang der Spannweitenrichtung P-S, so dass sich zwischen diesen innerhalb der jeweils entlang zueinander verlaufenden Paneele sich in ihrer Längsrichtung entlang der Spannweitenrichtung P-S erstreckende Kammern bilden, so dass darin ausgenommenes Fluid sich nicht in der Längsrichtung P-L über diese hinaus verteilen kann.

An Hand der Figuren 8 bis 12 werden nachfolgend verschiedene Ausführungsformen der Öffnungsvorrichtungen 260 bzw. Ausnehmungen 261 beispielartig für den Profilplattenabschnitt 220-2 generell für einen erfindungsgemäßen mit einer Zwischenschicht gebildeten Profilplattenabschnitt 120 zur Verwendung als Außenwandung eines Strömungskörper-Bauteils 1 genauer beschrieben:
▪ Figur 8 zeigt einen Ausschnitt einer ersten Ausführungsform des Seitenwandungs-Profilplattenabschnitts 220-2 mit einer Schaumkern-Zwischenschicht 253 bzw. 251 bzw. 252 und insbesondere einer Metallschaumkern-Zwischenschicht, wobei das innere oder zweite Profilplattenpaneel 212 bzw. 222-1 bzw. 222-2 Öffnungen 261 zum Durchlassen von durch den Seitenwandungs-Profilplattenabschnitt strömendes Fluid aufweist,
▪ Figur 9 zeigt einen Ausschnitt einer zweiten Ausführungsform des Seitenwandungs-Profilplattenabschnitts 220-2, bei der gegenüber der in der Figur 8 gezeigten Ausführungsform die Zwischenschicht 253 bzw. 251 bzw. 252 insbesondere in Form einer Schaumkern-Zwischenschicht und insbesondere einer Metallschaumkern-Zwischenschicht eine Ausnehmung 265 mit einer ersten Form aufweist,
▪ Figur 10 zeigt einen Ausschnitt einer dritten Ausführungsform eines Seitenwandungs-Profilplattenabschnitts 20-2, bei der gegenüber der in der Figur 9 gezeigten Ausführungsform die nach innen gerichtete Oberfläche der mit einer Schicht versehen ist,
▪ Figur 11 zeigt einen Ausschnitt einer vierten Ausführungsform eines Seitenwandungs-Profilplattenabschnitts 220-2, bei der gegenüber der in der Figur 9 gezeigten Ausführungsform die Schaumkern-Zwischenschicht die Zwischenschicht 253 bzw. 251 bzw. 252 insbesondere in Form einer Schaumkern-Zwischenschicht eine Ausnehmung 265 mit einer zweiten Form aufweist,
▪ Figur 12 zeigt das innere Profilplattenpaneel 222-2 einer Ausführungsform eines Seitenwandungs-Profilplattenabschnitts 220-2, das in einer Ansicht von der Innenseite oder Innenraum B aus gesehen gezeigt ist und einen von dem Innenraum B dese Strömungskörper-Bauteils 1 aus sichtbaren Oberflächenbereich des inneren Profilplattenpaneels 222-2 mit darin eingebrachten Öffnungen 261 und, mit Strichlinien angedeutet, einer Anordnung von Ausnehmungen 2642a, 2642b, 2642c.

In der Figur 8 ist eine Ausführungsform des Seitenwandungs-Profilplattenabschnitts 220-2 oder des Wandabschnittes als Beispiel eines Profilplattenabschnitts 120 im Querschnitt gezeigt. Von außen nach innen, also in Figur 8 von rechts nach links, baut sich die Sandwichbauweise des Seitenwandungs-Profilplattenabschnitts 220-2 wie folgt auf: Nach einem äußeren Profilplattenpaneel 221-2 oder äußerem Deckblech, welches insbesondere durch ein Geflecht oder eine Geflechtanordnung 142 gebildet sein kann, folgt ein Schaumkern 252, der insbesondere als Metallschaumkern oder auch als offenporiger, d.h. poröser Metallschaumkern vorzugsweise aus einer Titanlegierung oder einer Legierung auf Nickel-Eisen-Basis, so wobei der Schaumkern oder der Metallschaumkern insbesondere aus korrosionsfestem Material gebildet sein kann. Nach innen wird der Wandabschnitt durch ein inneres oder zweites Profilplattenpaneel 222-2 oder ein inneres Deckblech abgeschlossen, in dem Öffnungen 261 vorhanden sind. In der Figur 8 wie auch in den folgenden Figuren 9 bis 11 sind dabei jeweils nur eine einzelne Öffnung 261 in Form jeweils einer Blende gezeigt, wobei jedoch ein Vielzahl von Öffnungen 261 über das innere oder zweite Profilplattenpaneel 222-2 verteilt sind. Die Ausführungsform der Figur 8 tritt das Fluid durch den Öffnungsquerschnitt der Öffnung 261. Die weiteren Bereiche des porösen Schaumkerns oder Metallschaumkerns 252, die an das innere oder zweite Profilplattenpaneel 222-2 angrenzen, sind dabei für die Abführung von Luftströmung nicht von wesentlicher Bedeutung. Der Öffnungsquerschnitt der Öffnungen 261 bildet somit den Flaschenhals in der Quantität, also den Durchsatz der Absaugung der Luftströmung, welcher nicht beliebig vergrößert werden kann, da ansonsten die mechanische Stabilität des Seitenwandungs-Profilplattenabschnitts 220-2 verringert werden würde.

Zur Verbesserung der Absaugung von Luftströmung unter weitgehender Beibehaltung der mechanischen Stabilität kann, wie in der Figur 9 gezeigt, das in verschiedenen Ausführungsformen geformt sein. Nach dieser Figur 9 ist die Ausnehmung 265 entweder mit einer sphärischen Begrenzungsfläche zum Schaumkern 252 oder porösen Metallschaumkern 252 oder mit einer halbzylinderförmigen Begrenzungsfläche zum porösen Metallschaumkern 252 ausgestattet. In beiden Fällen vergrößert sich der aktive Absaugungsquerschnitt zwischen der Ausnehmung 265 und dem Schaumkern 252 oder porösen Metallschaumkern 252. Im vorliegenden Fall ist der Absaugungsquerschnitt der Ausnehmung 265 ungefähr viermal so groß, jedoch mindestens 1,5-mal so groß wie der Öffnungsquerschnitt der Öffnung 261 im zweiten Profilplattenpaneel 222-2. Auf diese Weise wird der Druckverlust im inneren des Seitenwandungs-Profilplattenabschnitts 220-2 reduziert, so dass bei gleichem Öffnungsquerschnitt der Öffnung 261 im zweiten Profilplattenpaneel 222-2 eine deutlich größere Menge an Luftströmung abgesaugt werden kann. Dabei ist darauf hinzuweisen, dass das Strömen bzw. eine Absaugung von Fluid wie Luft aus dem Schaumkern 252 oder porösen Metallschaumkern 252 der aktive, also der offen zugängliche Strömungs- bzw. Absaugungsquerschnitt des Schaumkerns 252 oder porösen Metallschaumkerns 252 beeinflusst wird.

Die Öffnung 261 kann jeweils eine Öffnungsfläche haben, die geringer ist als die an dieser anliegenden Öffnungsfläche der der Öffnung 261 jeweils zugeordneten Ausnehmung 265. Dies ist insbesondere der Fall, wenn eine Ausnehmung 265 jeweils eine Mehrzahl von Öffnungen 261 abdeckt. Das zweiten Profilplattenpaneel 212 bzw. 222-1 bzw. 222-2 bildet dabei einen Überstand 263 gegenüber dem benachbarten Ende 2642a der Ausnehmung 265. Dadurch kann in dem zugehörigen Bereich des Profilplattenabschnitts der Durchsatz von Fluid verbessert und auch auf einfache Weise eingestellt werden. Auch kann dabei der Aspekt einer effizienten Fertigung des Profilplattenabschnitts 120 oder der Schaumschicht 150 erfüllt werden bei gleichzeitiger Einstellung oder Erreichung einer bestimmten Durchfluss-Eigenschaft des Profilplattenabschnitts 120.

Die in der Figur 10 dargestellte Ausführungsform des Profilplattenabschnitts 210 bzw. 220-1 bzw. 220-2 ist gegenüber der Ausführungsform der Profilplattenabschnitts 210 bzw. 220-1 bzw. 220-2 nach der Figur 9 dahingehend geändert, dass die an der Außenseite 266 oder Kontaktfläche der Ausnehmung 265 mit dem porösen Metallschaumkern 252 eine Verstärkungsschicht oder ein Verstärkungselement 267 vorgesehen ist. Diese Verstärkungsschicht 267 dient der mechanischen Abstützung der Ausnehmung 265, da durch die Ausnehmung 265 eine Schwächung des porösen Metallschaumkerns 252 und damit des Seitenwandungs-Profilplattenabschnitts 220-2 erfolgt. Diese Schwächung wird durch die Verstärkungsschicht 267 mechanisch ausgeglichen.

Die Figur 11 zeigt die Ausführungsform der Ausnehmungen 265 als im Wesentlichen rechteckige Form. Auch diese Ausführungsform ist mit einer Verstärkungsschicht 267 versehbar. Figur 12 zeigt für alle Formen von Ausnehmungen eine Ausführungsform als längliche Nuten, die zueinander im Wesentlichen parallel und zueinander in Längsrichtung versetzt angeordnet sind. In Figur 8 ist dabei gut zu erkennen, dass in jeder Ausnehmung 265 mehr als eine Öffnung 261 angeordnet ist. Auf diese Weise wird einerseits ein Austausch von abgesaugter Luftströmung in Längsrichtung der Nuten möglich, und andererseits der aktive Absaugungsquerschnitt der Ausnehmungen 265 sehr stark vergrößert. In diesen Fällen kann der aktive Absaugungsquerschnitt der Ausnehmungen 265 in vielen Anwendungsfällen ungefähr das 60fache, und generell zwischen dem 5fachen und 100fachen des Öffnungsquerschnittes der Öffnungen 261 in den inneren Deckblechen betragen.

In Bezug auf die Herstellung der Öffnungen in den inneren Deckblechen und den inneren Profilplattenpaneelen kann vorgesehen sein, dass diese in einem flachen Zustand der Profilplattenpaneele, also vor der Herstellung der gewünschten Krümmung der Profilplattenpaneele, in die Profilplattenpaneele eingebracht werden. Die Öffnungen 261 können zum Beispiel durch Laserstrahlbohren oder andere Bohrverfahren, vorzugsweise in das innere Nasenblech 82 in seinem noch flachen Zustand hergestellt sein.

Die beschriebenen Ausführungsformen der Öffnungsvorrichtungen und insbesondere der Öffnungen 261 optional in Verbindung mit Ausnehmungen 265 ist generell anwendbar auf Profilplattenabschnitte 120 oder 210 oder 220-1 oder 220-2, die mit einer Zwischenschicht und insbesondere Schaumschicht oder Schaumkern ausgeführt sind. Die Verbindung zwischen Zwischenschicht und insbesondere Schaumschicht oder Schaumkern oder porösem Metallschaumkern mit dem ersten äußeren Profilplattenpaneel 211 bzw. 221-1 bzw. 221-2 und dem zweiten Profilplattenpaneel 212 bzw. 222-1 bzw. 222-2 kann dabei über Sintern oder Diffusionsschweißen erfolgen.

Bei der Ausführungsform der Figur 7 sind die Seitenwandabschnitte oder Seitenwandungs-Profilplattenabschnitte 220-1, 220-2 integral mit dem Vorderteil-Profilplattenabschnitt 210 in Form eines Nasenabschnitts verbunden. Insbesondere kann dabei die jeweils benachbarten Profilplattenpaneele und die jeweils benachbarten Zwischenschichten 150 ineinander übergehen und insbesondere einteilig ausgeführt sein.

Die Schaumschicht oder der Schaumkern kann insbesondere eine Schaumschicht aus einem Kunststoff und vorzugsweise eine Schaumschicht aus einem metallischen material, also ein Metallschaumschicht sein. Dabei kann die Metallschaumschicht als poröse Metallschaumschicht ausgeführt sein, so dass die Profilplattenabschnitte einen porösen Metallschaumkern 252 bilden.

Dabei kann die Dicke des porösen Metallschaumkerns 252 zwischen den Profilplattenpaneelen entlang der Tiefenrichtung B-C variieren (vgl. Figuren 4 bis 6). So kann der poröse Metallschaumkern 252 im Vorderteil-Profilplattenabschnitt 210 und im vorderen Bereich der Seitenwandungs-Profilplattenabschnitte 220-1, 220-2 eine geringere Dicke aufweisen als in einem hinteren Bereich der Seitenwandungs-Profilplattenabschnitte 220-1, 220-2.

Nach einer Ausführungsform der Profilplattenpaneele für die Seitenwandungs-Profilplattenabschnitte 220-1, 220-2 und/oder für den Vorderteil-Profilplattenabschnitt 210 sind dieser insbesondere bei der Ausbildung der Versteifungsvorrichtung 150 als an den Profilplattenpaneelen angebrachte Zwischenschicht als Geflecht oder Geflechtanordnung 140 zumindest einer Geflechtlage 141 insbesondere aus Metall gebildet. Die Figur 13 zeigt eine perspektivische Darstellung einer Lage 141 eines solchen Geflechts, aus dem das erste oder auch das zweite Profilplattenpaneel des jeweiligen Profilplattenabschnitts 120 gebildet sein kann. Die Figur 14 zeigt eine Querschnittsdarstellung einer Ausführungsform eines Profilplattenpaneels als Geflechtanordnung mit mehreren Geflechtlagen 141a, 141b, 141c, 141d jeweils nach der Figur 13.

Für die Geflechtlage können verschiedenartige Webarten, wie beispielsweise Körpergewebe oder Panzertrassengewebe zum Einsatz kommen. So ist bei der Ausführungsform gemäß Figur 1a im Querschnitt zu erkennen, dass die einzelnen Metalldrähte 144 in unterschiedlichen Ebenen aber nicht ausschließlich innerhalb dieser Ebenen verlaufen. Vielmehr verlaufen den Metalldrähte 144 im Wesentlichen wellenförmig und jeweils in einem Winkel von 90° zueinander versetzt. Damit entsteht ein Geflecht wie es zum Beispiel in Figur 1b in isometrischer Ansicht dargestellt ist. Die einzelnen Metalldrähte 144 verlaufen übereinander und untereinander im Wechsel und verflechten sich auf diese Weise miteinander zu einer mechanisch stabilen Metallgeflechtanordnung 142.

Die Permeabilität dieser Metallgeflechtanordnung 142 ist dabei durch die automatisch im Geflecht entstehenden Abstände zwischen den einzelnen Metalldrähten 44 und den daraus resultierenden Löchern bzw. Poren gegeben. Je nach Dichtheit des Flechtwerkes und der Abstände der einzelnen Metalldrähte 144 zueinander kann auf diese Weise eine höhere oder geringere mechanische Stabilität und auch eine höhere oder geringere Permeabilität eingestellt werden.

Die Metallgeflechtanordnung 140 ist dabei in sich, also die einzelnen Metalldrähte 144 untereinander über Diffusionsschweißen verbunden. Damit sind also einzelnen Lagen der Metallgeflechtanordnung in sich, aber auch die einzelnen Lagen der Metallgeflechtanordnung untereinander über Diffusionsschweißen miteinander verbunden. Durch die Verwendung der Diffusionsschweißmethode werden hier Verbindungen zwischen den Metalldrähten 144 hergestellt, welche einerseits besonders haltbar sind, andererseits auch besonders einfach, nämlich kostengünstig hergestellt werden. Das Diffusionsschweißverfahren wird dabei in einem in den Figur 1a und 1b nicht dargestellten Werkzeug 80°C bei ca. 1000°C und im Bereich zwischen 10 bar bis 85 bar, insbesondere zwischen 20 bar und 60 bar, über mehrere Stunden, zum Beispiel 3 Stunden hinweg ausgeführt. Es sind grundsätzlich verschiedenste Flechtstrukturen denkbar. Zum Beispiel ist es möglich, dass die einzelnen Metalldrähte 44 zueinander um ca. 90 Grad versetzt verlaufen, wie dies in den Figur 13 und 14 dargestellt ist, und jeweils abwechselnd übereinander drüber und untereinander durch verlaufen. So wird über eine Vielzahl von Kontaktstellen der einzelnen Metalldrähte eine hohe mechanische Stabilität geschaffen und gleichzeitig durch die Zwischenräume zwischen den Kontaktstellen und den Metalldrähten 144 ausreichende Öffnungen geschaffen, welche zur gewünschten Permeabilität des oberen Deckbleches führen.

In Figur 7 ist eine Ausführungsform eines erfindungsgemäßen Strömungskörper-Bauteils 1 oder Strukturbauteils im Querschnitt dargestellt, bei dem die Seitenwandungs-Profilplattenabschnitte 220-1, 220-2 mit ihren ersten Enden 225-1 bzw. 225-2 an dem Vorderteil-Profilplattenabschnitt 210 angebracht oder angeschlossen sind oder aufgrund einer einheitlichen Bildung des Vorderteil-Profilplattenabschnitts 210 mit Seitenwandungs-Profilplattenabschnitten in den Vorderteil-Profilplattenabschnitt 210 übergehen. In der dargestellten Ausführungsform des Strömungskörper-Bauteils 1 sind die in Bezug auf die Tiefenrichtung B-C gesehen zweiten Enden 262-1 bzw. 262-2 mittels einer Trennwand 265 miteinander verbunden, so dass sich ein in der Spannweitenrichtung B-S des Strömungskörper-Bauteils 1 erstreckender Fluidkanal 180 ergibt. Bei der dargestellten Ausführungsform ist der Fluidkanal 180 zwischen den Profilplattenabschnitte 210 bzw. 220-1 bzw. 220-2 und der Trennwand 265 gelegen, so dass der gesamten Innenraum B des Strömungskörper-Bauteils 1 für Fluid-Transport zur Verfügung steht. In der Trennwand kann dabei zur Verbesserung der Festigkeit des Strömungskörper-Bauteils 1 gekrümmt ausgeführt sein. Bei der Verwendung des Strömungskörper-Bauteils 1 beispielsweise für das Leitwerk oder den Flügel eines Flugzeuges befindet sich hinter der Trennwand 265, also ist an den jeweiligen Enden 226-1, 226-2 der Seitenwandungs-Profilplattenabschnitte 220-1, 220-2 die Holmanschlusse 70 zur Befestigung des Strömungskörper-Bauteils 1 an einen tragenden Holm des Strömungskörpers. Vorzugsweise hinter der Trennwand 265, also außerhalb des Fluidkanals 180 können Befestigungen und/oder Vorrichtung zur Anbringung und Halterung von elektrischen Leitungen und/oder Hydraulikleitungen vorgesehen sein.

Die Funktionsweise des Strömungskörper-Bauteils 1 zur Laminarisierung einer an diesem oder einem Strömungskörper wirkenden Strömung mit einem solchen Strömungskörper-Bauteil 1 wird im Folgenden an Hand der Ausführungsform des erfindungsgemäßen Strömungskörper-Bauteil 1 nach der Figur beschrieben Generell kann nach der Erfindung vorgesehen sein, dass der Fluidkanal 180 passiv Fluid aufnehmen kann, wenn die Druckverhältnisse im Fluid beim Durchdringen der Profilplattenabschnitte 210 bzw. 220-1 bzw. 220-2 und die Druckverhältnisse innerhalb des Fluidkanals 180 in der Spannweitenrichtung B-S unter Berücksichtigung der bestimmungsgemäß im Außenbereich A des Strömungskörper-Bauteils 1 herrschenden Strömung entsprechend eingestellt sind.

Alternativ dazu kann generell nach der Erfindung vorgesehen sein, dass am Fluidkanal 180 eine Pumpe (nicht dargestellt) angeschlossen ist, die zur Absaugung von Fluid von der Außenseite A zur Innenseite B entsprechend angesteuert oder in Abhängigkeit von Sensorwerten und der Vorgabe von Sollgrößen wie eine Soll-Durchsatz des Fluids durch den Fluidkanal 180 z.B. von einer Fludsteuerungsvorrichtung (nicht dargestellt) geregelt wird.

An der Außenseite des Strukturbauteils 10 liegt eine Luftströmung vor, welche in Figur 7 von oben nach unten strömt. Die Luftströmung trifft also zuerst auf den Vorderteil-Profilplattenabschnitt 210 und teilt sich dort auf. Die geteilte Strömung folgt anschließend den beiden Seitenwandabschnitten oder Profilplattenabschnitten 220-1 bzw. 220-2 zu dem nachfolgenden Bauteil eines Flugzeuges, welche in Figur 7 nicht mehr dargestellt ist. Beim Auftreffen der Luftströmung auf den Vorderteil-Profilplattenabschnitt 210 sowie beim Umströmen der Profilplattenabschnitte 220-1 bzw. 220-2 besteht, je nach Strömungssituation und Strömungsgeschwindigkeit, die Gefahr der Bildung von turbulenten Strömungsbereichen. Dies wird verhindert indem im Fluidkanal 180 ein Unterdruck über eine an diesem zentralen Luftkanal 60 angeschlossene Pumpe angelegt wird. Der Unterdruck pflanzt sich durch die fluidkommunizierende Verbindung des Fluidkanals 180 über die Öffnungen 261 in den inneren Deckblechen 20 der Seitenwandabschnitte und durch den porösen Metallschaumkern 252-1, 252-2, 253 fort und liegt damit an der Innenseite der Metallgeflechtanordnung 140 an. Der dort anliegende Unterdruck saugt Luft durch die Metallgeflechtanordnung 140 und anschließend durch den porösen Metallschaumkern 253, 252-1, 252-2 hindurch und entnimmt damit der Luftströmung an der Außenseite der Seitenwandabschnitte Luft. Auf diese Weise, also durch das Absaugen der Luft von der Außenseite der Profilplattenabschnitte 220-1 bzw. 220-2 wird die Bildung von Turbulenzen verhindert und die Strömung laminarisiert. Die abgesaugte Luft wird über die Öffnungen 261 in den inneren Deckblechen in den Fluidkanal 180 geführt und von dort passiv aufgrund der herrschenden Druckverhältnisse im Fluid und/oder aktiv mittels der Pumpe abtransportiert.

Die abgeführte Luft kann dabei weiteren Systemen eines Flugzeuges, welche der Druckluft bedürfen zugeführt werden. Dies sind zum Beispiel die Klimaanlage der Kabine des Flugzeuges oder andere Strömungsbeeinflussungseinrichtungen, welche Druckluft benötigen. Alternativ kann die abgesaugte Luft über ein Ventil auch über Bord geführt werden.

Neben der Absaugung an den Seitenwandungs-Profilplattenabschnitte 220-1, 220-2 kann bei der Ausführungsform der Figur 7 auch an dem Vorderteil-Profilplattenabschnitt 210 Fluid, also insbesondere Luft aus der Luftströmung abgesaugt werden. Dafür steht der Fluidkanal 180 in direktem fluidkommunizierenden Kontakt mit den Öffnungen 261 in dem äußeren Profilplattenpaneel 211 durch welche über den anliegenden Unterdruck an der Innenseite des äußeren Profilplattenpaneels 211 Luft aus dem porösen Metallschaumkern 252 nach innen gesaugt wird. Auf diese Weise wird im Wesentlichen an der gesamten Außenseite des Strömungskörper-Bauteils 1 Luft in den zentralen Luftkanal 60 gesaugt und damit im Wesentlichen an der gesamten Außenfläche des Strukturbauteils eine Strömungslaminarisierung durchgeführt.

Die in der Figur 15 dargestellte Ausführungsform des erfindungsgemäßen Strömungskörper-Bauteils 1 ist aus einem Vorderteil-Profilplattenabschnitt 310 und den seitlich daran anschließenden Seitenwandungs-Profilplattenabschnitten 320-1, 320-2 gebildet. Die äußeren oder ersten Profilplattenpaneele 311 bzw. 321-1 bzw. 321-2 inneren oder zweiten Profilplattenpaneel 312 bzw. 322-1 bzw. 322-2 sind für Fluid durchlässig ausgeführt. Die entgegengesetzt zu dem Vorderteil-Profilplattenabschnitt 310 gelegenen Enden 326-1 und 326-2 der Seitenwandungs-Profilplattenabschnitte 320-1 bzw. 320-2 sind durch eine Trennwand 365 zur Ausbildung eines Fluidkanals 380 mit der beschriebenen Funktionalität im Innenraum B des Strömungskörper-Bauteils 1 verbunden. Dabei wird die Strömung der abgesaugten Luft im Fluidkanal 380 wird dort passiv aufgrund der herrschenden Druckverhältnisse im Fluid und/oder aktiv mittels der Pumpe bewirkt.

Die Versteifungsvorrichtung 150 oder 353 bzw. 351 bzw. 352 des Vorderteil-Profilplattenabschnitts 310 und/oder der seitlich daran anschließenden Seitenwandungs-Profilplattenabschnitte 320-1, 320-2 ist aus einer Stützvorrichtung 330 gebildet, die verschiedenartig ausgeführt sein kann.

In der Figur 16 ist eine erste mit dem Bezugszeichen 330a bezeichnete Ausführungsform der Stützvorrichtung 330 gezeigt, die insbesondere in dem Vorderteil-Profilplattenabschnitt 310 und/oder den seitlich daran anschließenden Seitenwandungs-Profilplattenabschnitten 320-1, 320-2 nach der Figur 15 realisiert sein kann. Die Profilplattenpaneele können generell Profilplattenpaneele des Vorderteil-Profilplattenabschnitts 110 bzw. 320-1, 320-2 oder der seitlich daran anschließenden Seitenwandungs-Profilplattenabschnitte 220 bzw. 320-1, 320-2 sein und sind mit den Bezugszeichen 121, 122 bezeichnet. Diese ist aus einer Anzahl von in der Längsrichtung P-L nebeneinander und sich entlang der lokalen Spannweitenrichtung P-S erstreckenden Stützstegen oder Stegplatten 331a gebildet. Die Breitenrichtung der Stützstege 331a im Wesentlichen in der Richtung des kürzesten Abstands zwischen den Kontaktstellen der Stützstege 331a an den Profilplattenpaneelen 121, 122 oder senkrecht und insbesondere in einem Winkel zwischen 80 und 100 Grad zu den Profilplattenpanelen 121 und 122, die sich in der von den Richtungen P-L und P-S aufgespannten Ebene erstrecken. Die Stützstege 331a sind mittels Verbindungsstellen 332, die insbesondere durch Lötverbindungsstellen oder Schweißverbindungsstellen realisiert sein können, an den jeweiligen Profilplattenpaneelen 121, 122 befestigt. Zwischen den Stützstegen 331a und quer zur Längserstreckung derselben oder in der Längsrichtung P-L gesehen bildet sich jeweils ein Zwischenraum 333 aus. In den Stützstegen 331a oder einem Teil der Stützstege 331a ist zumindest eine Öffnung 334 vorgesehen. Bei einer Ausführungsform des Profilplattenpaneels 110, 120 nach der Figur 16 ist in jedem der Stützstege 331a zumindest eine Öffnung 334 vorhanden, so dass bei diesem Ausführungsbeispiel das über die Zwischenräume, die über die Öffnungen 334 miteinander verbunden sind, zwischen den Profilplattenpaneelen 121, 122 in der Längsrichtung P-L strömen kann. Diese Ausführungsform der Versteifungsvorrichtung 150 kann insbesondere bei der Ausführungsform des Strömungskörper-Bauteil 1 nach der Figur 34 zur Bildung der Fluidkanäle 681, 682 angewendet werden.

In der Figur 17 ist eine erste mit dem Bezugszeichen 330a bezeichnete Ausführungsform der Stützvorrichtung 330 gezeigt, die insbesondere in dem Vorderteil-Profilplattenabschnitt 310 und/oder den seitlich daran anschließenden Seitenwandungs-Profilplattenabschnitten 320-1, 320-2 nach der Figur 15 realisiert sein kann. Die Profilplattenpaneele können generell Profilplattenpaneele des Vorderteil-Profilplattenabschnitts 110 bzw. 320-1, 320-2 oder der seitlich daran anschließenden Seitenwandungs-Profilplattenabschnitte 220 bzw. 320-1, 320-2 sein und sind mit den Bezugszeichen 121, 122 bezeichnet. Diese ist aus einer Anzahl von in der Längsrichtung P-L nebeneinander und sich entlang der lokalen Spannweitenrichtung P-S erstreckenden Stützstegen oder Stegplatten 331b gebildet. Die Breitenrichtungen 336b der Stützstege 331b verlaufen winklig zueinander, so dass die Breitenrichtungen 336b zweier nebeneinander gelegener Stützstege 331b an jeweils zueinander benachbarten Enden oder Rändern in der von den Richtungen P-T und P-L aufgespannten Ebene gesehen aufeinander zulaufen. Die Winkel zwischen den Stützstegen 331b und der Längserstreckung der Profilplattenpaneele 121 und 122 an der jeweiligen Stelle kann dabei in der von den Richtungen P-T und P-L aufgespannten Ebene gesehen insbesondere in einem Winkelbereich zwischen 30 und 75 Grad gelegen sein. Die Stützstege 331b sind mittels Verbindungsstellen 332, die insbesondere durch Lötverbindungsstellen oder Schweißverbindungsstellen realisiert sein können, an den jeweiligen Profilplattenpaneelen 121, 122 befestigt, wobei nebeneinander gelegene Stützstege 331b an deren jeweils zueinander benachbarten Enden oder Rändern mittels einer Verbindungsstelle mit dem jeweiligen Profilplattenpaneele 121 und 122 verbunden sein können. Zwischen den Stützstegen 331b und quer zur Längserstreckung derselben oder in der Längsrichtung P-L gesehen bildet sich jeweils ein Zwischenraum 333 aus. In den Stützstegen 331b oder einem Teil der Stützstege 331b ist zumindest eine Öffnung 334 vorgesehen. Bei einer Ausführungsform des Profilplattenpaneels 110, 120 nach der Figur 16 ist in jedem der Stützstege 331b zumindest eine Öffnung 334 vorhanden, so dass bei diesem Ausführungsbeispiel das über die Zwischenräume, die über die Öffnungen 334 miteinander verbunden sind, zwischen den Profilplattenpaneelen 121, 122 in der Längsrichtung P-L strömen kann. Diese Ausführungsform der Versteifungsvorrichtung 150 kann insbesondere bei der Ausführungsform des Strömungskörper-Bauteil 1 nach der Figur 34 zur Bildung der Fluidkanäle 681, 682 angewendet werden.

Bei einer zu der in der Figur 15 dargestellten Ausführungsform alternativen Ausführungsform des Strömungskörper-Bauteils 1 ist Vorderteil-Profilplattenabschnitt 310 wie in der Ausführungsform, die an Hand der Figur 7 beschrieben wurde, gestaltet.

Die in der Figur 18 dargestellte Ausführungsform des erfindungsgemäßen Strömungskörper-Bauteils 1 ist aus einem Vorderteil-Profilplattenabschnitt 410 und den seitlich daran anschließenden Seitenwandungs-Profilplattenabschnitten 420-1, 420-2 gebildet. Die äußeren oder ersten Profilplattenpaneele 411 bzw. 421-1 bzw. 421-2 inneren oder zweiten Profilplattenpaneel 412 bzw. 422-1 bzw. 422-2 sind für Fluid durchlässig ausgeführt. Die einander gegenüber gelegenen Enden des Vorderteil-Profilplattenabschnitts 410 oder, wie es in der Figur 18 dargestellt ist, einander gegenüber gelegene Stellen 428-1, 428-2 oder sich in Spannweitenrichtung erstreckende Abschnitte sind durch eine Trennwand 485 zur Ausbildung eines Fluidkanals 480a im Innenraum B des Strömungskörper-Bauteils 1 zur Abfuhr von Fluid mit der beschriebenen Funktionalität miteinander verbunden. Weiterhin sind die entgegengesetzt zu dem Vorderteil-Profilplattenabschnitt 410 gelegenen Enden 426-1 und 426-2 der Seitenwandungs-Profilplattenabschnitte 420-1 bzw. 420-2 durch eine Trennwand 485 zur Ausbildung eines Fluidkanals 480b mit der beschriebenen Funktionalität im Innenraum B des Strömungskörper-Bauteils 1 verbunden. Somit stellt die Ausführungsform des Strömungskörper-Bauteils 1 zwei Fluidkanäle 480a, 480b bereit. Bei dieser Ausführungsform des Strömungskörper-Bauteils 1 kann eine Fluidströmung über jeden der Fluidkanäle 480a, 480b und unabhängig voneinander dort passiv aufgrund der herrschenden Druckverhältnisse im Fluid und/oder aktiv mittels der Pumpe bewirkt und somit Fluid aus dem Innenraum B des Strömungskörper-Bauteils 1 abgeführt werden. Alternativ kann bei der Ausführungsform des Strömungskörper-Bauteils 1 nach der Figur 18 auch nur ein Fluidkanal, der durch die Trennwand 485 und die Innenwände des Vorderteil-Profilplattenabschnitts 410 und der Seitenwandungs-Profilplattenabschnitte 420-1 bzw. 420-2 gebildet ist. Bei dieser Ausführungsform des Strömungskörper-Bauteils 1 wird die Strömung der abgesaugten Luft in dem Fluidkanal passiv aufgrund der herrschenden Druckverhältnisse im Fluid und/oder aktiv mittels der Pumpe bewirkt.

Die Versteifungsvorrichtung 150 oder 453 bzw. 451 bzw. 452 des Vorderteil-Profilplattenabschnitts 410 und/oder der seitlich daran anschließenden Seitenwandungs-Profilplattenabschnitte 420-1, 420-2 ist aus einer Vielzahl von Wandungsabschnitten oder Stützstegen 471 oder einer Stützvorrichtung gebildet, die verschiedenartig ausgeführt sein kann, und generell als Sand.

In den Figuren 19 und 20 ist beispielartig die in dem zweiten Seitenwandungs-Profilplattenabschnitt 420-2 realisierte und mit dem Bezugszeichen 452 bezeichnete Ausführungsform der Stützvorrichtung gezeigt. Eine gleichartige Stützvorrichtung ist in dem zweiten Seitenwandungs-Profilplattenabschnitt 420-2 realisiert. Die Wandungsabschnitte oder Stützstege 471 sind dabei, wie in der Figur 19 in Verbindung mit der Figur 20 gezeigt, derart angeordnet, dass deren Profillinien in der von der Längsrichtung und Spannweitenrichtung aufgespannten Ebene des Seitenwandungs-Profilplattenabschnitts 420-2 eine Wabenanordnung ergeben. Jeder Wabe dieser Anordnung bildet dabei eine Profilplattenkammer 472, deren wabenförmiger Querschnitt sich im sich in der von der Längsrichtung P-L und Spannweitenrichtung P-S aufgespannten Ebene ergibt. Nach einer Ausführungsform der Stützvorrichtung 452 ist vorgesehen, dass einige oder sämtliche der Wandungsabschnitt 471 für Fluid durchlässig ausgeführt sind. Zu diesem Zweck kann der jeweilige Wandungsabschnitt 471 eine oder mehrere Öffnungen 473 aufweisen.

Weiterhin kann das jeweilige innere oder zweite Profilplattenpaneel 422-1 bzw. 422-2 Öffnungen 461 (Figuren 23 und 24) aufweisen, so dass Fluid von der Außenseite A durch das äußere oder erste Profilplattenpaneel 421-1 bzw. 421-2 in die von der Stützvorrichtung gebildeten wabenförmigen Profilplattenkammern 472 einströmen und durch das innere oder zweite Profilplattenpaneel 422-1 bzw. 422-2 ausströmen und in den Strömungskanal 480b einströmen kann.

Alternativ dazu kann vorgesehen sein, dass das jeweilige innere oder zweite Profilplattenpaneel 422-1 bzw. 422-2 für Fluid nicht durchlässig und dabei wenigstens ein Teil der Wandungsabschnitte 471 der Stützvorrichtung für Fluid derart durchlässig ausgeführt ist, dass durch das äußere Profilplattenpaneel 421-1 bzw. 421-2 in die Profilplattenkammern 472 eingeströmtes Fluid zwischen dem jeweiligen äußeren und inneren Profilplattenpaneel 421-1 bzw. 422-1 und 421-1 bzw. 421-2 entgegen der Längsrichtung P-L nach vorne und in den Fluidkanal 480a strömen kann. Bei dieser Ausführungsform ist der Fluidkanal 480b nicht notwendiger Bestandteil des Strömungskörper-Bauteils 1, dass das Fluid in den Fluidkanal 480a strömen kann. Dabei muss jedoch vorgesehen sein, dass wenigstens für Fluid durchlässige Wandungsabschnitte 471 der Stützvorrichtung in Anzahl und ihrer Position derart bestimmt sind, dass ein Durchströmen von Fluid zwischen dem jeweiligen äußeren und inneren Profilplattenpaneel 421-1 bzw. 422-1 und 421-1 bzw. 421-2 in den Fluidkanal 480a möglich ist.

Nach einer in den Figuren 21 und 22 dargestellten erfindungsgemäßen Ausführungsform ist der Vorderteil-Profilplattenabschnitt 410 des Strömungskörper-Bauteils 1 ebenfalls mit einer Versteifungs- oder Stützvorrichtung 453a mit Wandungsabschnitten oder Stützstegen oder Versteifungsstege 471a gebildet, die derart angeordnet sind, dass deren Profillinien in der von der Längsrichtung und Spannweitenrichtung aufgespannten Ebene des Vorderteil-Profilplattenabschnitts 410 eine Wabenanordnung ergeben. Jede Wabe dieser Anordnung bildet dabei eine Profilplattenkammer 472a, deren wabenförmiger Querschnitt sich im sich in der von der Längsrichtung P-L und Spannweitenrichtung P-S aufgespannten Ebene ergibt. In der von der Längsrichtung P-L und Spannweitenrichtung P-S aufgespannten Ebene gesehen innerhalb wenigstens einiger der Waben ist eine Öffnung 461 (Figur 24) im inneren Profilplattenpaneel 412 bzw. 122 vorgesehen, so dass in den Vorderteil-Profilplattenabschnitt 410 durch das für Fluid durchlässige äußere oder erste Profilplattenpaneel 411 einströmende Fluid durch das innere oder zweite Profilplattenpaneel 412 aus dem Vorderteil-Profilplattenabschnitt 410 ausströmen und in den Fluidkanal 480a oder bei Nicht-Vorhandensein der Trennwand 488 den gemeinasmen Fluidkanal 480a und 480b einströmen kann.

Bei einer bevorzugten Ausführungsform eines solchen Vorderteil-Profilplattenabschnitts 410 sind Wandungsabschnitte oder Stützstege oder Versteifungsstege 471a, die quer zur Längsrichtung P-L verlaufen, nicht für Fluid durchlässig und z.B. ohne Öffnungen 473a ausgeführt. Dadurch ergeben sich aneinander anschließende nicht für Fluid durchlässige Wandungsabschnitte 471a, die zusammen eine Trennwand 477a bilden. Unter "quer zur Längsrichtung P-L verlaufend" sollen hierbei vorzugsweise Wandungsabschnitte definiert sein, deren Längsrichtungen mit der Längsrichtung L-P einen Winkel von mehr als 45 Grad einschließen, wobei für diese Winkelbestimmung der kleinere der beiden Scheitelwinkel gemeint ist, die beim Schneiden der Längsrichtungen der Wandungsabschnitte mit der Längsrichtung L-P entstehen. Dabei unter den "Längsrichtungen der plattenförmigen Wandungsabschnitte" die jeweilige Längsersteckung derjenigen Profilquerschnittsflächen der plattenförmigen Wandungsabschnitte zu verstehen, die sich jeweils als Querschnitte in einer Schnittebene, die von der Längsrichtung P-L und Spannweitenrichtung P-S aufgespannt wird, ergeben.

Nach einer Ausführungsform eines solchen Vorderteil-Profilplattenabschnitts 410 kann sich die nicht für Fluid durchlässige Trennwand 477a über wenigstens zwei wabenförmige Profilplattenkammern 472a erstrecken und zusammen mit einer solchen im Wesentlichen parallel zu dieser verlaufenden weiteren nicht für Fluid durchlässigen Tennwand 477a einen sich quer zur Längsrichtung P-L erstreckenden Profilplattenkammer-Bereich 478a bilden. Dieser kann an den Enden in der Spannweitenrichtung P-S jeweils durch wenigstens einen nicht für Fluid durchlässigen Wandungsabschnitt 479a begrenzt sein. Auch kann der Profilplattenkammer-Bereich 478a zumindest auf einer Seite in Bezug auf die Spannweitenrichtung P-S durch eine Seitenwandung des Vorderteil-Profilplattenabschnitts 410 begrenzt sein. Weiterhin kann der Profilplattenkammer-Bereich 478a in Bezug auf beide Enden in Bezug auf die Spannweitenrichtung P-S durch eine Seitenwandung des Vorderteil-Profilplattenabschnitts 410 begrenzt sein. Durch die mittels der Trennwände gebildeten Profilplattenkammer-Bereiche 478a, die sich in der Spannweitenrichtung P-S erstrecken und wenigstens abschnittsweise quer zur Längsrichtung P-L verlaufen, kann Fluid nur zwischen jeweils zwei benachbarten Trennwänden 477a, aber nicht in der Längsrichtung P-L über diese jeweils hinaus strömen.

Durch die Ausbildung von Profilplattenkammer-Bereichen 478a im Vorderteil-Profilplattenabschnitt 410 wird eine für die Absaugung von Fluid aus der am Vorderteil-Profilplattenabschnitt 410 anliegenden oder auf diesem auftreffenden Strömung vorteilhafte Steuerung der Fluidströmung innerhalb des Vorderteil-Profilplattenabschnitts 410 und somit ein effizientes Absaugen durch das Strömungskörper-Bauteil 1 insgesamt erreicht.

Zu diesem Zeck kann alternativ zur voranstehend beschriebenen Ausführungsform eine weitere Ausführungsform der Stützvorrichtung 453a im Vorderteil-Profilplattenabschnitt 410 realisiert sein, bei der die Profilplattenkammer-Bereiche 478a durch Wandungsabschnitte oder Stützstege oder Versteifungsstege 471a, die quer zur Spannweitenrichtung P-S verlaufen, nicht für Fluid durchlässig und z.B. ohne Öffnungen 473a ausgeführt sind, sich über mehrere Profilplattenkammern oder Waben 472a in der Längsrichtung P-L erstrecken und wenigstens abschnittsweise quer zur Spannweitenrichtung P-S verlaufen, so dass Fluid nicht in der Spannweitenrichtung P-S über jeweils zwei benachbarte Trennwände 477a hinaus strömen kann. Je nach dem Anwendungsfall kann sich auch mit einem derart ausgeführten Vorderteil-Profilplattenabschnitt 410 ein effizientes Absaugen von Fluid von der Außenseite A erreichen.

Alternativ kann der Vorderteil-Profilplattenabschnitt 410 des in der Figur 18 dargestellten Strömungskörper-Bauteils 1 mit einer Versteifungsvorrichtung 150 bzw. 453c nach der Figur 25 ausgeführt sein. Dabei sind die Wandungsabschnitte oder Stützstege oder Versteifungsstege 471c derart gestaltet, dass eine Draufsicht auf einen Querschnitt eines Ausschnitts Profilplattenabschnitts in der von der Längsrichtung und Spannweitenrichtung aufgespannten Ebene desselben, eine Anordnung von rechteckförmigen Kammern 472c ergeben. Insbesondere können die Ecken auf diese Weise abgerundet sind, wie in der Figur 25 dargestellt ist, was strömungstechnisch günstig ist. Die Öffnungen in den Wandungsabschnitten oder Stützstegen 471c können dabei wie bei dem Ausführungsbeispiele vorgesehen sein, dass hierin an Hand der Figur 21 beschrieben ist.

Alternativ kann Vorderteil-Profilplattenabschnitt 110 bzw. 410 und/oder ein Seitenwandungs-Profilplattenabschnitts 120 insbesondere des in der Figur 18 dargestellten Strömungskörper-Bauteils 1 mit einer Versteifungsvorrichtung 150 bzw. 453b nach der Figur 25a ausgeführt sein. Dabei sind jeweils nebeneinander gelegene Wandungsabschnitte oder Stützstege oder Versteifungsstege 471b mit einem Abstand d25 derart voneinander beabstandet, dass sich keine Kammern ergeben. Die Versteifungsstege 471b sind mit den Vorderteil-Profilplattenpaneelen 111, 112 bzw. Seitenwandungs-Profilplattenpaneelen 121, 122, zwsichen denen diese verlaufen, fest verbunden. Diese Versteifungsstege 471b können bei allen Ausführungsformen Profilplattenabschnitten .

Alternativ kann der Vorderteil-Profilplattenabschnitt 410 des in der Figur 18 dargestellten Strömungskörper-Bauteils 1 mit einer Versteifungsvorrichtung 150 bzw. 453c nach der Figur 26 ausgeführt sein. Dabei sind die Wandungsabschnitte oder Stützstege 471c derart gestaltet, dass eine Draufsicht auf einen Querschnitt eines Ausschnitts Profilplattenabschnitts in der von der Längsrichtung und Spannweitenrichtung aufgespannten Ebene desselben, eine schuppenförmige Anordnung von Kammern oder eine Anordnung von tropfenförmigen Kammern 472d ergeben. Auch bei dieser Ausführungsform sind im gezeigten Querschnitt keine Ecken vorhanden sondern die Wandungen an jeder Stelle abgerundet, was strömungstechnisch günstig ist.Die Öffnungen in den Wandungsabschnitten oder Stützstegen 471d können dabei wie bei dem Ausführungsbeispiele vorgesehen sein, das hierin an Hand der Figur 21 beschrieben ist.

An Hand der Figuren 19 bis 26 ist dargestellt, dass wenigstens abschnittsweise Stützstege 331a, 331b, 471b, 471c, 471d quer zu einer Längsrichtung P-L und entlang der Spannweitenrichtung P-S des Profilplattenabschnitt 120 entlang zueinander erstrecken, die in einer Querschnittsebene, die sich entlang der Längserstreckung des Profilplattenabschnitt 120 erstreckt, einen gekrümmten Verlauf haben oder aus winklig zueinander verlaufenden und aneinander anschließenden Wandungsabschnitten gebildet ist.

Nach einer weiteren Alternative kann der Vorderteil-Profilplattenabschnitt 410 des in der Figur 18 dargestellten Strömungskörper-Bauteils 1 mit einer Versteifungsvorrichtung 150 bzw. 453c nach der Figur 27 ausgeführt sein. Dabei erstrecken sich die Wandungsabschnitte oder Stützstege 471e in der Spannweitenrichtung P-S des Vorderteil-Profilplattenabschnitts 410, so dass sich zwischen diesen sich ebenfalls in der Spannweitenrichtung P-S erstreckende Profilplattenkammern 472e ausbilden.

Insbesondere können mehrere in der Spannweitenrichtung P-S nebeneinander gelegene Profilplattenkammern 472e einen Profilplattenkammer-Bereich 478b bilden, wenn die die entsprechenden sich quer zur Spannweitenrichtung P-S erstreckenden und innerhalb des Profilplattenkammer-Bereichs 478e gelegenen Wandungsabschnitte oder Stützstege 471e für Fluid undurchlässig sind. Die Profilplattenkammer-Bereiche 478e können jeweils an den Enden in der Spannweitenrichtung P-S jeweils durch wenigstens einen nicht für Fluid durchlässigen Wandungsabschnitt begrenzt sein. Auch kann der Profilplattenkammer-Bereich 478b zumindest auf einer Seite in Bezug auf die Spannweitenrichtung P-S durch eine Seitenwandung des Vorderteil-Profilplattenabschnitts 410 begrenzt sein. Weiterhin kann der Profilplattenkammer-Bereich 478e in Bezug auf beide Enden in Bezug auf die Spannweitenrichtung P-S durch eine Seitenwandung des Vorderteil-Profilplattenabschnitts 410 begrenzt sein. Durch diese Anordnung von Wandungsabschnitte oder Stützstege 471b sind die Profilplattenkammern 472e bzw. Profilplattenkammer-Bereiche 478e im Wesentlichen rechteck-förmig gebildet.

Durch die mittels der Trennwände gebildeten Profilplattenkammern 472e oder Profilplattenkammer-Bereiche 478e, die sich in der Spannweitenrichtung P-S erstrecken und wenigstens abschnittsweise quer zur Längsrichtung P-L verlaufen, kann Fluid nur zwischen jeweils zwei benachbarten und sich in der Spannweitenrichtung P-S erstreckenden Wandungsabschnitten 471e, aber nicht in der Längsrichtung P-L über diese jeweils hinaus strömen. Über Öffnungen 461b in dem inneren oder zweiten Profilplattenpaneel 412 kann Fluid vom der Außenseite A in den Innenraum B strömen.

Alternativ zu der beschriebenen Ausführungsform nach der Figur 25 kann diese auch derart modifiziert realisiert sein, dass sich die Wandungsabschnitte oder Stützstege 471e in der Längsrichtung P-L des Vorderteil-Profilplattenabschnitts 410 erstrecken, so dass sich zwischen diesen sich ebenfalls in der Längsrichtung P-L erstreckende Profilplattenkammern 472e ausbilden. Durch diese in der Längsrichtung P-L verlaufende Wandungsabschnitte oder Stützstege 471e bilden sich Profilplattenkammern 472e oder Profilplattenkammer-Bereiche 478e aus, die sich in der in der Längsrichtung P-L erstrecken und wenigstens abschnittsweise quer zur Spannweitenrichtung P-S verlaufen, kann Fluid nur zwischen jeweils zwei benachbarten und sich in der Längsrichtung P-L erstreckenden Wandungsabschnitten 471e, aber nicht in der Spannweitenrichtung P-S über diese jeweils hinaus strömen. Über Öffnungen 461e in dem inneren oder zweiten Profilplattenpaneel 412 kann Fluid vom der Außenseite A in den Innenraum B strömen.

Alternativ kann der Vorderteil-Profilplattenabschnitt 410 des in der Figur 18 dargestellten Strömungskörper-Bauteils 1 mit einer Versteifungsvorrichtung 150 bzw. 453c nach der Figur 28 ausgeführt sein. Dabei ist die Versteifungsvorrichtung 150 bzw. 453c derart gestaltet, dass deren Wandungsabschnitte oder Stützstege 471e in der von der Längsrichtung und Dickenrichtung aufgespannten Ebene des Profilplattenabschnitts zusammen mit den Profilplattenpaneelen 121, 122 ein Fachwerk bilden. Zwischen den Stützstege 471e und den jeweiligen den Profilplattenpaneelen 121, 122 bilden sich Profilplattenkammern 472e aus, die in ihrer Breite von den Stützstegen 471e begrenzt werden und sich wie diese in ihrer Länge entlang der Spannweitenrichtung P-S erstrecken.

Die Profilplattenkammern können vorteilhafterweise insbesondere eine größte Breite in der Spannweitenrichtung P-S des Strömungskörper-Bauteils gesehen zwischen 0,3 % und 0,6 % der Profiltiefe PT des Strömungskörpers an dieser Stelle sein, an der der jeweilige Strömungskörper-Bauteil angeordnet ist.

Weiterhin können die Profilplattenkammern vorteilhafterweise insbesondere eine größte Länge in der Längsrichtung P-L des Strömungskörper-Bauteils gesehen zwischen 0,3 % und 3 % der Profiltiefe PT des Strömungskörpers an dieser Stelle sein, an der der jeweilige Strömungskörper-Bauteil angeordnet ist.

Nach der Ausführungsform des Profilplattenabschnitts 120 nach der Figur 28 kann der Vorderteil-Profilplattenabschnitt 410 und/oder jeder der Seitenwandungs-Profilplattenabschnitte 220-1, 220-2 der Ausführungsform des Strömungskörper-Bauteil 1 nach der Figur 18 gebildet sein.

Die Versteifungsvorrichtung der Vorderteil-Profilplattenabschnitt 410 bzw. der seitlich daran anschließenden Seitenwandungs-Profilplattenabschnitte 420-1, 420-2 kann jeweils auch in anderer Weise ausgeführt sein.

Die äußeren oder ersten Profilplattenpaneele 411 und 421-1 bzw. 421-2 der Vorderteil-Profilplattenabschnitt 410 bzw. der seitlich daran anschließenden Seitenwandungs-Profilplattenabschnitte 420-1, 420-2 sind für Fluid durchlässig ausgeführt.

Nach einer Ausführungsform der äußeren oder ersten Profilplattenpaneele 411 und 421-1 bzw. 421-2 sind diese als Geflecht oder Geflechtanordnung 140 zumindest einer Geflechtlage 141 insbesondere aus Metall gebildet, wie dieses bzw. diese an Hand der Figuren 13 und 14 beschrieben worden ist.

Nach einer alternativen Ausführungsform der äußeren oder ersten Profilplattenpaneele 411 und 421-1 bzw. 421-2 sind diese als mikro-perforierte Paneele gebildet, d.h. diese Paneele weisen Mikro-Perforationen P auf. Der Durchmesser d (Figuren 32a, 32b) oder die größte Breite der Mikro-Perforationen P beträgt bei den Ausführungsformen nach der Figur 18 wie auch bei anderen erfindungsgemäßen Ausführungsformen von äußeren oder ersten Profilplattenpaneelen 210 mit Mikro-Perforationen P zwischen 30 µm und 100 µm. Nach bevorzugten Ausführungsformen der Erfindung sind die inneren Profilplattenpaneele, die Öffnungen 261, 461 aufweisen, dagegen nicht mit Mikro-Perforationen P versehen, d.h. diese haben einen Durchmesser oder eine größte Breite von mehr als 100 µm. Der Abstand a (Figuren 32a, 32b) der Mikro-Perforationen P zueinander in dem zugehörigen äußeren Profilplattenpaneel 211 oder 311 oder 411 des Vorderteil-Profilplattenabschnitts 210 oder 310 oder 410 oder auch in einem Seitenwandungs-Profilplattenabschnitt kann insbesondere 0,15 % und 0,5 % der Profiltiefe PT des Strömungskörpers an dieser Stelle sein, an der der jeweilige Strömungskörper-Bauteil angeordnet ist. Der Abstand a der Mikro-Perforationen P zueinander innerhalb einer von Wandungsabschnitten begrenzten Profilplattenkammer kann alternativ oder zusätzlich zwischen dem vierfachen und dem zehnfachen des Durchmessers d (Figuren 32a, 32b) oder der größten Breite der Mikro-Perforationen P sein.

Nach einer Ausführungsform des erfindungsgemäßen Strömungskörper-Bauteils 1 ist bei einer Ausführung der Seitenwandungs-Profilplattenabschnitte 220-1, 220-2 oder 320-1, 320-2 oder 420-1, 420-2, die äußere oder erste Profilplattenpaneele 221-1, 221-2 bzw. 321-1, 321-2 bzw. 421-1, 421-2 mit Mikro-Perforationen aufweisen, der Abstand der Mikro-Perforationen zueinander in dem zugehörigen äußeren Profilplattenpaneel entlang der Längsrichtung P-L konstant wenigstens innerhalb einer von Wandungsabschnitten begrenzten Profilplattenkammer und insbesondere über die gesamte Länge in der Längsrichtung P-L des Seitenwandungs-Profilplattenabschnitts.

Dies gilt generell für derartige Strömungskörper-Bauteile 1 nach der Erfindung. Dies gilt insbesondere für Ausführungsformen Profilplattenabschnitten 120 mit einer Versteifungsvorrichtung 150 mit Wandungsabschnitten 471 und den Profilplattenkammern 472 nach der Figur 19, mit Wandungsabschnitten 471c und den Profilplattenkammern 472c nach der Figur 25, mit Wandungsabschnitten 471d und den Profilplattenkammern 472d nach der Figur 26 oder mit Wandungsabschnitten 471f und den Profilplattenkammern 472f nach der Figur 28.

Alternativ oder zusätzlich ist nach einer Ausführungsform des erfindungsgemäßen Strömungskörper-Bauteils 1 mit Vorderteil-Profilplattenabschnitten 210 oder 310 oder 410, die äußere oder erste Profilplattenpaneele 211 oder 311 oder 411 mit Mikro-Perforationen P aufweisen, dass der Abstand a (Figuren 32a, 32b) der Mikro-Perforationen P zueinander in dem zugehörigen äußeren Profilplattenpaneel 211 oder 311 oder 411 des Vorderteil-Profilplattenabschnitts 210 oder 310 oder 410 innerhalb einer von Wandungsabschnitten begrenzten Profilplattenkammer variabel entlang der Längsrichtung P-L. Das erste Profilplattenpaneel 121 des Vorderkanten-Profilplattenabschnitts 110 kann Mikro-Perforierungen aufweisen, deren Verteilungsdichte und/oder Größe der Mikro-Perforierungen im jeweils äußeren Paneel im Bereich innerhalb jeweils einer Profilplattenkammer 472, 472a, 472b, 472c, 472d, 472e, 472f in einer Längsrichtung P-L des Profilplattenabschnitts 120 zunimmt. In diesem Bereich jeweils einer Profilplattenkammer können insbesondere 20 bis 50 Mikro-Perforierungen im jeweiligen äußeren Profilplattenpaneel eingebracht sein.

Die Zunahme der Verteilungsdichte der Mikro-Perforierungen in dem Bereich jeweils einer Profilplattenkammer kann durch die Verringerung des kleinsten Abstands zwischen jeweils benachbarten Mikro-Perforierungen von den in Bezug auf die Längsrichtung P-L des Profilplattenabschnitts 120 hintersten Mikro-Perforierungen gegenüber dem Abstand zwischen jeweils benachbarten vordersten Mikro-Perforierungen um den Faktor 1,5 bis 3,5. Alternativ oder zusätzlich kann die Zunahme der Verteilungsdichte der Mikro-Perforierungen in dem Bereich jeweils einer Profilplattenkammer um den Faktor 1,5 bis 3,5 vorgesehen sein in Bezug auf die Verteilungsdichte der Mikro-Perforierungen im flächenmäßig hintersten Drittel des genannten Bereichs jeweils einer Profilplattenkammer bezüglich der Verteilungsdichte der Mikro-Perforierungen im flächenmäßig hintersten Drittel des genannten Bereichs jeweils einer Profilplattenkammer. Dabei ist "vorne" und "hinten" durch die Richtung der Längsrichtung P-L des Profilplattenabschnitts 120 oder des Strömungskörpers, an dem das Strömungskörper-Bauteil 1 mit dem jeweiligen Profilplattenabschnitt 120 angeordnet ist.

Die beschriebene Variabilität der Perforations-Größe und Perforations-Verteilungsdichte innerhalb einer Kammer kann generell für derartige Strömungskörper-Bauteile 1 nach der Erfindung angewendet werden. Dies gilt insbesondere für Ausführungsformen Profilplattenabschnitten 120 mit einer Versteifungsvorrichtung 150 mit Wandungsabschnitten 471a und den Profilplattenkammern 472a nach der Figur 21, mit Wandungsabschnitten 471c und den Profilplattenkammern 472c nach der Figur 25, mit Wandungsabschnitten 471d und den Profilplattenkammern 472d nach der Figur 26, mit Wandungsabschnitten 471e und den Profilplattenkammern 472e nach der Figur 27 oder mit Wandungsabschnitten 471f und den Profilplattenkammern 472f nach der Figur 28.

Dies wird im Folgenden an Hand der Profilplattenkammer 472a nach der Figur 21 erläutert: Nach der Erfindung soll erreicht werden, dass an jeder Stelle des Strömungskörper-Bauteils 1 entlang der Längsrichtung P-L Fluid, also insbesondere Luft, durch die Mikro-Perforationen P abgesaugt wird. Im Bereich der Längserstreckung P-L einer Profilplattenkammer ergibt sich dann ein Geschwindigkeitsprofil der Fluid-Absauggeschwindigkeit G-A gemäß der Figur 29, aus dem entnommen werden kann, dass entlang der Längsrichtung P-L über die gesamte Länge der Profilplattenkammer 470a Fluid durch die in dem Paneel 411 vorhandenen Mikro-Perforationen P (in der Figur 29 nicht gezeigt) in die Profilplattenkammer 470a eintritt. Dieses Geschwindigkeitsprofil ergibt sich aus den Druckverhältnissen an dem Paneel, die in der Figur 30 gezeigt sind: die Kurve D-P zeigt den Verlauf des Druckes in der Längsrichtung P-L im Bereich einer Profilplattenkammer (z.B. der Profilplattenkammer 470a), der einen aufgrund der im Bereich des jeweiligen Vorderteil-Profilplattenabschnitts 210 oder 310 oder 410 gegebenen Profil-Krümmung einen in Profilplatten-Längsrichtung P-L abnehmenden Druck zeigt. Auf der Abszisse ist die Längserstreckung P-L bezogen auf die Profiltiefe PT des jeweiligen Strömungskörpers aufgetragen. Die Kurve D-K stellt den in der Kammer 470a entlang der Profilplatten-Längsrichtung P-L vorliegenden Druckverlauf dar, der einen über die Profilplatten-Längsrichtung P-L konstanten Druck zeigt. Die Kurve D-B stellt den im Innenraum B oder in einem am inneren Profilplattenpaneel entlang führenden Strömungskanal (z.B. die Kanäle 783, 784 in der Figur 39) im Bereich der Kammer 470a entlang der Profilplatten-Längsrichtung P-L vorliegenden Druckverlauf dar, der einen über die Profilplatten-Längsrichtung P-L konstanten Druck zeigt. Die Figur 31 zeigt ein ideales Profil der Fluid-Absauggeschwindigkeit G-A über die Längserstreckung P-L einer Profilplattenkammer, bei dem die Fluid-Absauggeschwindigkeit G-A über die Längserstreckung P-L konstant ist.

Zu vermeiden ist das Profil der Fluid-Absauggeschwindigkeit G-A über die Längserstreckung P-L einer Profilplattenkammer und der darin vorliegende Druckverlauf, die in den Figuren 33a und 33b dargestellt sind: Dabei kommt es zu einem Ausströmen von Fluid aus der Profilplattenkammer im hinteren Bereich derselben.

Im Folgenden werden an Hand der Ausführungsformen des Strömungskörper-Bauteils 1 nach den Figuren 34, 35 und 39 insbesondere weitere Ausführungsformen des Vorderteil-Profilplattenabschnitts 510, 610 bzw. 710 beschrieben:
Die Figur 34 zeigt eine Ausführungsform des erfindungsgemäßen Strömungskörper-Bauteils 1 in der Anwendung als Vorderkantenkörper 23 eines Seitenleitwerks. Der Vorderteil-Profilplattenabschnitt 510 und seitlich daran anschließende und entlang zueinander verlaufende Seitenwandungs-Profilplattenabschnitte 520-1, 520-2 auf. Sowohl der Vorderteil-Profilplattenabschnitt 510 als auch die Seitenwandungs-Profilplattenabschnitte 520-1, 520-2 sind jeweils ein Profilplattenabschnitt 120. Der Vorderteil-Profilplattenabschnitt 510 und die seitlich daran anschließenden Seitenwandungs-Profilplattenabschnitte 520-1, 520-2 sind jeweils aus einem äußeren oder ersten äußeren Profilplattenpaneel 511 bzw. 521-1 bzw. 521-2 und einem zweiten inneren Profilplattenpaneel 512 bzw. 522-1 bzw. 522-2 sowie aus einer zwischen den jeweiligen ersten und zweiten Profilplattenpaneelen gelegenen Zwischenschicht 553 bzw. 551 bzw. 552 vorzugsweise aus Metallschaum gebildet. Die äußeren oder ersten äußeren Profilplattenpaneele 511 bzw. 521-1 bzw. 521-2 sind dabei generell die an der Außenseite des jeweiligen Strömungskörper-Bauteils gelegenen Paneele, also diejenigen Paneele, an denen die Strömung, die das Strömungskörper-Bauteil umströmt, anliegt.

Eine Trennwand 5 definiert einen Fluidkanal 580 im Inneren B des Strömungskörper-Bauteils 1. Die Versteifungsvorrichtung wird durch Stütz-Träger 530 gebildet, quer zu einer Längsrichtung P-L des jeweiligen Profilplattenabschnitts 120 entlang zueinander erstrecken.

Auch die Figur 35 zeigt eine Ausführungsform des erfindungsgemäßen Strömungskörper-Bauteils 1 in der Anwendung als Vorderkantenkörper 23 eines Seitenleitwerks. Der Vorderteil-Profilplattenabschnitt 610 und seitlich daran anschließende und entlang zueinander verlaufende Seitenwandungs-Profilplattenabschnitte 620-1, 620-2 auf. Sowohl der Vorderteil-Profilplattenabschnitt 610 als auch die Seitenwandungs-Profilplattenabschnitte 620-1, 620-2 sind jeweils als Profilplattenabschnitt 120 gebildet. Die Versteifungsvorrichtung wird durch Stütz-Träger 630 gebildet, quer zu einer Längsrichtung P-L des jeweiligen Profilplattenabschnitts 120 entlang zueinander erstrecken.

Weiterhin zeigt auch die Figur 35 eine Ausführungsform des erfindungsgemäßen Strömungskörper-Bauteils 1 in der Anwendung als Vorderkantenkörper 23 eines Seitenleitwerks. Der Vorderteil-Profilplattenabschnitt 710 und seitlich daran anschließende und entlang zueinander verlaufende Seitenwandungs-Profilplattenabschnitte 720-1, 720-2 auf. Sowohl der Vorderteil-Profilplattenabschnitt 710 als auch die Seitenwandungs-Profilplattenabschnitte 720-1, 720-2 sind jeweils als Profilplattenabschnitt 120 gebildet.

Der Vorderteil-Profilplattenabschnitt 510, 610, 710 kann insbesondere gemäß der Figuren 36, 37 oder 38a bis 38c ausgeführt sein, in denen der Vorderteil-Profilplattenabschnitt mit dem Bezugszeichen 110 bezeichnet ist.

Nach der Figur 36 ist der Vorderteil-Profilplattenabschnitt aus Schaumkörpern oder Schaumklötzen und insbesondere offenporigen Metallschaumschicht-Körper 116 gebildet, dies sich in der Spannweitenrichtung B-S erstrecken und von sich in der Spannweitenrichtung B-S erstreckenden Trennwänden oder Stütz-Trägern 117, die als Stützwände an den Paneelen 111, 112 befestigt sind, getrennt sind. Die Trennwände 117 sind für Fluid nicht durchlässig ausgeführt, wie z.B. an Hand der Figuren 21, 27 in Verbindung mit der Figuren 29 bis 31 beschrieben wurde. Dabei kann insbesondere vorgesehen sein, dass in einer Spannweitenrichtung P-S des Profilplattenabschnitts 120 sich erstreckende Stütz-Träger 117 verlaufen, die an dem ersten Profilplattenpaneel 111 und dem zweiten Profilplattenpaneel 112 befestigt sind. Dabei kann wenigstens in einem Teil der Zwischenräume und insbesondere in allen Zwischenräumen eines Profilplattenabschnitts 110, 120, die sich zwischen jeweils zwei benachbarten Stütz-Trägern 117 ausbilden, zumindest ein offenporiger Metallschaumschicht-Körper 116 derart aufgenommen ist, dass durch das erste Profilplattenpaneel 111 strömende Fluid die offenporigen Metallschaumschicht-Körper 116 durchströmen. Insbesondere können dabei die offenporigen Metallschaumschicht-Körper 116 an den jeweiligen Stütz-Trägern 117, zwischen denen jeweils ein Metallschaumschicht-Körper 116 gelegen ist, flächig anliegen.

Diese Ausführungsformen und Varianten mit Stütz-Trägern 117 und zwischen diesen gelegenen Schaumschichtkörper kann erfindungsgemäß generell für Profilplattenabschnitte vorgesehen sein, die eine Schaumschicht aufweisen, wie z.B. für die Ausführungsformen nach der Figur 7.

Die Schaumkörper 116 können insbesondere in einem Sinterofen mit den Paneelen 11, 112 und/oder den Stütz-Trägern 117 verbunden werden.

Nach der Figur 37 ist der Vorderteil-Profilplattenabschnitt 110 mit einer Versteifungsvorrichtung 150 aus sich in der Spannweitenrichtung B-S erstreckenden Stützwänden 118 gebildet, die als Stützwände an den Paneelen 111, 112 befestigt sind. Die Stützwände 118 sind an einem ersten Ende 118a an dem äußeren Paneel 111 angeschweißt. Hierzu kann das äußere Paneel 111 an der Stelle, die für die Schweißverbindung vorgesehen ist, eine größere Paneel-Dicke haben. Auf diese Weise kann verhindert werden, dass die Außenseite des äußeren Paneels 111, die eien Strömungsoberläche ist, keine ungünstigen Vertiefungen aufweist, die Abweichungen von einer aerodynamisch günstigen Profilformgebung wären. Zur Anbrinung des zweiten Endes 118 der Stützwände 118 weisen diese einen bogenförmigen Krümmungsabschnitt zur Bildung eines Fußes 118b auf, mit dessen flächiger Außenseite die jeweilige Stützwand an dem inneren Paneel 112 angelötet oder angeschweißt werden kann.

Das Verfahren zur Herstellung des Profilplattenabschnitts 110 mit sich in der Profilplatten-Seitenrichtung P-L erstreckenden Versteifungsstegen (118) sieht vor, dass wenigstens ein Teil der Versteifungsstege ein Querschnittsprofil mit einem geradlinig verlaufenden (und den Hauptstegabschnitt bildenden) Endabschnitt an einem ersten Profilende und einem gekrümmt verlaufenden Endabschnitt an dem entgegen gesetzt zu dem ersten Querschnittsprofil-Ende gelegenen zweiten Querschnittsprofil-Ende verwendet wird, wobei der gekrümmt verlaufende Endabschnitt als ein Fuß 118b ausgebildet ist, der eine Auflagefläche an der Fußunterseite 118c bereitstellt. Das Verfahren weist insbesondere die folgenden Schritte auf:
▪ Verbindung des ersten Profilplattenpaneels 111 mit den ersten Profilenden einer Mehrzahl von Versteifungsstegen,
▪ Verbinden des zweiten Profilplattenpaneels 112 mit den Füße der Versteifungsstege.

Dabei kann das Verbinden des zweiten Profilplattenpaneels 112 mit den Füßen der Versteifungsstege erfolgen durch:
▪ Auflegen des zweiten Profilplattenpaneels 112, 122 auf die an der Fußunterseite gelegene Auflageflächen der Füße der Versteifungsstege,
▪ mit einer Laserstrahlschweißtechnik Verschweißen der Füße der Versteifungsstege von der Seite her, die außerhalb des Profilplattenabschnitts (110, 120) und an dem zweiten Profilplattenpaneel 112, 122 gelegen ist.

Alternativ kann das Verbinden des zweiten Profilplattenpaneels 112 mit den Füßen der Versteifungsstege erfolgen durch:
▪ Aufbringen eines Lötmittels auf die Fußunterseite der Füße der Versteifungsstege,
▪ Auflegen des zweiten Profilplattenpaneels 112 auf die an der Fußunterseite gelegene Auflageflächen der Füße der Versteifungsstege,
▪ mit einer Löttechnik Verlöten der Füße der Versteifungsstege von der Seite her, die außerhalb des Profilplattenabschnitts 110 und an dem zweiten Profilplattenpaneel 112 gelegen ist.

Die Ausführungsformen des Strömungskörper-Bauteils 1 gemäß der Figuren 34, 35, 39 zeigen verschiedene Realisierungsformen der Abfuhr von Fluid von der Außenseite A zur Innenseite B:
In der Figur 35 ist eine im Vergleich zu den Figuren 7, 15, 33 alternative Ausführungsform der Führung des Fluids im erfindungsgemäßen Strömungskörper-Bauteil 1 gezeigt. Dabei können die Versteifungsvorrichtungen 150 oder 661, 652 der Seitenwandungs-Profilplattenabschnitte 620-1 bzw. 620-2 innerhalb der Profilplattenpaneele 621-1 bzw. 621-2 für Fluid durchlässig und die inneren oder zweiten Profilplattenpaneele 622-1 bzw. 622-2 nicht für Fluid durchlässig gebildet sein, wobei Öffnungen 683 und 684 in der jeweiligen Trennwand 685 bzw. 686 des Fluidkanals 680 vorgesehen sind. Da die Stütz-Stege oder Versteifungsplatten 630 für Fluid durchlässig ausgeführt sind, bilden die Räume innerhalb der Profilplattenpaneele 621-1 und 622-1 bzw. 621-2 und 622-2 jeweils Fluidkaäle 681 bzw. 682 aus. Auf diese Weise kann das von der Außenseite A des Strömungskörper-Bauteils 1 durch die äußeren oder ersten Profilplattenpaneele 621-1 bzw. 621-2 strömende Fluid innerhalb der Seitenwandungs-Profilplattenabschnitte 620-1, 620-2 und durch die Versteifungsvorrichtungen 651, 652 entgegen der äußeren Strömungsrichtung nach vorne und durch Öffnungen 683 bzw. 684 in einer Verbindungswand 685 bzw. 686 in den Fluidkanal oder Abflusskanal 680 strömen. Die Trennwand 685 bzw. 686 ist jeweils eine die Seitenwandungs-Profilplattenabschnitte 620-1 bzw. 620-2 und den Fluidkanal 680 trennende Wand und kann Teil der Trennwand 685 sein. Die Trennwände 685 bzw. 686 können jedoch auch entfallen.

Die Abfuhr von Fluid kann generell wie auch bei dieser Ausführungsform wie beschrieben passiv oder aktiv mittels einer Pumpe erfolgen.

Die Öffnungen 683, 684 können wie bei der Ausführungsform nach der Figur 39 vorgesehen eine Anordnung von Öffnungen 783 in einer Trennwand 785 zwischen Seitenwandungs-Profilplattenabschnitten 720-1 bzw. 720-2 und dem Fluidkanal 780 sein. Bei der Ausführungsform nach der Figur 39 ist der Fluidkanal 780 von dem Innenraum B durch die Trennwand 785 abgetrennt. Zusätzlich ist bei der Ausführungsform ein optional nach der Erfindung vorgesehener Profilplatten-Zusatzkanal 783, 784 ausgebildet, der sich jeweils aufgrund von Kanalwänden 714, 741a, die in einem Abstand wenigstens abschnittsweise entlang der für Fluid durchlässig ausgebildeten inneren oder zweiten Profilplattenpaneele 222-1 bzw. 222-2 verlaufen, zwischen den zweiten Profilplattenpaneelen 222-1 oder 222-2 und den Kanalwänden 783a bzw. 784a ergeben. Diese Profilplatten-Zusatzkanal 783, 784 münden jeweils durch Öffnungen 787 bzw. 788 in den Fluidkanal 780.

Die Abfuhr von Fluid kann generell wie auch bei dieser Ausführungsform wie beschrieben passiv oder aktiv mittels einer Pumpe erfolgen.

Generell kann also insbesondere in Bezugnahme auf die Ausführungsformen der Figuren 34, 35, 39 das Strömungskörper-Bauteil 1 eine Fluid-Absaugvorrichtung aufweisen, die einen im Inneren des Strömungskörper-Bauteils 1 ausgebildeten Strömungskanal 580, 680, 780, der abschnittsweise von dem zweiten für Fluid durchlässigen Vorderteil-Profilplattenabschnitt begrenzt wird, und eine an den Strömungskanal 580, 680, 780 angeschlossene Pumpe zum Absaugen von durch das Strömungskörper-Vorderteil 110 strömenden Fluid durch den Strömungskanal 160 aufweist.

Alternativ dazu kann insbesondere in Bezugnahme auf die Ausführungsformen der Figuren 34, 35, 39 der Strömungskanal 580, 680, 780 mit einer Öffnung in das Innere des Strömungskörper-Bauteils 1 und/oder einer Ausmündung aus dem Inneren des Strömungskörper-Bauteils 1 heraus aufweist und der derart im Strömungskörper-Bauteil 1 geführt ist, dass bei einer bestimmungsgemäßen Anströmung des Strömungskörper-Bauteil 1 ein Absaugen von durch das Strömungskörper-Vorderteil 110 strömenden Fluid durch den Strömungskanal 580, 680, 780 erfolgt.

Durch diese Ausführungsformen wird eien Strömung insbesondere in den Kanälen 580, 680, 780 entlang der Spannweitenrichtung des Strömungskörper-Bauteils 1 und ein Absaugen von Fluid von der Außenseite A bewirkt.

Bei den Ausführungsformen der Figuren 34 und 39 ist der Querschnitt des zentralen Fluidkanals 680 bzw. 780 deutlich kleiner als z.B. bei der Ausführungsform der Figur 3. Diese kann je nach dem Anwendungsfall günstiger sein. Auch wird durch diese Bauweise ein Einbauraum zwischen den Profilplattenabschnitte 620-1, 620-2 bzw. 720-1, 720-2 oder Seitenwandabschnitten verfügbar gemacht, welcher zum Beispiel für die Unterbringung von Kabeln oder Hydraulikleitungen verwendet werden kann.

Im Folgenden wird ein Herstellungsverfahren zu Herstellung eines Profilplattenabschnitts 120 und insbesondere eines Seitenwandungs-Profilplattenabschnitts, der jeweils insbesondere nach der Figur 16, 17, 28, 34, 35 oder 39 beschrieben werden kann und der zwischen Paneelen 121, 122 mit diesen verbundene Stützstege als Versteifungsvorrichtung aufweist:
Der Profilplattenabschnitt 120 ist nach einer der hierin beschriebenen Ausführungsformen gestaltet. Das äußere oder erste Profilplattenpaneel 121 ist für Fluid durchlässig ausgeführt und kann dabei ein mit Öffnungen versehenes Paneel, ein mit Mikro-Perforationen P versehenes Paneel oder insbesondere vollständig aus einem Geflecht oder einer Geflecht-Anordnung und dabei insbesondere einer Metallgeflechtanordnung wie an Hand der Figuren 13 und 14 beschrieben gebildet sein.

Mit dem an Hand der Figuren 40a bis 40d und 41a bis 41d beschriebenen Verfahrensschritten kann insbesondere ein Profilplattenabschnitt 120 nach der Figur 16 hergestellt werden. Mit dem an Hand der Figuren 40a bis 40d und 42a bis 42c beschriebenen Verfahrensschritten kann insbesondere ein Profilplattenabschnitt 120 nach der Figur 17 hergestellt werden. Die Profilplattenabschnitt 120 nach den Figuren 16 als auch nach der Figur 17 weist ein für Fluid durchlässiges äußeres oder erstes Profilplattenpaneel 121 und kann - je nach der Ausführungsform des herzustellenden Strömungskörper-Bauteils 1 - ein inneres oder zweites Profilplattenpaneel 122 aufweisen, das für Fluid durchlässig oder nicht für Fluid durchlässig ist.

Das Verfahren dient also zur Herstellung eines Profilplattenabschnitts 120 zur Verwendung als Außenwandung eines Strömungskörpers 110, das aus einem ersten Profilplattenpaneel 121 und einem zweiten Profilplattenpaneel 122 und diese gegeneinander abstützenden Versteifungsvorrichtung 330 in Form von Stegplatten 231a bzw. 231b gebildet ist, wobei zumindest das erste Profilplattenpaneel 121 für Fluid durchlässig ausgeführt ist. Die Stegplatten können einteilig oder mehrteilig und insbesondere zweiteilig ausgeführt sein. Bei der Ausführung der Versteifungsvorrichtung 150 nach der Figur 16 sind die Stegplatten mittels zweier Stegplattenteile 31, 32 gebildet, die im fertig hergestellten Zustand des Profilplattenabschnitts 120 in der Dickenrichtung des Profilplattenabschnitts 120 mit ihrer Breiten-Erstreckung hintereinander gelegen und mittels einer Diffusions-Schweißnaht 35a miteinander verbunden sind. Weiterhin sind die an den sich in der Spannweitenrichtung P-S erstreckenden Ränder oder Randabschnitte, die jeweils entgegengesetzt zu den miteinander verbundenen Rändern gelegen sind, ebenfalls mittels einer Diffusions-Schweißnaht 33a bzw. 34a mit dem ersten Profilplattenpaneel 121 bzw. dem zweiten Profilplattenpaneel 122 verbunden (Figuren 41c, 41d).

Bei der Ausführung der Versteifungsvorrichtung 150 nach der Figur 17 sind die Stegplatten 331b in einer Anordnung derart innerhalb dem ersten Profilplattenpaneel 121 und dem zweiten Profilplattenpaneel 122 gelegen und mit diesen verbunden, dass diese im Querschnitt in der von der Tiefenrichtung P-T und der Dickenrichtung P-T eine fachwerkartige Anordnung der Stegplatten 331b erlaubt. Dabei sind miteinander an aneinander anliegenden Rändern und Randabschnitten mittels einer Diffusions-Schweißnaht 35b miteinander und mittels jeweils einer Diffusions-Schweißnaht 35b mit dem jeweiligen Profilplattenpaneel 121 bzw. 122 verbunden (Figuren 42b, 42c).

Durch Diffusionsschweißen erfolgt ein Verbinden von Randbereichen der Stegplatten 331b bzw. 331a, 31, 32 auf die beschriebene Weise, während die Stegplatten bzw. Stegplattenteile 31, 32 flach zwischen einem ersten Profilplattenpaneel 121 und einem zweiten Profilplattenpaneel 122 gelegen sind. Die Stegplatten 331b bzw. die Stegplattenteile 31, 32 werden in einem superplastischen Verformungsschritt durch Aufstellen derselben in die bestimmungsgemäße Lage im Profilplattenabschnitt 120 gebracht, während die Profilplattenpaneele 121 bzw. 122 in dem Werkzeug mit den Werkzeugteilen W1, W2 auseinander gefahren werde.

Bei diesen Profilplattenabschnitten erstrecken sich die Stegplatten 331b in ihrer Längsrichtung entlang der Längsrichtung L-P des Profilplattenabschnitts 120 erstreckt und deren Breitenrichtung winklig zu der Tiefenrichtung P-T des Hohlkammerprofils 120 verläuft. Die als Fachwerkprofile ausgeführten Stegplatten 331a sind an ihren in Bezug auf ihre Breite gelegenen Enden an Verbindungsbereichen 35 mit dem inneren oder zweiten Profilplattenpaneel 122 bzw. äußeren oder ersten Profilplattenpaneel 121 verbunden, wobei Enden von zwei jeweils benachbarten Fachwerkprofilen vorzugsweise an demselben Befestigungsbereich 35a an dem zweiten Profilplattenpaneel 122 bzw. der oberen Deckschale 40 befestigt sind. Alternativ können die Enden von zwei jeweils benachbarten Fachwerkprofilen auch an verschiedenen voneinander beabstandeten Befestigungsbereichen 35 mit der zweiten Profilplattenpaneel 122 bzw. dem zweiten Profilplattenpaneel 122 verbunden sein, wobei die Befestigungsbereiche 35 dann vorzugsweise maximal das 3 bis 5-fache der Stärke der Fachwerkprofile als Breite aufweisen. Diese Korrelation gilt auch für die Breite der Befestigungsbereiche 35 bei senkrechten Stegen als Versteifungselemente 30, wie sie in Figuren 16 und 17 gezeigt sind. Die Längsrichtungen der Fachwerkprofile 30 verlaufen dabei entlang zueinander. Die Anordnung der Fachwerkprofile 30 ist zumindest in einem Abschnitt des Hohlkammerprofils 10 vorzugsweise derart ausgeführt, dass sich der jeweils spitze Winkel zwischen der Breitenrichtung der Fachwerkprofile 30 und der Längserstreckung der zweiten Profilplattenpaneel 122 bzw. der oberen Deckschale 40 im Bereich zwischen 10 Grad und 90 Grad gelegen ist.

In Figur 16 oder 17 ist zu erkennen, dass im ersten Schritt des erfinderischen Verfahrens nicht zwingend ein Verformungsschritt, beispielsweise eine superplastische Verformung nach dem Verbinden, vorgesehen sein muss. Vielmehr ist es auch möglich, dass es sich, wie in Figur 2 dargestellt, bei den Versteifungselementen oder Stegplatten 331a um feste und formsteife Elemente handelt, welche direkt nach ihrem Anordnen auf dem unteren oder inneren Profilplattenpaneel 122 bereits ihre endgültige Form aufweisen. In dieser endgültigen Form dienen die Stegplatten 331a bzw. 331b als Abstützung der beiden Profilplattenpaneele 121 und 122 gegeneinander. Durch das Bilden eines Kraftverbindungspfades zwischen den beiden Profilplattenpaneele 121 und 122 werden diese gegeneinander abgestützt und darüber hinaus auf den gewünschten Abstand definiert. Dabei kann dieser Abstand konstant sein oder auch über die geometrische Ausprägung des Hohlkammerprofils 10 variieren. Bei einer solchen Ausführungsform sind die Verbindungen zwischen den Stegplatten 331a bzw. 331b und den beiden Profilplattenpaneele 121 und 122 über relativ einfache Verbindungsverfahren, wie beispielsweise Löten, Diffusionsschweißen oder Kleben, hergestellt.

Der superplastische Verformungsschritt unter der Verwendung von Überdruck zwischen den beiden Profilplattenpaneelen 121 und 122 wird wesentlich dadurch unterstützt, das in den Stegplatten 331a bzw. 331b Öffnungen 334 in den Versteifungselementen 30 vorgesehen sind. Diese Öffnungen 34 dienen dem Druckausgleich, so dass sich ein eingebrachter Druck frei zwischen den Profilplattenpaneelen 121 und 122, insbesondere ungehindert von der Fachwerkstruktur der Stegplatten 331a bzw. 331b, ausbreiten kann.

Grundsätzlich bestehen somit die aus Figur 17 erkennbare Fachwerksstruktur als Möglichkeit für eine verbesserte mechanische Stabilität der Stegplatten 331a bzw. 331b und damit des Hohlkammerprofils bzw. des Profilplattenabschnitts 120 einerseits, und die aus Figur 1 erkennbare Stegstruktur der Versteifungselemente 30 als Möglichkeit für eine gewichtsreduzierte Ausführung andererseits. In den Figur 13 und 14 ist eine Metallgeflechtanordnung 140 näher dargestellt. Dabei können beliebige Webarten, wie beispielsweise Körpergewebe oder Panzertrassengewebe zum Einsatz kommen. So ist bei der Ausführungsform gemäß Figur 14 im Querschnitt zu erkennen, dass die einzelnen Geflechtdrähte und insbesondere Metalldrähte 144 in unterschiedlichen Ebenen aber nicht ausschließlich innerhalb dieser Ebenen verlaufen. Vielmehr verlaufen den Metalldrähte 144 im Wesentlichen wellenförmig und jeweils in einem Winkel von 90° zueinander versetzt. Damit entsteht ein Geflecht wie es zum Beispiel in Figur 13 in isometrischer Ansicht dargestellt ist. Die einzelnen Metalldrähte 144 verlaufen übereinander und untereinander im Wechsel und verflechten sich auf diese Weise miteinander zu einer mechanisch stabilen Metallgeflechtanordnung 144.

Das äußere oder erste Profilplattenpaneel 121 ist für Fluid durchlässig ausgeführt. Zu diesem Zweck kann die Permeabilität durch Realisierung des Profilplattenpaneels 121 als Geflechtanordnung 140 ist dabei durch die im Geflecht bestehenden Abstände zwischen den einzelnen Drähten oder Metalldrähten 144 und den daraus resultierenden Löchern gegeben. Je nach Dichtheit des Flechtwerkes und der Abstände der einzelnen Drähte 144 zueinander kann auf diese Weise eine höhere oder geringere mechanische Stabilität und auch eine höhere oder geringere Permeabilität eingestellt werden.

Die Metallgeflechtanordnung 140 ist dabei in sich, also die einzelnen Metalldrähte 44 untereinander, über Diffusionsschweißen verbunden. Damit sind also einzelnen Lagen der Metallgeflechtanordnung in sich, aber die einzelnen Lagen der Metallgeflechtanordnung auch untereinander über Diffusionsschweißen miteinander verbunden. Durch die Verwendung der Diffusionsschweißmethode werden hier Verbindungen zwischen den Metalldrähten 144 hergestellt, welche einerseits besonders haltbar sind, andererseits auch besonders einfach, nämlich kostengünstig hergestellt werden. Das Diffusionsschweißverfahren wird dabei in einem in den Figur 13 und 14 nicht dargestellten Werkzeug 80 bei ca. 1000°C und im Bereich zwischen 10 bis 85 bar, insbesondere zwischen 20 und 60 bar, über mehrere Stunden, zum Beispiel 3 Stunden hinweg ausgeführt. Es sind grundsätzlich verschiedenste Flechtstrukturen denkbar. Zum Beispiel ist es möglich, dass die einzelnen Metalldrähte 144 zueinander um ca. 90° versetzt verlaufen, wie dies in den Figur 13 und 14 dargestellt ist, und jeweils abwechselnd übereinander drüber und untereinander durch verlaufen. So wird über eine Vielzahl von Kontaktstellen der einzelnen Metalldrähte eine große mechanische Stabilität geschaffen und gleichzeitig durch die Zwischenräume zwischen den Kontaktstellen und den Metalldrähten 144 ausreichende Öffnungen geschaffen, welche zur gewünschten Permeabilität des äußeren Profilplattenpaneels 121 führen.

### Mit dem Verfahren nach den

In Figur 41a ist eine Ausführungsform eines Werkzeuges 80 dargestellt, das für das Verbinden der Profilplattenpaneele 121 und 122 mit den Versteifungselementen 30 verwendet wird. Zusätzlich kann mit den Werkzeugteilen W1, W2 auch in einem Umformprozess, insbesondere mittels superplastischen Verformen, eine Veränderung der Lage der Stützstegteile 30a, 30b durchgeführt werden. Dieser Umformprozess wird später noch mit Bezug auf die Figuren 41a bis 41d und 42a bis 42c beschrieben. Nach dem erfindungsgemäßen Anordnen der einzelnen Profilplattenpaneele 121 und 122 sowie der dazwischen liegenden Stegplatten 331a bzw. 331b werden die Werkzeugteile W1, W2 zusammen gefahren und das aus diesen gebildete Werkzeug geschlossen. Dabei kann vorgesehen sein, dass das untere Deckblech nur in Teilbereichen an dem unteren Werkzeugteil W1 aufliegt oder anliegt. Diese Teilbereiche stützen das untere Profilplattenpaneel 122 bzw. alle darauf angeordneten Komponenten des Hohlkammerprofils oder Profilplattenabschnitts 120 bis zum Beginn Schrittes zur Verbindung der Profilplattenpaneele 121 und 122 mit den Stegplatten 331a bzw. 331b.

Das Werkzeug ist derart gestaltet, dass in den Raum zwischen den Werkzeugteilen W1, W2 heiße Luft eingeblasen werden kann. Durch das Einblasen der Luft mit ausreichender Temperatur und Druck werden die Werkzeughälften auseinander gedrückt. Die relativ hohe Temperatur der Luft bewirkt auch, dass die durch Diffusionsschweißen entstandenen Verbindungsstellen 33a, 34, 35a bzw. 35b eine Aufrechterhaltung der Verbindungsstellen zwischen Stegplatten 331a bzw. 331b und Profilplattenpaneel 121 bzw. 122 bewirken.

Der Raum zwischen der unteren Werkzeugform W1 und dem unteren Profilplattenpaneel 122 kann nach einer Ausführungsform derart gestaltet sein, dass dort ein Innendruck aufgebracht werden kann, um das zweite Profilplattenpaneel 122 an dem Werkzeugteil W1 fixieren zu können. Alternativ oder zusätzlich können auch Befestigungsmittel zur Fixierung des zweite Profilplattenpaneel 122 an dem Werkzeugteil W1 vorgesehen sein.

Weiterhin sind, in den Figuren nicht dargestellt, Druckkanäle in dem Werkzeug W1, W2 vorgesehen, über welche Gas zur Erzeugung des Innendruckes in diesen Raum gepumpt und geblasen werden kann. Durch diesen Innendruck wird Kraft auf das innere Profilplattenpaneel 122 ausgeübt, welche durch den gesamten Profilplattenabschnitt 120 verläuft und sich gegen das obere Werkzeugteil W2 abstützt. Somit werden die Profilplattenpaneele 121, 122 von dem Innendruck gegen dass obere Werkzeugteil W2 gedrückt und damit gleichzeitig gegeneinander gepresst. Unter einem Innendruck im Bereich zwischen 10 und 85 bar, insbesondere zwischen 20 und 60 bar, sowie unter Aufheizung des Profilplattenabschnitts 120 auf bis zu 1000° C werden in diesem Verfahrensschritt in ca. 3 Stunden die Verbindungen zwischen den Versteifungselementen oder Stegplatten 331a bzw. 331b und den Profilplattenpaneelen 121 und 122 durch Diffusionsschweißen hergestellt.

Bei dem Verfahren ist vorgesehen, dass das an dem ersten Profilplattenpaneel 121 anliegende Werkzeugteil W2 eine Luftabfuhrvorrichtung aufweist, mit der bei dem zur Expansion des Abstands der Profilplattenpaneele 121, 122 mit den Werkzeugteilen W1, W2 im Werkzeug aufgebauten Innendruck ein größerer Luftdurchsatz bei dem Abführen von Luft durch das erste Werkzeugteil W1 aus dem Bereich zwischen den beiden Werkzeugteilen W1, W2 bereitgestellt wird als der Luftdurchsatz der durch das erste Profilplattenpaneel 121 strömenden Luft Die Figuren 41a bis 41d zeigen im einzelnen die Anordnung jeweils einen Ausschnitt des Profilplattenpaneels 122 und des oberen Profilplattenpaneel 121 mit einer Anordnung aus zwei eine Stegplatte 331a bildenden Stegplattenteilen 31, 32 im aufeinander liegenden Zustand. Die Stegplatte kann demnach auch aus mehr als zwei Stegplattenteilen gebildet sein, wenn diese entsprechend durch Diffusionsschweiß-Verbindung miteinander verbunden sind. Durch die nachfolgenden Umformungsschritte erfolgt eine plastische oder superplastische Verformung der Anordnung und insbesondere der Schweiß-Verbindungsstellen zwischen den jeweiligen Stegplattenteilen 31, 32 und zwischen einem Stegplattenteile 31, 32 und dem jeweiligen Profilplattenpaneel 121 bzw. 122, mit dem ein Stegplattenteil 31, 32 jeweils verbunden ist. Durch das mehrteilige Ausführen von Stegplatten durch Stegplattenteile wird ein Aufklappen oder Aufstellen von entsprechend aufeinander gelegten Stegplattenteilen bei dem Vorsehen entsprechender Schweißverbindungen ermöglicht. In den Figuren 41b und 42c ist das Ergebnis des Verbindens, zum Beispiel mittels Diffusionsschweißens, mit einem Werkzeug gemäß der Figuren 40a bis 40d dargestellt. In den Figuren 41b und 42c sind die Verbindungsstellen 35 zu erkennen, die sich durch das Verbinden von Stegplatten 331b bzw. Stegplattenteilen 31, 32 miteinander oder ein Verbinden derselben mit Profilplattenpaneelen 121 und 122 ausgebildet haben. Es wird in einem einzigen Schritt des Diffusionsschweißens nicht nur die Verbindung zwischen den Profilplattenpaneelen 121 bzw. 122 und Stegplatten 331b bzw. Stegplattenteilen 31, 32 miteinander oder ein Verbinden derselben mit Profilplattenpaneelen 121 und 122 erzeugt, und insbesondere die einzelnen Stegplatten 331b bzw. Stegplattenteilen 31, 32 miteinander verbunden. Um sicherzustellen, dass dabei insbesondere bei der Verwendung eines Diffusionsschweißverfahrens ausschließlich an den genannten Stellen Schweißverbindungen, also Verbindungsstellen 33, 34, 35 bzw. 35b entstehen, ist zwischen einzelnen Komponenten, also zwischen den übrigen Bereichen der Profilplattenpaneele 121 bzw. 122 und der Stegplatten 331b bzw. Stegplattenteilen 31, 32 ein soggenanntes "stopp-off coating" vorgesehen, welches als Beschichtung ein Verbinden, insbesondere ein Verschweißen der jeweiligen Komponente an unerwünschten Stellen verhindert. Diese Beschichtung wirkt also als Trennmittel und verhindert das Entstehen von unerwünschten Verbindungsstellen.

Figur 41d zeigt das Ergebnis eines Diffusionsschweißschrittes im Verfahren zur Herstellung eines Hohlkammerprofils 10 mit einer Fachwerkstruktur für die Versteifungselemente 30, wie sie in Figur 2 gezeigt sind. Im Unterschied zur Stegstruktur in den Figur 41b und 41c, ist in Figur 41d nur eine zentrale Lage als Versteifungselement 41d vorgesehen. Dieses wird, beispielsweise unter der Verwendung von "stopp-off-coating" mit den Deckblechen 20 und 40 verbunden, wie dies der Figur 41d zu entnehmen ist. In einem anschließenden Umformprozess, beispielsweise durch superplastisches Verformen, wie zu den Figur 42c und 42d erläutert, wird die finale Form der Fachwerkstruktur der Versteifungselemente 30 erzeugt.

Die Figuren 41c und 41d bzw. 42b und 42c zeigen den Umformschritt, der an das Verbinden der Profilplattenpaneelen 121 bzw. 122 und Stegplatten 331b bzw. Stegplattenteile 31, 32 miteinander und ein Verbinden derselben mit Profilplattenpaneelen 121 und 122 anschließt. Dieser Schritt erfolgt vorteilhafter Weise ebenfalls in dem Werkzeug W1, W2. In diesem Schritt kommt nun die geometrische Ausprägung der unteren Werkzeugform W1 zu tragen. Dabei weist die untere Werkzeugform W1 die negative geometrische Ausprägung der nach dem Herstellungsverfahren finalen positiven geometrischen Ausprägung des unteren Profilplattenpaneels 122 auf. Das Werkzeug mit der unteren Werkzeugform W1 ist derart ausgestaltet, dass der Bereich zwischen unterer Werkzeugform W1 und unteren Profilplattenpaneel 122 mit Druck beaufschlagt werden kann. Somit bildet das untere Werkzeug W1 sozusagen eine Negativform für das untere Profilplattenpaneel 122 und damit eine Negativform für die Unterseite des Profilplattenabschnitts 120.

Um nun die finale geometrische Ausprägung des Hohlkammerprofils 10 so wie in Figur 42b dargestellt zu erhalten, muss von einem Ausgangspunkt, der beispielsweise in der Figur 41b oder 42a gezeigt, der Profilplattenabschnitt 120 auseinander bewegt, also aufgestellt werden. Dieses Auseinanderbewegen, insbesondere mittels superplastischen Verformens, kann auf zwei verschiedene Weisen erfolgen. Eine der beiden Varianten ist die Verwendung des Raumes zwischen unterer Werkzeugform W1 und unterem Profilplattenpaneel 122 zum Erzeugen eins Vakuums. Ein solches Vakuum saugt, aufgrund einer fehlenden Druckausgleichsmöglichkeit, das untere Profilplattenpaneel 122 in Richtung der unteren Werkzeugform W1. Dabei verformen sich sowohl das untere Profilplattenpaneel 122, welches die geometrische Ausprägung der Form der unteren Werkzeugform W1 erhält, als auch die Versteifungselemente 30, die zwischen den beiden Profilplattenpaneel 121 und 122 auseinander klappen oder "sich aufstellen". Um sicherzustellen, dass das obere Profilplattenpaneel 121 in engem Kontakt mit dem oberen Werkzeug W2 verbleibt, kann vorteilhafter Weise eine Fixierung vorgesehen sein, um das obere Deckblech 40 in der gewünschten Position zu halten. Diese Fixierung kann zum Beispiel mechanisch in Form von Haken oder Formschlusselementen oder auch durch reversible Verbindungen wie Punktschweißen, Kleben oder punktförmiges Löten erfolgen. Dabei ist der Zustand in Figur 42a ein Zwischenzustand zwischen dem Beginn des Aufstellens wie in Figur 41c gezeigt und dem Ende des Aufstellens, wie in Figur 42b gezeigt.

Alternativ oder zusätzlich ist insbesondere vorgesehen, dass das an dem ersten Profilplattenpaneel 121 anliegende zweite Werkzeugteil W2 eine Luftabfuhrvorrichtung aufweist, mit der bei dem zur Expansion des Abstands der Profilplattenpaneele 121, 122 mit den Werkzeugteilen W1, W2 im Werkzeug aufgebauten Innendruck ein größerer Luftdurchsatz bei dem Abführen von Luft durch das zweite Werkzeugteil W2 aus dem Bereich zwischen den beiden Werkzeugteilen W1, W2 bereitgestellt wird als der Luftdurchsatz der durch das erste Profilplattenpaneel 121 strömenden Luft. Die Luftabfuhrvorrichtung kann insbesondere durch zumindest einen Kanal im Werkzeugteil W2 gebildet sein, der sich in die Werkzeugteil-Oberfläche öffnet und an dem diesem entgegen gesetzten Ende ein Entweichen der aus dem Raum zwischen den Werkzeugen W1, W2 strömenden Luft ermöglicht. Dabei kann dieser Kanal auch an einer Unterdruck-Pumpe angeschlossen sein.

## Patentansprüche

1. Profilplattenabschnitt (110, 120) zur Verwendung als Außenwandung eines Strömungskörpers, wobei der Profilplattenabschnitt (120) aufweist:
▪ zumindest abschnittsweise ein erstes Profilplattenpaneel (121), an der beim bestimmungsgemäßen Einsatz des Profilplattenabschnitts (120) eine Strömung anliegt, wobei das erste Profilplattenpaneel (121) für Fluid derart durchlässig ausgebildet ist, dass Fluid bereichsweise durch dieses hindurchströmen kann,
▪ ein sich zumindest abschnittsweise entlang des ersten Profilplattenpaneels (121) erstreckendes und in einer lokalen Profilplatten-Dickenrichtung (P-T) von diesem beabstandetes zweites Profilplattenpaneel (122),
▪ eine Versteifungsvorrichtung (150) zur Abstützung des ersten Profilplattenpaneels (121) und des zweiten Profilplattenpaneels (122) aneinander,
wobei die Versteifungsvorrichtung (150) derart ausgebildet ist, dass Fluid der an dem ersten Profilplattenpaneel (121) anliegenden Strömung, das durch das erste Profilplattenpaneel (121) hindurch strömt, entlang der Paneel-Längsrichtung durch die Versteifungsvorrichtung (150) und zwischen dem ersten Profilplattenpaneel (121) und dem zweiten Profilplattenpaneel (122) strömen kann,
und/oder
wobei das zweite Profilplattenpaneel (122) derart ausgebildet ist, dass Fluid der an dem ersten Profilplattenpaneel (121) anliegenden Strömung, das durch das erste Profilplattenpaneel (121) hindurch strömt, in der lokalen Profilplatten-Dickenrichtung (P-T) durch die Versteifungsvorrichtung (150) von dem ersten Profilplattenpaneel (121) zu dem zweiten Profilplattenpaneel (122) und bereichsweise durch dieses hindurch zu einer entgegen gesetzt zu der Strömungsseite gelegenen Innenseite strömen kann, wobei in einer Spannweitenrichtung des Profilplattenabschnitts (110, 120) sich erstreckende Stütz-Träger (117) verlaufen, die an dem ersten Profilplattenpaneel (111) und dem zweiten Profilplattenpaneel (112) befestigt sind,
wobei wenigstens in einem Teil der Zwischenräume, die sich zwischen jeweils zwei benachbarten Stütz-Trägern (117) ausbilden, zumindest ein offenporiger Körper derart aufgenommen ist, dass durch das erste Profilplattenpaneel (111) strömende Fluid die offenporigen Körper durchströmt, **dadurch gekennzeichnet,**
**dass** der offenporige Körper ein offenporiger Metallschaumschicht-Körper (116) ist und die offenporige Metallschaumschicht auf der Seite des zweiten Profilplattenpaneels (122) Ausnehmungen (265) aufweist, die sich zum zweiten Profilplattenpaneel (122) hin öffnen und jeweils in Öffnungen (134, 261) des zweiten Profilplattenpaneels (122) übergehen, und
**dass** der Absaugequerschnitt der Ausnehmungen mindestens 1,5 mal so groß ist wie der Öffnungsquerschnitt der Öffnungen (134, 261) im zweiten Profilplattenpaneel (122).

2. Profilplattenabschnitt (110, 120) nach Anspruch 1, **dadurch gekennzeichnet, dass** die offenporigen Metallschaumschicht-Körper (116) an den jeweiligen Stütz-Trägern (117), zwischen denen jeweils ein Metallschaumschicht-Körper (116) gelegen ist, flächig anliegen.

3. Profilplattenabschnitt (110, 120) nach dem Anspruch 1 oder 2, **dadurch gekennzeichnet, dass** die Ausnehmungen (136) im Profilschnitt gesehen zumindest teilweise eine sphärische Form haben.

4. Profilplattenabschnitt (110, 120) nach dem Anspruch 1 oder 3 , **dadurch gekennzeichnet, dass** die Ausnehmungen (136) zur Abstützung der offenporigen Metallschaumschicht (231) mit einer Verstärkungsschicht (138) versehen sind, die für Fluid permeabel ist.

5. Profilplattenabschnitt (110, 120) nach einem der voranstehenden Ansprüche, **dadurch gekennzeichnet, dass** das erste Profilplattenpaneel (121) aus einer Geflechtanordnung (142) gebildet ist.

6. Profilplattenabschnitt (110, 120) nach einem der Ansprüche 1 bis 5, **dadurch gekennzeichnet, dass** das erste Profilplattenpaneel (121) Öffnungen in Form von Perforationen (P) aufweist, die in der Profilplatten-Längsrichtung (P-L) und der Profilplatten-Querrichtung (P-S) über die Erstreckung das erste Profilplattenpaneel (121) verteilt sind.

7. Profilplattenabschnitt (110, 120) nach einem der Ansprüche 1 bis 6, **dadurch gekennzeichnet, dass** das erste Profilplattenpaneel (111, 121) Öffnungen insbesondere in Form von Schlitzen aufweist, die in der Profilplatten-Längsrichtung (P-L) und der Profilplatten-Querrichtung (P-S) über die Erstreckung das erste Profilplattenpaneel (121) verteilt sind.

8. Profilplattenabschnitt (110, 120) nach einem der Ansprüche 1 bis 7, **dadurch gekennzeichnet, dass** die Größe der Öffnungen in Richtung der Profilplatten-Längsrichtung (P-L) innerhalb des Bereichs wenigstens eines Teils der Fluidkammern zunimmt.

9. Strömungskörper-Bauteil (1), aufweisend:
▪ ein für Fluid durchlässiger Vorderteil-Profilplattenabschnitt (110),
▪ zwei sich jeweils von den Profilenden des Strömungskörper-Vorderteils (110) aus in der Strömungskörper-Tiefenrichtung (B-C) erstreckende Seitenwandungs-Profilplattenabschnitte (120), die entgegen gesetzt zueinander gekrümmt sind,
wobei die Seitenwandungs-Profilplattenabschnitte (120) wenigstens abschnittsweise durchlässig für Fluid gebildet sind oder
wobei ein äußeres erstes Profilplattenpaneel (121) der Seitenwandungs-Profilplattenabschnitte (120) durchlässig für Fluid gebildet ist und ein inneres zweites Profilplattenpaneel (122) der Seitenwandungs-Profilplattenabschnitte (120) nicht durchlässig für Fluid gebildet und die Seitenwandungs-Profilplattenabschnitte (120) derart ausgeführt sind, dass das aufgrund der Anströmung des Strömungskörper-Bauteils (1) in die Seitenwandungs-Profilplattenabschnitte (120) eingedrungendes Fluid innerhalb des jeweiligen Seitenwandungs-Profilplattenabschnitts (120) und entlang desselben strömen kann,
**dadurch gekennzeichnet,**
**dass** die Seitenwandungs-Profilplattenabschnitte (120) nach einem der voranstehenden Ansprüche 1 bis 8 ausgeführt ist.

10. Strömungskörper-Bauteil (1) nach dem Anspruch 9, **dadurch gekennzeichnet, dass** das Strömungskörper-Bauteil (1) eine Fluid-Absaugvorrichtung aufweist, die einen im Inneren des Strömungskörpers (1) ausgebildeten Strömungskanal (160), der abschnittsweise von dem zweiten für Fluid durchlässigen Vorderteilpaneel (12) begrenzt wird, und eine an den Strömungskanal angeschlossene Pumpe zum Absaugen von durch das Strömungskörper-Vorderteil (110) strömenden Fluid durch den Strömungskanal (160) aufweist.

11. Strömungskörper-Bauteil (1) nach dem Anspruch 9, **dadurch gekennzeichnet, dass** das Strömungskörper-Bauteil (1) einen im Inneren des Strömungskörpers (1) ausgebildeten Strömungskanal (160) mit einer Öffnung in das Innere des Strömungskörper-Bauteils (1) und/oder einer Ausmündung aus dem Inneren des Strömungskörper-Bauteils (1) heraus aufweist und der derart im Strömungskörper-Bauteil (1) geführt ist, dass bei einer bestimmungsgemäßen Anströmung des Strömungskörper-Bauteil (1) ein Absaugen von durch das Strömungskörper-Vorderteil (110) strömenden Fluid durch den Strömungskanal (160) erfolgt.

12. Strömungskörper-Bauteil (1) nach einem der Ansprüche 9 bis 11, **dadurch gekennzeichnet**,
▪ dass das zweite Seitenwandungs-Profilplattenpaneel (122) für Fluid durchlässig ausgeführt ist,
▪ dass der Strömungskörper (1) eine sich in der Strömungskörper-Längsrichtung (B-S) erstreckende Kanalwandung (162) aufweist, die mit Verbindungsabschnitten von zwei einander gegenüberliegenden Randbereichen der Profilplattenabschnitte (120) luftdicht verbunden ist oder die mit den einander gegenüberliegenden Endabschnitten der Profilplattenabschnitte (120) luftdicht verbunden ist, die den entgegen gesetzt zu den Anschlussabschnitten der Profilplattenabschnitte (120) an dem jeweiligen Ende des Strömungskörper-Vorderteils (110) gelegen sind, so dass der Strömungskanal (160) zwischen dem Strömungskörper-Vorderteil (110), den Profilplattenabschnitten (120) und der Kanalwandung (162) ausgebildet ist.

13. Strömungskörper-Bauteil (1) nach einem der Ansprüche 9 bis 12, **dadurch gekennzeichnet**,
▪ dass der Strömungskörper (1) eine sich in der Strömungskörper-Längsrichtung (B-S) erstreckende Kanalwandung (162) aufweist, die mit den einander gegenüberliegenden Endabschnitten der Profilplattenabschnitte (120) luftdicht verbunden ist, die an den Anschlussabschnitten der Profilplattenabschnitte (120) an dem jeweiligen Ende des Strömungskörper-Vorderteils (110) gelegen sind, so dass der Strömungskanal (160) zwischen dem Strömungskörper-Vorderteil (110), den Profilplattenabschnitten (120) und der Kanalwandung (162) ausgebildet ist,
▪ dass das zweite Seitenwandungs-Profilplattenpaneel (122) für Fluid dicht ausgeführt ist,
▪ dass die Versteifungsvorrichtung (150) derart ausgeführt ist, dass diese eine Strömung in dem zwischen dem ersten Seitenwandungs-Profilplattenpaneel (121) und dem zweiten Seitenwandungs-Profilplattenpaneel (122) gelegenen Innenbereich zulässt,
▪ dass das Innere zwischen dem ersten Seitenwandungs-Profilplattenpaneel (121) und dem zweiten Seitenwandungs-Profilplattenpaneel (122) strömungstechnisch in Verbindung steht mit dem Strömungskanal (160), so dass das durch das erste Seitenwandungs-Profilplattenpaneel (121) strömende Fluid von der Pumpe durch den Strömungskanal (162) abgesaugt wird.

14. Strömungskörper-Bauteil (1) nach einem der Ansprüche 9 bis 13, **dadurch gekennzeichnet**,
▪ dass der Strömungskörper (1) eine sich in der Strömungskörper-Längsrichtung (B-S) erstreckende Kanalwandung (162) aufweist, die mit den einander gegenüberliegenden Endabschnitten der Profilplattenabschnitte (120) luftdicht verbunden ist, die an den Anschlussabschnitten der Profilplattenabschnitte (120) an dem jeweiligen Ende des Strömungskörper-Vorderteils (110) gelegen sind, so dass der Strömungskanal (160) zwischen dem Strömungskörper-Vorderteil (110), den Profilplattenabschnitten (120) und der Kanalwandung (162) ausgebildet ist,
▪ dass das zweite Seitenwandungs-Profilplattenpaneel (122) für Fluid durchlässig ausgeführt ist,
▪ dass an dem zweiten Seitenwandungs-Profilplattenpaneel (122) beider Profilplattenabschnitte (120) jeweils eine sich entlang derselben erstreckende Sammelkanal-Wandung zur Ausbildung eines Sammelkanals zwischen dem jeweiligen Seitenwandungs-Profilplattenpaneel (122) und der Sammelkanal-Wandung verläuft, wobei jeder Sammelkanal einen Auslass zum Hauptströmungskanal (160) aufweist, so dass das durch die ersten Seitenwandungs-Profilplattenpaneele (121) strömende Fluid in den in den Hauptströmungskanal (160) strömt.

## Claims

1. Profile plate portion (110, 120) for use as an outer wall of a flow body, wherein the profile plate portion (120) comprises:
• at least in part a first profile plate panel (121) on which a flow is in contact when the profile plate panel (120) is used as intended, wherein the first profile plate panel (121) is designed to be permeable to fluid such that fluid can flow through certain regions thereof,
• a second profile plate panel (122) which extends at least in part along the first profile plate panel (121) and in a local profile plate thickness direction (PT) is at distance therefrom,
• a reinforcing device (150) for supporting the first profile plate panel (121) and the second profile plate panel (122) on one another,
wherein the reinforcing device (150) is designed in such a way that fluid of the flow along the first profile plate panel (121) flowing through the first profile plate panel (121), can flow along the longitudinal direction of the panel through the reinforcing device (150) and between the first profile plate panel (121) and the second profile plate panel (122)
and/or
wherein the second profile plate panel (122) is designed so that fluid of the flow on the first profile plate panel (121) flowing through the first profile plate panel (121) can flow in the local profile plate thickness direction (P-T) through the reinforcing device (150) from the first profile plate panel (121) to second profile plate panel (122) and in parts through this to an inner side opposite to the flow side,
wherein supporting carriers (117) extend in a span direction of the profile plate portion (110, 120) which are fastened to the first profile plate panel (111) and to the second profile plate panel (112),
wherein at least in part of the intermediate spaces formed between the two adjacent supporting carriers (117), at least one open-pore body is accommodated in such a way that fluid flowing through the first profile plate panel (111) flows through the open-pore body, **characterised in that**
the open-pore body is an open-pore metal foam layer body (116) and on the side of the second profile plate panel (122) the open-pore metal foam layer has recesses (265) which open toward the second profile plate panel (122) and become openings (134, 261) of the second profile plate panel (122) and
**in that** the suction extraction cross-section of the recesses is at least 1.5 times as large as the opening cross-section of the openings (134, 261) in the second profile plate panel (122).

2. Profile plate portion (110, 120) according to claim 1 **characterised in that** the open-pore metal foam layer bodies (116) are in two-dimensional contact at the respective supporting carriers (117) between each of which a metal foam layer body (116) lies.

3. Profile plate portion (110, 120) according to claim 1 or 2 **characterised in that** the recesses (136) seen in profile section are at least partially spherical in shape.

4. Profile plate portion (110, 120) according to claim 1 or 3 **characterised in that** the recesses (136) are provided with a reinforcing layer (138), which is fluid-permeable, for supporting the open-pore metal foam layer (231).

5. Profile plate portion (110, 120) according to any one of the preceding claims **characterised in that** the first profile plate panel (121) is formed of a mesh device (142).

6. Profile plate portion (110, 120) according to any one of claims 1 to 5 **characterised in that** the first profile plate panel (121) has openings in the form of perforations (P) which are distributed in the longitudinal direction of the profile plate (P-L) and the transverse direction of the profile plate (P-S) over the extent of the first profile plate panel (121) .

7. Profile plate portion (110, 120) according to any one of claims 1 to 6 **characterised in that** the first profile plate panel (111, 121) has openings, in particular in the form of slits, which are distributed in the longitudinal direction of the profile plate (P-L) and the transverse direction of the profile plate (P-S) over the extent of the first profile plate panel (121) .

8. Profile plate portion (110, 120) according to any one of claims 1 to 7 **characterised in that** the size of the openings in the longitudinal direction of the profile plate (P-L) increases within the area of at least one part of the fluid chambers.

9. Flow body component (1) comprising:
• an anterior profile plate portion (110) permeable to fluid,
• two side wall profile plate portions (120) which each extend from the profile ends of the anterior portion (110) of the flow body in the depth direction of the flow body (B-C) and are bent oppositely in relation to each other,
wherein the side wall profile plate portions (120) at least in parts are permeable to fluid or
wherein an outer first profile plate panel (121) of the side wall profile plate panel portions (120) is permeable to fluid and an inner second profile plate panel (122) of the side wall profile plate portions is not permeable to fluid and the side wall profile plate portions (120) are designed in such a way that the fluid that has penetrated into the side wall profile plate portions (120) due to the incident flow on the flow body component (1) can flow within and along the respective side wall profile plate portion (120), **characterised in that**
the side wall profile plate portions (120) are designed in accordance with any one of the preceding claims 1 to 8.

10. Flow body component (1) according to claim 9 **characterised in that** the flow body component (1) comprises a fluid suction-extraction device which has a flow channel (160) formed in the interior of the flow body (1) which in part is delimited by the second fluid-permeable anterior part panel (12), and a pump, connected to the flow channel, for extracting by suction fluid flowing through the anterior part (110) of the flow body via the flow channel (160).

11. Flow body component (1) according to claim 9 **characterised in that** the flow body component (1) comprises a flow channel (160) formed in the interior of the flow body (1), with an opening into the interior of the flow body component (1) and/or an outlet from the interior of the flow body component (1), which extends in the flow body component (1) in such a way that in the case of incident flow, as intended, on the flow body component (1) suction-extraction of fluid flowing through the anterior part (110) of the flow body takes place via the flow channel (160).

12. Flow body component (1) according to any one of claims 9 to 11 **characterised in that**
• the second side wall profile plate panel (122) is designed to be permeable for fluid,
• the flow body (1) has a channel wall (162), extending in the longitudinal direction (B-S) of the flow body, which is connected in an airtight manner with connection sections of two opposite marginal areas of the profile plate portions (120) or which is connected in an airtight manner with the opposite end sections of the profile plate portions (120) which are positioned opposite to the connection sections of the profile plate portions (120) on the respective end of the anterior part (110) of the flow body, so that the flow channel (160) is formed between the anterior part (110) for the flow body, the profile plate portions (120) and the channel wall (162).

13. Flow body component (1) according to any one of claims 9 to 12 **characterised in that**
• the flow body (1) comprises a channel wall (162) extending in the longitudinal direction of the flow body which is connected in an airtight manner with the opposite end sections of the profile plate portions (120) which are positioned at the connection sections of the profile plate portions (120) on respective ends of the anterior part (110) of the flow body so that the flow channel (160) is formed between the anterior part (110) for the flow body, the profile plate portions (120) and the channel wall (162),
• the second side wall profile plate panel (122) is designed to be impermeable to fluid,
• the reinforcing device (150) is designed in such a way that it permits flow in the interior area located between the first side wall profile plate panel (121) and the second side wall profile plate panel (122),
• the interior area between the first side wall profile plate panel (121) and the second side wall profile plate panel (122) is connected with respect to flow to the flow channel (160) so that fluid flowing through the first side wall profile plate panel (121) is suction-extracted by the pump through the flow channel (162) .

14. Flow body component (1) according to any one of claims 9 to 13 **characterised in that**
• the flow body (1) comprises a channel wall (162), extending in the longitudinal direction (B-S) of the flow body, which is connected in an airtight manner with the opposite end sections of the profile plate portions (120) which are positioned at the connection sections of the profile plate portions (120) on respective ends of the anterior part (110) of the flow body so that the flow channel (160) is formed between the anterior part (110) of the flow body, the profile plate portions (120) and the channel wall (162),
• the second side wall profile plate panel (122) is permeable to fluid,
• extending along each second side wall profile plate panel (122) of both profile panel portions (120), there is a collection channel wall forming a collection channel between the respective side wall profile plate panel (122) and collection channel wall, wherein each collection channel has an outlet to the main flow channel (160) so that fluid flowing through the first side wall profile plate panels (121) flows into the main flow channel (160).

## Revendications

1. Section de plaque profilée (110,120) destinée à être utilisée comme paroi extérieure d'un corps d'écoulement, la section de plaque profilée (120) comprenant :
• au moins par section un premier panneau de plaque profilée (121) sur lequel vient s'appliquer un écoulement pour une utilisation conforme de la section de plaque profilée (120), le premier panneau de plaque profilé (121) étant configuré perméable au fluide de telle sorte que du fluide peut s'écouler par zones à travers celui-ci,
• un deuxième panneau de plaque profilée (122) s'étendant au moins par section le long du premier panneau de plaque profilée (121) et à distance de celui-ci dans une direction d'épaisseur locale de plaque profilée (P-T),
• un dispositif de raidissement (150) pour le soutien du premier panneau de plaque profilée (121) et du deuxième panneau de plaque profilée (122) l'un contre l'autre,
le dispositif de raidissement (150) étant configuré de telle sorte que le fluide de l'écoulement venant s'appliquer au premier panneau de plaque profilée (121) qui s'écoule à travers le premier panneau de plaque profilée (121), peut s'écouler le long de la direction longitudinale de panneau à travers le dispositif de raidissement (150) et entre le premier panneau de plaque profilée (121) et le deuxième panneau de plaque profilée (122),
et/ou
le deuxième panneau de plaque profilée (122) étant configuré de telle sorte que du fluide de l'écoulement venant s'appliquer au premier panneau de plaque profilée (121) qui s'écoule à travers le premier panneau de plaque profilée (121), peut s'écouler dans la direction d'épaisseur locale de plaque profilée locale (P-T) à travers le dispositif de raidissement (150) du premier panneau de plaque profilée (121) vers le deuxième panneau de plaque profilée (122) et par zones à travers celui-ci vers une face intérieure posée opposée à la face d'écoulement,
des supports de soutien (117) passant s'étendant dans une direction d'envergure de la section de plaque profilée (110,120), qui sont fixés au premier panneau de plaque profilée (111) et au deuxième panneau de plaque profilée (112),
au moins un corps à pores ouverts étant logé au moins dans une partie des espaces intermédiaires qui se constituent respectivement entre deux supports de soutien adjacents (117), de telle sorte que du fluide s'écoulant à travers le premier panneau de plaque profilée (111) traverse les corps à pores ouverts, **caractérisé en ce que**
le corps à pores ouverts est un corps à couche de mousse métallique à pores ouverts (116) et la couche de mousse métallique à pores ouverts comporte sur le côté du deuxième panneau de plaque profilée (122) des évidements (265) qui s'ouvrent vers le deuxième panneau de plaque profilée (122) et passent respectivement dans des ouvertures (134,261) du deuxième panneau de plaque profilée (122), et
**en ce que** la section d'aspiration des évidements est au moins 1,5 fois aussi grande que la section d'ouverture des ouvertures (134,261) dans le deuxième panneau de plaque profilée (122).

2. Section de plaque profilée (110,120) selon la revendication 1, **caractérisée en ce que** les corps en mousse métallique à pores ouverts (116) s'appliquent à plat aux supports d'appui respectifs (117) entre lesquels est respectivement posé un corps à couche de mousse métallique (116).

3. Section de plaque profilée (110,120) selon la revendication 1 ou 2, **caractérisée en ce que** les évidements (136) ont, vus en coupe de profil, au moins en partie une forme sphérique.

4. Section de plaque profilée (110,120) selon la revendication 1 ou 3, **caractérisée en ce que** les évidements (136) sont dotés pour soutenir la couche de mousse métallique à pores ouverts (231) d'une couche de renfort (138) qui est perméable au fluide.

5. Section de plaque profilée (110,120) selon l'une quelconque des revendications précédentes, **caractérisée en ce que** le premier panneau de plaque profilée (121) est formé d'un système tressé (142).

6. Section de plaque profilée (110,120) selon l'une quelconque des revendications 1 à 5, **caractérisée en ce que** le premier panneau de plaque profilée (121) comporte des ouvertures sous la forme de perforations (P) qui sont réparties dans la direction longitudinale de plaque profilée (P-L) et dans la direction transversale de plaque profilée (P-S) sur l'extension du premier panneau de plaque profilée (121).

7. Section de plaque profilée (110,120) selon l'une quelconque des revendications 1 à 6, **caractérisée en ce que** le premier panneau de plaque profilée (111,121) comporte des ouvertures notamment sous la forme de fentes, qui sont réparties dans la direction longitudinale de plaque profilée (P-L) et dans la direction transversale de plaque profilée (P-S) sur l'extension du premier panneau de plaque profilée (121) .

8. Section de plaque profilée (110,120) selon l'une quelconque des revendications 1 à 7, **caractérisée en ce que** la taille des ouvertures augmente en direction de la direction longitudinale de plaque profilée (P-L) à l'intérieur de la zone d'au moins une partie des chambres de fluide.

9. Composant de corps d'écoulement (1), comprenant :
• une section de plaque profilée de partie avant (110) perméable pour un fluide,
• deux sections de plaque profilée de paroi latérale (120) s'étendant respectivement des extrémités profilées de la partie avant de corps d'écoulement (110) dans la direction de profondeur de corps d'écoulement (B-C), qui sont incurvées opposées l'une à l'autre,
les sections de plaque profilée de paroi latérale (120) étant formées, au moins par sections, perméables au fluide, ou
un premier panneau de plaque profilée extérieur (121) des sections de plaque profilée de paroi latérale (120) est formé perméable au fluide et un deuxième panneau de plaque profilée intérieur (122) des sections de plaque profilée de paroi latérale (120) est formé non perméable au fluide et les sections de plaque profilée de paroi latérale (120) sont exécutées de telle sorte qu'en raison de la conformation d'écoulement du composant de corps d'écoulement (1), le fluide ayant pénétré dans les sections de plaque profilée de paroi latérale (120) peut s'écouler à l'intérieur de la section de plaque profilée de paroi latérale respective (120) et le long de celle-ci,
**caractérisé en ce que**
les sections de plaque profilée de paroi latérale (120) sont exécutées selon l'une quelconque des revendications précédentes 1 à 8.

10. Composant de corps d'écoulement (1) selon la revendication 9, **caractérisé en ce que** le composant de corps d'écoulement (1) comporte un dispositif d'aspiration de fluide, qui comprend un conduit d'écoulement (160) constitué à l'intérieur du corps d'écoulement (1), qui est limité par sections par le deuxième panneau de partie avant (12) perméable au fluide et une pompe raccordée au conduit d'écoulement pour aspirer le fluide s'écoulant à travers la partie avant du corps d'écoulement (110) à travers le conduit d'écoulement (160).

11. Composant de corps d'écoulement (1) selon la revendication 9, **caractérisé en ce que** le composant de corps d'écoulement (1) comporte un conduit d'écoulement (160) constitué à l'intérieur du corps d'écoulement (1) avec une ouverture à l'intérieur du composant du corps d'écoulement (1) et/ou un orifice d'évacuation de l'intérieur du composant de corps d'écoulement (1) et qui est configuré dans le composant de corps d'écoulement (1) de telle sorte qu'une aspiration du fluide s'écoulant à travers la partie avant de corps d'écoulement (110) à lieu à travers le conduit d'écoulement (160) pour une conformation découlement conforme du composant de corps d'écoulement (1).

12. Composant de corps d'écoulement (1) selon l'une quelconque des revendications 9 à 11, **caractérisé en ce que**
• le deuxième panneau de plaque profilée de paroi latérale (122) est exécuté perméable au fluide,
• le corps d'écoulement (1) comporte une paroi de conduit (162) s'étendant dans la direction longitudinale du corps d'écoulement (B-S), qui est reliée étanche à l'air à des sections de liaison de deux bordures opposées l'une à l'autre des sections de plaque profilée (120) ou qui est reliée étanche à l'air aux sections d'extrémité opposées l'une à l'autre des sections de plaque profilée (120), qui sont posées aux extrémités respectives de la partie avant de corps d'écoulement (110) placées opposées aux sections de raccordement des sections de plaque profilée (120) de telle sorte que le conduit d'écoulement (160) est constitué entre la partie avant de corps d'écoulement (110), les sections de plaque profilée (120) et la paroi de conduit (162).

13. Composant de corps d'écoulement (1) selon l'une quelconque des revendications 9 à 12, **caractérisé en ce que**
• le corps d'écoulement (1) comporte une paroi de conduit (162) s'étendant dans la direction longitudinale de corps d'écoulement (B-S), qui est reliée étanche à l'air aux sections d'extrémité opposées l'une à l'autre des sections de plaque profilée (120), qui sont posées aux extrémités respectives de la partie avant de corps d'écoulement (110) sur les sections de raccordement des sections de plaque profilée (120) de telle sorte que le conduit d'écoulement (160) est constitué entre la partie avant de corps d'écoulement (110), les sections de plaque profilée (120) et la paroi de conduit (162),
• le deuxième panneau de plaque profilée de paroi latérale (122) est exécuté étanche au fluide,
• le dispositif de raidissement (150) est exécuté de telle sorte que celui-ci autorise un écoulement dans la zone intérieure située entre le premier panneau de plaque profilée de paroi latérale (121) et le deuxième panneau de plaque profilée (122),
• l'intérieur situé entre le premier panneau de plaque profilée de paroi latérale (121) et le deuxième panneau de plaque profilée de paroi latérale (122) est en liaison selon la technique des fluides avec le conduit d'écoulement (160) de telle sorte que le fluide s'écoulant à travers le premier panneau de plaque profilée de paroi latérale (121) est aspiré par la pompe à travers le conduit d'écoulement (162).

14. Composant de corps d'écoulement (1) selon l'une quelconque des revendications 9 à 13, **caractérisé en ce que**
• le corps d'écoulement (1) comporte une paroi de conduit (162) s'étendant dans la direction longitudinale du corps d'écoulement (B-S), qui est reliée étanche à l'air aux sections d'extrémité opposées l'une à l'autre des sections de plaque profilée (120), qui sont posées aux extrémités respectives de la partie avant de corps d'écoulement (110) sur les sections de raccordement des sections de plaque profilée (120) de telle sorte que le conduit d'écoulement (160) est constitué entre la partie avant de corps d'écoulement (110), les sections de plaque profilée (120) et la paroi de conduit (162),
• le deuxième panneau de plaque profilée de paroi latérale (122) est exécuté perméable au fluide,
• sur le deuxième panneau de plaque profilée de paroi latérale (122) des deux sections de plaque profilée (120), une paroi de conduit collecteur s'étendant respectivement le long de celles-ci pour former un conduit collecteur passe entre le panneau de plaque profilée de paroi latérale (122) respectif et la paroi de conduit collecteur, chaque conduit collecteur comportant une sortie vers le conduit principal d'écoulement (160) de telle sorte que le fluide s'écoulant à travers le premier panneau de plaque profilée de paroi latérale (121) s'écoule dans le conduit d'écoulement principal (160).
